# EUROPEAN PATENT APPLICATION

(11) **EP 4 560 966 A1**
(43) Date of publication of application: **28.05.2025**
(21) Application number: 23854346.6
(22) Date of filing: 11.08.2023
(51) Int. Cl.: H04L 5/00, H04B 1/7163, H04W 24/02

(54) **METHOD FOR INDICATING PHYSICAL LAYER CONFIGURATION, AND RELATED APPARATUS**

(30) Priority: 19.08.2022 CN 202211003704; 12.10.2022 CN 202211250022
(71) Applicant: Huawei Technologies Co., Ltd., Shenzhen, Guangdong 518129 (CN)
(72) Inventor: QIAN, Bin, Shenzhen, Guangdong 518129 (CN); LIU, Chenchen, Shenzhen, Guangdong 518129 (CN); YANG, Xun, Shenzhen, Guangdong 518129 (CN)
(74) Representative: Körber, Martin Hans
(86) International application number: PCT/CN2023/112523
(87) International publication number: WO 2024/037445

(57) **Abstract**

This application relates to a physical layer configuration indication method and a related apparatus. The method includes: A transmitting party generates a PPDU, where the PPDU includes a preamble field and an SFD field, and different values of the preamble field or different values of the SFD field correspond to different physical layer configurations; and the transmitting party transmits a signal generated by the PPDU based on a physical layer configuration. According to embodiments of this application, the physical layer configuration can be flexibly indicated without increasing signaling overheads. This application is applied to a UWB-based WPAN system, a sensing system, and the like that supports an 802.15 series protocol, for example, an 802.15.4a protocol, an 802.15.4z protocol, or an 802.15.4ab protocol, and may be further applied to a WLAN system supporting 802.11 series protocols such as a next-generation Wi-Fi protocol of 802.11ax, for example, 802.11be, Wi-Fi 7, or EHT, and a next-generation protocol of 802.11be, for example, Wi-Fi 8.

## Description

This application claims priorities to Chinese Patent Application No. 202211003704.5, filed with the China National Intellectual Property Administration on August 19, 2022 and entitled "PHYSICAL LAYER CONFIGURATION INDICATION METHOD AND RELATED APPARATUS", and to Chinese Patent Application No. 202211250022.4, filed with the China National Intellectual Property Administration on October 12, 2022 and entitled "PHYSICAL LAYER CONFIGURATION INDICATION METHOD AND RELATED APPARATUS", both of which are incorporated herein by reference in their entireties.

### TECHNICAL FIELD

This application relates to the field of communication technologies, and in particular, to a physical layer configuration indication method and a related apparatus.

### BACKGROUND

An ultra-wideband (ultra-wideband, UWB) technology is a wireless carrier communication technology. For example, in the UWB technology, data can be transmitted through a nanosecond-level non-sinusoidal narrow pulse. Therefore, a wide spectrum range is occupied. Because of narrow pulse and low radiation spectrum density of UWB, UWB has advantages such as a strong multi-path resolution capability, low power consumption, and high confidentiality. With the introduction of the ultra-wideband technology into the civil field, ultra-wideband radio communication has become one of physical layer technologies of short-range and high-speed wireless networks, and is mainly applied to sensing and ranging scenarios. The institute of electrical and electronics engineers (institute of electrical and electronics engineers, IEEE) has incorporated the UWB technology into its IEEE 802 series wireless standards, and released a high-speed wireless personal area network (wireless personal area network, WPAN) standard IEEE 802.15.4a based on the UWB technology and an evolved version IEEE 802.15.4z of the IEEE 802.15.4a. A next-generation UWB wireless personal area network (WPAN) standard 802.15.4ab is under discussion.

In the UWB technology, data is transmitted by transmitting and receiving extremely narrow pulses of nanoseconds or less than nanoseconds, and the UWB technology has a high requirement on time synchronization of a transmitting device and a receiving device. In addition, because a communication bandwidth of the UWB technology is wide, power consumption and complexity of the device are high when a signal is transmitted and received on an ultra-wideband channel. However, most UWB-based communication devices need to be driven by a battery. Therefore, the next-generation UWB wireless personal area network standard expects to further reduce power consumption of a UWB system. Therefore, in the next-generation UWB wireless personal area network standard, it is considered that all signals except reference signals for ranging and sensing are received and transmitted through a narrowband (narrowband, NB) system in a narrowband signal-assisted manner, thereby reducing power consumption overheads of the UWB system.

Currently, a narrowband signal used to assist the UWB may have a plurality of physical layer configurations, and there is no indication for different physical layer configurations.

### SUMMARY

Embodiments of this application provide a physical layer configuration indication method and a related apparatus, so that different physical layer configurations can be flexibly indicated without increasing signaling overheads.

The following describes this application from different aspects. It should be understood that, for the following implementations and beneficial effects of the different aspects, refer to each other.

According to a first aspect, this application provides a physical layer configuration indication method. The method may be applied to a narrowband band in a UWB system. The method includes: A first communication apparatus generates a physical layer protocol data unit (physical layer protocol data unit, PPDU), where the PPDU includes a preamble (preamble) field and a start-of-frame delimiter (start-of-frame delimiter, SFD) field, and different values of the SFD field correspond to different physical layer configurations, or different values of the preamble field correspond to different physical layer configurations; and the first communication apparatus transmits a signal, where the signal is generated by the PPDU based on a physical layer configuration corresponding to a value of the SFD field or a value of the preamble field.

In this application, different values of the SFD field or different values of the preamble field indicate different physical layer configurations, so that a format of the PPDU does not need to be changed, and the different physical layer configurations may be flexibly indicated without increasing signaling overheads.

According to a second aspect, this application provides a physical layer configuration indication method. The method may be applied to a narrowband band in a UWB system. The method includes: A second communication apparatus receives a signal, and demodulates the received signal to obtain a preamble field and an SFD field that are included in a PPDU, where different values of the SFD field correspond to different physical layer configurations, or different values of the preamble field correspond to different physical layer configurations; and the second communication apparatus determines a physical layer configuration based on a value of the SFD field or a value of the preamble field, and demodulates the received signal based on the determined physical layer configuration to obtain a payload (payload) field included in the PPDU. It may be understood that the signal received by the second communication apparatus is generated by the PPDU based on the physical layer configuration corresponding to the value of the preamble field or the value of the SFD field in the PPDU.

In this application, different values of the SFD field or different values of the preamble field before the payload field represent different physical layer configurations, so that the received signal can be correctly demodulated to obtain the payload field.

With reference to the first aspect or the second aspect, in a possible implementation, the PPDU further includes a physical layer header (physical layer header, PHR) field and the payload field.

Optionally, the physical layer configuration includes one or more of the following parameters: a data rate, a length (which may be a symbol length or a bit length) of the preamble field, a length (which may be a symbol length or a bit length) of the SFD field, a length of a chip sequence corresponding to the preamble field and the SFD field, a length (which may be a symbol length or a bit length) of the PHR field, and a length of a chip sequence corresponding to the PHR field and the payload field, or a forward error correction (forward error correction, FEC) code on the PHR field and the payload field (including a type of the FEC code on the PHR field and the payload field and whether the FEC code is used on the PHR field and the payload field). For example, one value of the SFD field or one value of the preamble field corresponds to an index of one physical layer configuration, and one index identifies one physical layer configuration.

Optionally, the physical layer configuration includes a length of a chip sequence corresponding to the PHR field and the payload field. In this case, the PHR field includes a piece of indication information for indicating whether the payload field has an FEC code. For example, the indication information is located at a bit 7 (bit 7) of the PHR field.

In this application, different values of the SFD field or different values of the preamble field indicate different lengths of the chip sequence corresponding to the PHR field and the payload field, and then the bit 7 (bit 7) of the PHR field indicates whether the payload field has an FEC code, so that different physical layer configurations can be flexibly indicated without increasing bit overheads.

With reference to the first aspect or the second aspect, in a possible implementation, one of values of the SFD field is 1 1 1 0 0 1 0 1. Similarly, one of values of the preamble field is that 16 bits are all 0 or 32 bits are all 0.

In this application, one of the values of the SFD field or one of the values of the preamble field is restricted to be an existing value. This can better be compatible with a conventional device in a network.

With reference to the first aspect or the second aspect, in a possible implementation, the values of the SFD field do not include any one of the following values: a value whose first four bits are 0 0 0 0 and last four bits are any value, a value whose last four bits are 0 0 0 0 and first four bits are any value, and a value whose eight bits are 0 0 0 0 0 0 0 0.

One function of the SFD field is used to separate the preamble field and the PHR field in the PPDU, and currently, the preamble field uses an all-0 data symbol. Therefore, in this application, the values of the SFD field do not include any value whose data symbol is 0, so that a possibility of confusion between the SFD field and the preamble field can be reduced.

With reference to the first aspect or the second aspect, in a possible implementation, a value of the SFD field belongs to a first value set, and a value of the preamble field is obtained by repeating a value in the first value set for one or more times. The first value set may include M values, and a length of each value may be 8 bits. For specific content included in the first value set, refer to descriptions in the following method embodiments. Details are not described herein.

Optionally, the M values in the first value set meet the following condition: A sum of Hamming distances between chip sequences corresponding to any two of the M values is greater than or equal to a sum of Hamming distances between chip sequences corresponding to any two of any M values other than the first value set in a second value set. The second value set includes N values, N is greater than M, and M may be greater than 2. Both N and M are positive integers. For example, N is 255, and M is equal to 5.

Optionally, the M values in the first value set include a target value, and the target value is 1 1 1 0 0 1 0 1. The M values meet the following condition: A sum of Hamming distances between chip sequences corresponding to any two of the M values is greater than or equal to a sum of Hamming distances between chip sequences corresponding to any two of any M values that are other than the first value set in a second value set and that include the target value. The second value set includes N values, N is greater than M, and M may be greater than 2. Both N and M are positive integers.

It may be understood that when M is equal to 2, a Hamming distance between chip sequences corresponding to the two values in the first value set is greater than or equal to a Hamming distance between chip sequences corresponding to any two values that are other than the first value set in the second value set and that include the target value.

Optionally, the M values in the first value set meet any one of the following conditions: A sum of auto-correlation sidelobe amplitudes of chip sequences corresponding to all of the M values is less than or equal to a sum of auto-correlation sidelobe amplitudes of chip sequences corresponding to all of any M values other than the first value set in a second value set; or a sum of cross-correlation sidelobe amplitudes between chip sequences corresponding to any two of the M values is less than or equal to a sum of cross-correlation sidelobe amplitudes between chip sequences corresponding to any two of any M values other than the first value set in a second value set. The second value set includes N values, N is greater than M, and M may be greater than 2. Both N and M are positive integers.

It may be understood that, when M is equal to 1, for the SFD field, the first value set includes an existing value of the SFD field: 1 1 1 0 0 1 0 1. When M is equal to 1, for the preamble field, the first value set includes a value: 0 0 0 0 0 0 0 0.

According to a third aspect, an embodiment of this application provides a communication apparatus. The communication apparatus is configured to perform the method according to any one of the first aspect or the possible implementations of the first aspect. The communication apparatus includes a unit for performing the method according to any one of the first aspect or the possible implementations of the first aspect.

According to a fourth aspect, an embodiment of this application provides a communication apparatus. The communication apparatus is configured to perform the method according to any one of the second aspect or the possible implementations of the second aspect. The communication apparatus includes a unit for performing the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments shown below. For beneficial effects of the third aspect and the fourth aspect, refer to the related descriptions of the first aspect and the second aspect. Details are not described herein again.

According to a fifth aspect, this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together.

With reference to the fifth aspect, in a possible implementation, the communication apparatus further includes a transceiver, and the transceiver is configured to transmit a signal.

According to a sixth aspect, this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

With reference to the sixth aspect, in a possible implementation, the memory is located outside the communication apparatus.

With reference to the sixth aspect, in a possible implementation, the memory is located inside the communication apparatus.

In this application, the processor and the memory may alternatively be integrated into one component. In other words, the processor and the memory may alternatively be integrated together.

With reference to the sixth aspect, in a possible implementation, the communication apparatus further includes a transceiver, and the transceiver is configured to receive a signal.

According to a seventh aspect, this application provides a communication apparatus. The communication apparatus includes a logic circuit and an interface, and the logic circuit is coupled to the interface. The logic circuit is configured to generate a PPDU, where the PPDU includes a preamble field and an SFD field, and different values of the SFD field correspond to different physical layer configurations, or different values of the preamble field correspond to different physical layer configurations; and the interface is configured to output a signal, where the signal is generated by the PPDU based on a physical layer configuration corresponding to a value of the SFD field or a value of the preamble field.

According to an eighth aspect, this application provides a communication apparatus. The communication apparatus includes a logic circuit and an interface, and the logic circuit is coupled to the interface. The interface is configured to input a signal, where the signal is generated by a PPDU based on a physical layer configuration corresponding to a value of a preamble field or a value of an SFD field in the PPDU; the logic circuit is configured to demodulate the signal to obtain the preamble field and the SFD field that are included in the PPDU, where different values of the SFD field correspond to different physical layer configurations, or different values of the preamble field correspond to different physical layer configurations; and the logic circuit is further configured to: determine the physical layer configuration based on the value of the SFD field or the value of the preamble field, and demodulate the signal based on the determined physical layer configuration to obtain a payload field included in the PPDU.

According to a ninth aspect, this application provides a computer-readable storage medium. The computer-readable storage medium is configured to store a computer program. When the computer program is run on a computer, the method according to any one of the first aspect or the possible implementations of the first aspect is performed.

According to a tenth aspect, this application provides a computer-readable storage medium. The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code, and when the computer program or computer code is run on a computer, the method according to any one of the first aspect or the possible implementations of the first aspect is performed.

According to a twelfth aspect, an embodiment of this application provides a computer program product. The computer program product includes a computer program or computer code, and when the computer program or computer code is run on a computer, the method according to any one of the second aspect or the possible implementations of the second aspect is performed.

According to a thirteenth aspect, this application provides a computer program. When the computer program is run on a computer, the method according to any one of the first aspect or the possible implementations of the first aspect is performed.

According to a fourteenth aspect, this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

For technical effects achieved in the foregoing aspects, refer to each other or technical effects in the following method embodiments. Details are not described herein.

### BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3 is a diagram of a format of a PPDU of an O-QPSK signal according to an embodiment of this application;
FIG. 4 is a diagram of a format of an SFD field according to an embodiment of this application;
FIG. 5a is a diagram of a format of a PHR field according to an embodiment of this application;
FIG. 5b is a diagram of another format of a PHR field according to an embodiment of this application;
FIG. 6 is a diagram of a modulation and spreading procedure according to an embodiment of this application;
FIG. 7 is a schematic flowchart of a physical layer configuration indication method according to an embodiment of this application;
FIG. 8 is a diagram of simulation of symbol error rates of an SFD symbol and a payload symbol according to an embodiment of this application;
FIG. 9 is another diagram of simulation of symbol error rates of an SFD symbol and a payload symbol according to an embodiment of this application;
FIG. 10 is another schematic flowchart of a physical layer configuration indication method according to an embodiment of this application;
FIG. 11a is a diagram of still another format of a PHR field according to an embodiment of this application;
FIG. 11b is a diagram of yet another format of a PHR field according to an embodiment of this application;
FIG. 12 is a diagram of a structure of a communication apparatus according to an embodiment of this application;
FIG. 13 is a diagram of a structure of a communication apparatus 1000 according to an embodiment of this application; and
FIG. 14 is a diagram of another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In the descriptions of this application, words such as "first" and "second" are merely used to distinguish between different objects, and do not limit a quantity and an execution sequence. In addition, the words such as "first" and "second" do not indicate a definite difference. In addition, terms such as "include" and "have" and any other variations thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "one or more of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c. Herein, a, b, and c may be singular or plural.

In this application, words such as "example" or "for example" are used to give an example, an illustration, or descriptions. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

In this application, an element represented in a singular form is intended to represent "one or more", but does not represent "one and only one", unless otherwise specified.

It may be understood that, in embodiments of this application, "B corresponding to A" indicates that there is a correspondence between A and B, and B may be determined based on A. However, it should be further understood that determining (or generating) B based on A does not mean that B is determined (or generated) based on A only, and B may also be determined (or generated) based on A and/or other information.

The technical solutions provided in this application are applicable to a WPAN based on a UWB technology. For example, a method provided in this application is applicable to an IEEE 802.15 series protocol, for example, an 802.15.4a protocol, an 802.15.4z protocol, or an 802.15.4ab protocol, or a future generation of UWB WPAN standard. Examples are not enumerated herein. The method provided in this application may be further applied to various communication systems, for example, an internet of things (internet of things, IoT) system, vehicle to X (vehicle to X, V2X), or a narrowband internet of things (narrowband internet of things, NB-IoT) system, and is applied to a device in the vehicle to X, an internet of things node, a sensor, or the like in the internet of things, a smart camera, a smart remote control, and a smart water meter or electricity meter in smart home, and a sensor in a smart city. The method provided in this application is further applicable to a long term evolution (long term evolution, LTE) frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, an LTE system, a 5th generation (5th-generation, 5G) communication system, a 6th generation (6th-generation, 6G) communication system, or the like.

The UWB technology is a new wireless communication technology. In the UWB technology, data is transmitted through a nanosecond-level non-sinusoidal narrow pulse, and modulation is performed on impulses with very steep rise and fall time, and therefore, the UWB technology occupies a wide spectrum range, so that a signal has a bandwidth of a Giga Hertz (GHz) magnitude. A bandwidth used by UWB is usually higher than 1 GHz. A UWB system does not need to generate a sinusoidal carrier signal and can directly transmit an impulse sequence. Therefore, the UWB system has a wide spectrum and low average power. A UWB wireless communication system has advantages such as a strong multi-path resolution capability, low power consumption, and high confidentiality. This facilitates coexistence with other systems, thereby improving spectrum utilization and system capacity. In addition, in a short-range communication application, transmit power of a UWB transmitter may be usually lower than 1 mW (milliwatt). Theoretically, interference generated from a UWB signal is only equivalent to white noise. This facilitates good coexistence between ultra-wideband and existing narrowband communication. Therefore, the UWB system and a narrowband (narrowband, NB) communication system can simultaneously operate without interfering with each other.

The method provided in this application may be implemented by a communication apparatus in a wireless communication system. In a communication apparatus, an apparatus or a chip for implementing a function of a UWB system may be referred to as a UWB module, and an apparatus or a chip for implementing a function of a narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. A communication apparatus in this application includes a UWB module and a narrowband communication module.

It may be understood that, in this application, narrowband is relative to UWB. Any communication system that operates in a bandwidth narrower than that of the UWB may be referred to as the narrowband communication system. Certainly, the narrowband communication system may have another meaning. This is not limited in this application. However, a communication bandwidth of the narrowband communication system may be narrower than a communication bandwidth of the UWB system. It may also be understood that the communication bandwidth of the narrowband communication system is usually unauthorized national information infrastructure (unlicensed national information infrastructure, UNII-3) and UNII-5. The UWB system has 16 channels in total, namely, channel numbers 0 to 15. A center frequency of the channel 0 is 499.2 MHz, and a bandwidth is 499.2 MHz; a center frequency of the channel 1 is 3494.4 MHz, and a bandwidth is 499.2 MHz; a center frequency of the channel 2 is 3993.6 MHz, and a bandwidth is 499.2 MHz; a center frequency of the channel 3 is 4992.8 MHz, and a bandwidth is 499.2 MHz; a center frequency of the channel 4 is 3993.6 MHz, and a bandwidth is 1331.2 MHz; a center frequency of the channel 5 is 6489.6 MHz, and a bandwidth is 499.2 MHz; a center frequency of the channel 6 is 6988.8 MHz, and a bandwidth is 499.2 MHz; a center frequency of the channel 7 is 6489.6 MHz, and a bandwidth is 1081.6 MHz; a center frequency of the channel 8 is 7448.0 MHz, and a bandwidth is 499.2 MHz; a center frequency of the channel 9 is 7987.2 MHz, and a bandwidth is 499.2 MHz; a center frequency of the channel 10 is 8486.4 MHz, and a bandwidth is 499.2 MHz; a center frequency of the channel 11 is 7987.2 MHz, and a bandwidth is 1331.2 MHz; a center frequency of the channel 12 is 8985.6 MHz, and a bandwidth is 499.2 MHz; a center frequency of the channel 13 is 9494.8 MHz, and a bandwidth is 499.2 MHz; a center frequency of the channel 14 is 9984.0 MHz, and a bandwidth is 499.2 MHz; and a center frequency of the channel 15 is 9484.8 MHz, and a bandwidth is 1354.97 MHz.

Although embodiments of this application are mainly described by using a WPAN as an example, for example, a network used in IEEE 802.15 series standards is used as an example for description. A person skilled in the art easily understands that, various aspects in this application may be extended to another network using various standards or protocols, for example, a wireless local area network (wireless local area network, WLAN), Bluetooth (BLUETOOTH), Zigbee (Zigbee protocol), a high performance radio LAN (high performance radio LAN, HIPERLAN) (a wireless standard similar to the IEEE 802.11 standard, mainly used in Europe), a wide area network (WAN), or another network that is known currently or developed in the future. Therefore, the various aspects provided in this application are applicable to any appropriate wireless network regardless of coverage and wireless access protocols.

The method provided in this application may be implemented by a communication apparatus in a wireless communication system. The communication apparatus may be an apparatus in a UWB system. For example, the communication apparatus may include but is not limited to a communication server, a router, a switch, a bridge, a computer, a mobile phone, and the like that support a UWB technology and a narrowband communication technology (such as Wi-Fi, Bluetooth, or Zigbee). For another example, the communication apparatus may include user equipment (user equipment, UE). The user equipment may include various handheld devices, vehicle-mounted devices (for example, cars or components installed in cars), wearable devices, IoT devices, computing devices, or other processing devices connected to a wireless modem that support a UWB technology and a narrowband communication technology (such as Wi-Fi, Bluetooth, or Zigbee). Examples are not enumerated herein. For still another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For yet another example, the communication apparatus may include a chip, and the chip may be disposed in a communication server, a router, a switch, a terminal device, or the like. Examples are not enumerated herein. It may be understood that the foregoing descriptions about the communication apparatus are applicable to a first communication apparatus and a second communication apparatus in this application.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

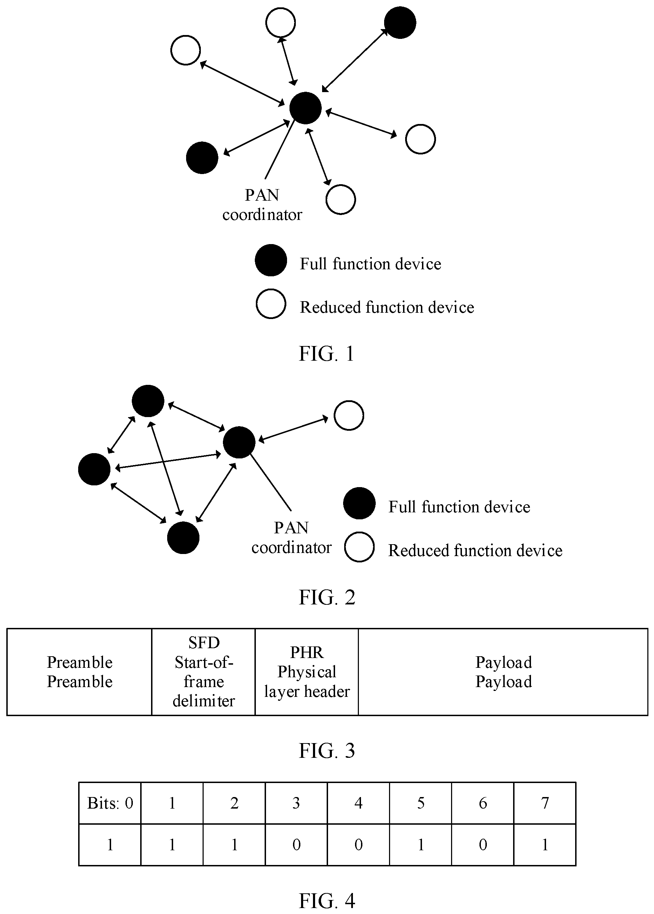

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a peer-to-peer topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device is relative to the reduced function device. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 2 is merely an example, and each of the other three full function devices shown in FIG. 2 may also be used as a PAN coordinator. Examples are not shown one by one herein. It may be further understood that the full function device and the reduced function device shown in this application are merely examples of the communication apparatuses, and any apparatus that can implement a physical layer configuration indication method provided in this application falls within the protection scope of this application.

To further reduce power consumption overheads of a UWB system, in a next-generation UWB WPAN standard 802.15.4ab, it is considered that an offset-quadrature phase shift keying (offset-quadrature phase shift keying, O-QPSK) signal in chapter 12 of the IEEE 802.15.4-2020 standard is used to assist UWB in ranging and sensing. It may be understood that the O-QPSK signal in this application may be a signal obtained through O-QPSK modulation. It may be further understood that the O-QPSK signal is a narrowband signal.

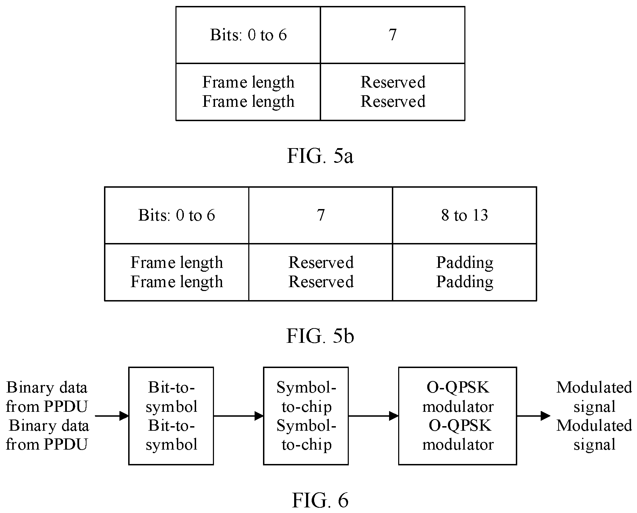

A structure of a PPDU of the O-QPSK signal based on the chapter 12 in the IEEE 802.15.4-2020 standard is shown in FIG. 3. FIG. 3 is a diagram of a format of the PPDU of the O-QPSK signal according to an embodiment of this application. As shown in FIG. 3, the PPDU of the O-QPSK signal includes but is not limited to the following fields (fields): a preamble (preamble), a start-of-frame delimiter (start-of-frame delimiter, SFD), a physical layer header (physical layer header, PHR), and a payload (payload). A length of the preamble field is usually 2 bytes or 4 bytes, and all bits of the preamble field are 0. The SFD field is usually 1 byte, and a value of the SFD field is fixed. As shown in FIG. 4, a bit 0 to a bit 7 (bits 0 to 7) of the SFD field are fixed as follows: 1 1 1 0 0 1 0 1. The PHR field has two lengths: 1 byte (equal to 8 bits) and 14 bits. FIG. 5a is a diagram of a format of the PHR field according to an embodiment of this application. As shown in FIG. 5a, a length of a PHR field is 1 byte, where the first seven bits (bits 0 to 6) indicate a payload length (unit: byte), and the last bit (bit 7) is reserved (reserved). FIG. 5b is a diagram of another format of the PHR field according to an embodiment of this application. As shown in FIG. 5b, a length of the PHR field is 14 bits, where a bit 0 to a bit 6 (bits 0 to 6) indicate a payload length (unit: byte), a bit 7 (bit 7) is reserved, and a bit 8 to a bit 13 (bits 8 to 13) are all 0 and are used as padding (padding). It may be understood that the padding in the PHR field may be used for convolutional coding.

The PPDU shown in FIG. 3 may be used for generating a modulated signal through a modulation and spreading process shown in FIG. 6. In FIG. 6, O-QPSK modulation is used as an example. As shown in FIG. 6, bit-to-symbol (bit to symbol) mapping is first performed on binary data from the PPDU (binary data from PPDU), and then symbol-to-chip (symbol to chip) mapping is performed. Then, an obtained chip is input into an O-QPSK modulator (O-QPSK modulator) for O-QPSK modulation. Finally, the modulated signal (modulated signal) is output. The modulated signal may be an O-QPSK signal, or an O-QPSK signal is obtained by performing other processing such as oversampling on the modulated signal. Every four bits are mapped to one data symbol (data symbol), and each data symbol is mapped to one chip sequence. Herein, the symbol-to-chip mapping process may be understood as a spreading process, or the bit-to-symbol and symbol-to-chip processes may be understood as a spreading process.

Currently, a plurality of possible physical layer configurations are proposed for the O-QPSK signal used to assist the UWB. For example, the following table 1 shows five possible physical layer configurations in an O-QPSK modulation scheme, and each physical layer configuration includes a plurality of physical layer parameters that are specifically shown in the first row of the following table 1.

**Table 1**

| Configuration # Data rate | Symbol length of the preamble field (unit: symbol) | Symbol length of the SFD field (unit: symbol) | Length of a chip sequence corresponding to the preamble field and the SFD field | Symbol length of the PHR field (unit: symbol) | Length of a chip sequence corresponding to the PHR field and the payload field | FEC on the PHR field and payload field |
|---|---|---|---|---|---|---|
| #1 250kbps | 8 | 2 | 32 | 2 | 32 | No |
| #2 500kbps | 4 | 2 | 32 | 7 | 8 | Convolutional code: A code rate R is 0.5, a limited length is 7, and a polynomial is (133, 171) |
| #3 1000kbps | 4 | 2 | 32 | 7 | 8 | CL7 for PHR No FEC on the payload |
| #4 250kbps | 8 | 2 | 32 | 7 | 16 | CL7 |
| #5 1000kbps | 4 | 2 | 32 | 7 | 4 | CL7 |

In Table 1, CL7 is a convolutional code whose limited length is 7 and whose polynomial is (133, 171).

It may be understood that a transmit end may generate an O-QPSK signal based on a physical layer configuration (namely, a row in Table 1) in Table 1 and the modulation and spreading process shown in FIG. 6 and transmit the O-QPSK signal, and a receive end needs to perform an inverse operation in FIG. 6 to restore the PPDU from the received signal, so as to obtain a payload (namely, data information) in the PPDU. However, during performing the reverse operation in FIG. 6, the receive end needs to know the physical layer configuration (for example, a data rate and a length of a chip sequence corresponding to each field in the PPDU) used by the transmit end, so as to obtain the payload of the PPDU through correct demodulation. Therefore, the transmit end needs to indicate, to the receive end, the physical layer configuration used by the transmit end.

Embodiments of this application provide a physical layer configuration indication method and a related apparatus. Different values of an SFD field or different values of a preamble field indicate different physical layer configurations, so that different physical layer configurations can be flexibly indicated, no additional signaling overheads needs to be increased, and demodulation performance of an SFD symbol or a preamble symbol can be improved.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

A communication apparatus in this application may support the 802.15.4ab standard or a next-generation standard of 802.15.4ab, may support a plurality of standards such as 802.15.4a, 802.15.4-2011, 802.15.4-2015, 802.15.4-2020, and 802.15.4z, and may further support WLAN standards of an 802.11 family such as 802.11ax, 802.11ac, 802.11n, 802.11g, 802.11b, 802.11a, 802.11be, and a next generation of 802.11be.

### Embodiment 1

Embodiment 1 of this application mainly describes extending a value of an SFD field or a value of a preamble field to indicate different physical layer configurations.

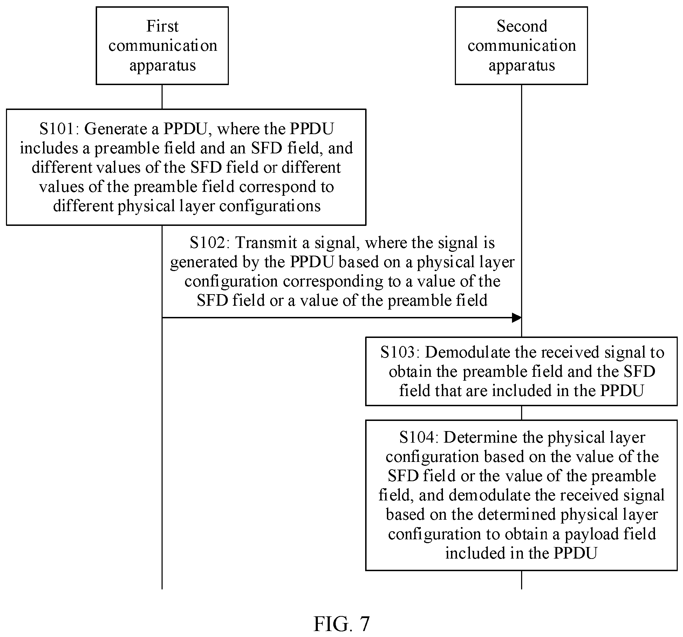

FIG. 7 is a schematic flowchart of the physical layer configuration indication method according to an embodiment of this application. A first communication apparatus and a second communication apparatus in the method may be any two devices that can perform data transmission in FIG. 1 or FIG. 2. As shown in FIG. 7, the physical layer configuration indication method includes but is not limited to the following steps:
S101: The first communication apparatus generates a PPDU, where the PPDU includes a preamble field and an SFD field, and different values of the SFD field or different values of the preamble field correspond to different physical layer configurations.
S102: The first communication apparatus transmits a signal, where the signal is generated by the PPDU based on a physical layer configuration corresponding to a value of the SFD field or a value of the preamble field.

Correspondingly, the second communication apparatus receives the signal.

In some scenarios, a signal in embodiments of this application may be a narrowband signal, and may be used to assist UWB in ranging, sensing, data transmission, or the like. The signal may provide initial synchronization information for the UWB and transfer data. For example, control information, synchronization information, or data of the UWB may be carried in a payload of the signal. Application of the signal in step S102 in the UWB is not limited in embodiments of this application.

Optionally, a structure of the PPDU may be shown in FIG. 3. The PPDU includes but is not limited to the preamble field, the SFD field, a PHR field, and a payload field. A length of the SFD field is 1 byte, namely, 8 bits; and a length of the preamble field is 2 bytes (namely, 16 bits) or 4 bytes (namely, 32 bits).

In a possible implementation, different values of the SFD field correspond to different physical layer configurations, in other words, one value of the SFD field corresponds to one physical layer configuration. A value of the SFD field belongs to a first value set, in other words, a value of the SFD field is a value in the first value set. The first value set includes one or more values. For example, in this case, one value in the first value set may correspond to one physical layer configuration. Optionally, in this implementation, all bits of the preamble field may be 0. Certainly, the preamble field may alternatively be set to another value. An implementation of the preamble field is not limited in embodiments of this application.

It may be understood that, because the length of the SFD field is 8 bits, the value of the SFD field may be understood as values of the 8 bits, that is, values of a bit 0 to a bit 7 (bits 0 to 7) of the SFD field.

In another possible implementation, different values of the preamble field correspond to different physical layer configurations, in other words, one value of the preamble field corresponds to one physical layer configuration. The value of the preamble field may be obtained by repeating the value in the first value set for one or more times. For example, the first value set includes one or more values, and the one value in the first value set may be used as one value of the preamble field after being repeated for one or more times. Optionally, in this implementation, the value of the SFD field may be 1 1 1 0 0 1 0 1. Certainly, the SFD field may alternatively be set to another value. An implementation of the SFD field is not limited in embodiments of this application.

It may be understood that, because the length of the preamble field is 16 bits or 32 bits, the value of the preamble field may be understood as values of the 16 bits or the 32 bits, that is, values of bits 0 to 15 or bits 0 to 31 of the preamble field.

In a possible implementation, the physical layer configuration may include one or more of the following parameters: a data rate, the length (which may be a symbol length or a bit length) of the preamble field, the length (which may be a symbol length or a bit length) of the SFD field, a length of a chip sequence corresponding to the preamble field and the SFD field, a length (which may be a symbol length or a bit length) of the PHR field, a length of a chip sequence corresponding to the PHR field and the payload field, or a forward error correction (forward error correction, FEC) code on the PHR field and the payload field (specifically including a type of the FEC code on the PHR field and the payload field and whether the FEC code is used on the PHR field and the payload field). For example, one value of the SFD field or one value of the preamble field may correspond to an index of one physical layer configuration. One index identifies one physical layer configuration.

In this embodiment of this application, different values of the SFD field or different values of the preamble field indicate different physical layer configurations, so that a format of the PPDU does not need to be changed, no bit overheads needs to be increased, and the different physical layer configurations can be flexibly indicated.

In another possible implementation, the physical layer configuration may include the length of the chip sequence corresponding to the PHR field and the payload field. To be specific, one value of the SFD field or one value of the preamble field corresponds to one length of the chip sequence, and the chip sequence is the chip sequence corresponding to the PHR field and the payload field. In this implementation, the PHR field further includes a piece of indication information for indicating whether the payload field has an FEC code. For example, the indication information may be located at a bit 7 (bit 7) of the PHR field. It may be understood that, when the physical layer configurations shown in Table 1 are used as examples, there are four lengths of the chip sequence corresponding to the PHR field and the payload field, and only the lengths of the chip sequence corresponding to the PHR field and the payload field in the configuration 2 (namely, the third row in Table 1) and the configuration 3 (namely, the fourth row in Table 1) are the same. Therefore, to distinguish the configuration 2 from the configuration 3, the bit 7 (bit 7) of the PHR field indicates whether the payload field has an FEC code.

In this embodiment of this application, different values of the SFD field or different values of the preamble field indicate different lengths of the chip sequence corresponding to the PHR field and the payload field, and then the bit 7 (bit 7) of the PHR field indicates whether the payload field has an FEC code, so that different physical layer configurations can be flexibly indicated without increasing bit overheads.

Optionally, the first value set may be predefined, or specified in a standard protocol, or determined by both a receiving party and a transmitting party through negotiation, or the like. The first value set may include M values, and a length of each value may be 8 bits. M may be greater than or equal to 2. For example, the M values in the first value set may meet the following condition: A sum of Hamming distances between chip sequences corresponding to any two of the M values is greater than or equal to a sum of Hamming distances between chip sequences corresponding to any two of any M values other than the first value set in a second value set. For another example, the M values in the first value set may meet any one of the following conditions: (1) A sum of auto-correlation sidelobe amplitudes of chip sequences corresponding to all of the M values is less than or equal to a sum of auto-correlation sidelobe amplitudes of chip sequences corresponding to all of any M values other than the first value set in a second value set; or (2) a sum of cross-correlation sidelobe amplitudes between chip sequences corresponding to any two of the M values is less than or equal to a sum of cross-correlation sidelobe amplitudes between chip sequences corresponding to any two of any M values other than the first value set in a second value set.

The second value set includes N values, N is greater than M, and both N and M are positive integers. For a specific manner of selecting the first value set, refer to the following description. Details are not described herein.

It may be understood that, in the information theory, a Hamming distance (Hamming distance) is a quantity of different values (or different characters) at corresponding locations of two equal-length sequences (or equal-length character strings). In other words, the Hamming distance is a quantity of sequence values that need to be replaced when a sequence is transformed into another sequence. For example, a Hamming distance between 1011101 and 1001001 is 2.

"Predefine" in this application may be understood as "define", "define in advance", "preset", "store", "pre-store", "pre-negotiate", "pre-configure", "solidify", "pre-burn", or the like.

Optionally, to better be compatible with a conventional device in a network, for the SFD field, one of values of the SFD field may be 1 1 1 0 0 1 0 1. In other words, the first value set may include the value 1 1 1 0 0 1 0 1. Similarly, for the preamble field, one of values of the preamble field may be that all bits are 0. In other words, the first value set may include the value 0 0 0 0 0 0 0 0.

Optionally, after generating the PPDU, the first communication apparatus may generate the signal (a modulated signal is obtained herein) based on the physical layer configuration corresponding to the value of the SFD field or the value of the preamble field in the PPDU and the PPDU, and transmit the signal. In other words, the signal is generated by the PPDU based on the physical layer configuration. For example, the first communication apparatus may generate the signal according to the modulation and spreading process shown in FIG. 6. Details are not described herein. It may be understood that the modulation scheme in this embodiment of this application may be O-QPSK modulation, or certainly may be another modulation scheme, for example, QPSK modulation. A specific modulation scheme is not limited in embodiments of this application. It may be further understood that, in this embodiment of this application, a quantity of physical layer configurations is not limited, and quantities of physical layer configurations in different modulation schemes may be different.

S103: The second communication apparatus demodulates the received signal to obtain the preamble field and the SFD field that are included in the PPDU.

S104: The second communication apparatus determines the physical layer configuration based on the value of the SFD field or the value of the preamble field, and demodulates the received signal based on the determined physical layer configuration to obtain the payload field included in the PPDU.

Optionally, the second communication apparatus may perform processes such as demodulation (namely, an inverse operation of modulation), chip-to-symbol mapping, and symbol-to-bit mapping on the received signal, to obtain the preamble field and the SFD field that are included in the PPDU. For example, the second communication apparatus may perform an inverse process of FIG. 6, to obtain the preamble field and the SFD field. It may be understood that although the O-QPSK modulation is used as an example in FIG. 6, in this embodiment of this application, the modulation scheme is not limited to the O-QPSK modulation, and may alternatively be another modulation scheme, for example, QPSK modulation. It may be further understood that, the five physical layer configurations shown in Table 1 are used as examples, and lengths of the chip sequence corresponding to the preamble field and the SFD field are all 32 bits. Therefore, the second communication apparatus may perform, based on a mapping relationship between a data symbol and the 32-bit chip sequence, the reverse process of FIG. 6, to obtain the preamble field and the SFD field.

The second communication apparatus may further determine the physical layer configuration based on the value of the SFD field or the value of the preamble field, and then demodulate the received signal based on the determined physical layer configuration (for example, the data rate, the symbol length of the PHR field, the length of the chip sequence corresponding to the PHR field and the payload field, and the FEC code on the PHR field and the payload field) to obtain the payload field included in the PPDU.

It may be understood that, as shown in Table 1, a length of a chip sequence corresponding to the PHR field is variable. If the PHR field needs to be obtained through correct demodulation, the physical layer configuration needs to be indicated before the PHR field. In addition, a length of the PHR field in the PPDU shown in FIG. 3 is limited, and there is no spare bit to indicate a plurality of different physical layer configurations. Therefore, in this embodiment of this application, different values of the SFD field or different values of the preamble field before the PHR field indicate different physical layer configurations, so that the different physical layer configurations can be flexibly indicated without increasing signaling overheads.

The following describes, by using an example, the first value set and a manner of selecting the first value set in this embodiment of this application.

For example, a possible manner of selecting the first value set is as follows:

### Step (1): Initialization.

Because the length (unit: bit) of the SFD field is 8 bits, there are 2⁸ (namely, 256) possible values of the SFD field. For ease of description, all possible values of the SFD field are denoted as the second value set. In this case, N is equal to 256.

Because every four bits are mapped to one data symbol, the SFD field may be represented by two data symbols. The following uses data symbols to represent all the possible values of the SFD field (in other words, the second value set is represented as follows by using the data symbols): *x*₀*=*[0*,* 0], *x*₁=[0, 1], *x*₂=[0, 2], ..., *x*₁₆=[1, 0], *x*₁₇=[1, 1], ..., and *x*₂₅₅=[15, 15]. It may be understood that 0 to 15 in *x*₀ to *x*₂₅₅ respectively represent data symbols 0 to 15. It may be further understood that a data symbol 0 is 0000 when being mapped to bits, a data symbol 1 is 1000 when being mapped to bits, a data symbol 2 is 0100 when being mapped to bits, a data symbol 3 is 1100 when being mapped to bits, the rest may be deduced by analogy, and a data symbol 15 is 1111 when being mapped to bits.

Then, S is set to an empty set, that is, S={ *ϕ*}. M is set to indicate a quantity of required values, namely, a quantity of physical layer configurations. It may be understood that M is also a quantity of values in the first value set. For example, Table 1 is used as an example, and M is equal to 5. It may be understood that, as the quantity of physical layer configurations increases, a value of M also increases accordingly. The value of M is not limited in embodiments of this application.

### Step (2): Cyclic iteration

For *i=* 0, it is assumed that S=S _{U} {_{X}i}, where "∪" indicates a union set. Each time *i* is set to a value, the following operations are performed:
If |*S*| ≤*M* and i<255, *i*=*i+*1;
if |*S*| >M and i<255, one value is deleted from S, so that a sum of Hamming distances between chip sequences corresponding to every two values in the remaining M values in S is the largest, and then *i*=*i+*1; or
if |*S*| >M and i=255, one value is deleted from S, so that a sum of Hamming distances between chip sequences corresponding to every two values in the remaining M values in S is the largest, and then a result is output, that is, the following step (3) is performed.

Herein, |*S*| represents a quantity of values in S (namely, a quantity of *x).* It may be understood that each data symbol in the SFD field is mapped to a chip sequence whose length is 32. For a mapping relationship between a data symbol and a chip sequence, refer to the following description. Details are not described herein.

### Step 3: Output the result.

The remaining M values in S may be used as the first value set. Certainly, some remaining values in S may be used as the first value set.

It may be understood that the length (unit: bit) of the preamble field is 16 bits or 32 bits, and is two or four times the length (unit: bit) of the SFD field. Therefore, a value selected in step (1), step (2), and step (3) for the first value set may be used as a value of the preamble field after being repeated for two or four times. A value of the SFD field may be a value in the first value set, and does not need to be repeated.

It may be understood that when M is greater than 2 and less than or equal to 256, the first value set may be obtained through steps (1) to (3). When M is equal to 2, a cyclic iteration condition of step (2) may be as follows: If |*S*| ≤*M* and i<255, *i+*1; if |*S*| >M and i<255, one value is deleted from S, so that a Hamming distance between chip sequences corresponding to two remaining values in S is the largest, and then *i*+1; or if |*S*| >M and i=255, one value is deleted from S, so that a Hamming distance between chip sequences corresponding to two remaining values in S is the largest, and then a result is output, that is, step (3) is performed. When M is equal to 1, the first value set has only one value. For the SFD field, when M is equal to 1, the first value set includes an existing value of the SFD field: 1 1 1 0 0 1 0 1, and the existing value is represented as [7, 10] by using a data symbol. For the preamble field, when M is equal to 1, the first value set may include a value: 0 0 0 0 0 0 0 0, and the value is represented as [0, 0] by using a data symbol.

It may be understood that, currently, the preamble field uses an all-0 data symbol, and one function of the SFD field is used to separate the preamble field and the PHR field that are in the PPDU. Therefore, the value of the SFD field may need to avoid use of the data symbol 0, to reduce a possibility of confusion between the SFD field and the preamble field. In other words, for the SFD field, the first value set may not include any value whose data symbol is 0. For example, for the SFD field, the first value set may not include any one of the following (represented by a data symbol): [0, 0], [0, 1], [0, 2], [0, 3], [0, 4], [0, 5], [0, 6], [0, 7], [0, 8], [0, 9], [0, 10], [0, 11], [0, 12], [0, 13], [0, 14], [0, 15], [1, 0], [2, 0], [3, 0], [4, 0], [5, 0], [6, 0], [7, 0], [8, 0], [9, 0], [10, 0], [11, 0], [12, 0], [13, 0], [14, 0], [15, 0]. It may be understood that, if the value of the SFD field needs to avoid use of the data symbol 0, the cyclic condition (that is, for *i=0,* 1, 2, ..., and 255, it is assumed that S=S{*xᵢ*}) in step (2) may be changed to: for *i*=0, 1, 2, ..., and 255, if *xᵢ* does not include the data symbol 0, it is assumed that S=S{*xᵢ*}; or if *xᵢ* includes the data symbol 0, *i=i+*1, that is, a next *xᵢ* is selected. Certainly, the cyclic iteration in step (2) may be performed after a value including the data symbol 0 is removed from all the possible values (namely, the second value set) of the SFD field in step (1).

Similarly, a current value of the SFD field is 1 1 1 0 0 1 0 1 that is represented as [7, 10] by using a data symbol. Therefore, to reduce the possibility of confusion between the SFD field and the preamble field, use of a value that is the same as that of the SFD field also needs to be avoided in a value of the preamble field, that is, use of data symbols 7 and 10 may need to be avoided in the value of the preamble field. For example, for the preamble field, the first value set may not include any one of the following (represented by a data symbol): [7, 10], and [10, 7].

It may be understood that, for the SFD field, one value in S output in step (3) corresponds to one physical layer configuration. For example, Table 1 is used as an example. There are five physical layer configurations in total, and M=5 may be set. For the SFD field, five values in S respectively correspond to the five physical layer configurations. A specific corresponding rule is not limited in embodiments of this application. For example, if the first value set includes the existing value (namely, 1 1 1 0 0 1 0 1 that is represented as [7, 10] by using a data symbol) of the SFD field, the existing value of the SFD field may represent the configuration #1 (namely, the second row of Table 1) in Table 1. Similarly, if the first value set includes the value 0 0 0 0 0 0 0 0 that is represented as [0, 0] by using a data symbol, the existing value of the preamble field (that is, 16 bits are all 0 or 32 bits are all 0, that is, 0 0 0 0 0 0 0 0 in the first value set is repeated for two or four times) may represent the configuration #1 (namely, the second row of Table 1) in Table 1. This can better be compatible with the conventional device (for example, a traditional Zigbee device).

It may be understood that, in step (2), a Hamming distance between chip sequences corresponding to every two values in the set S is optimized to delete a redundant value in S. In step (2), the redundant value in the set S may be deleted in another manner. For example, the redundant value in S may be deleted by optimizing auto-correlation or cross-correlation obtained by mapping different values in S to a chip sequence and then performing modulation (for example, O-QPSK modulation or QPSK modulation). Alternatively, the redundant value in S may be deleted by optimizing auto-correlation or cross-correlation obtained by mapping different values in S to a chip sequence, then performing modulation (for example, O-QPSK modulation or QPSK modulation), and then performing oversampling. For example, a value with a largest auto-correlation sidelobe amplitude in S may be deleted, or a value with a largest normalized auto-correlation sidelobe amplitude (for example, an auto-correlation peak amplitude is used as a normalization denominator) in S may be deleted, or a value with a largest average auto-correlation sidelobe amplitude in S may be deleted. For another example, one value may be deleted from S, so that a sum of cross-correlation sidelobe amplitudes, or an average value of cross-correlation sidelobe amplitudes, or a maximum cross-correlation sidelobe amplitude between chip sequences corresponding to every two of the remaining M values in S is the smallest. For another example, one value may be deleted from S, so that a normalized cross-correlation sidelobe amplitude (for example, an auto-correlation peak amplitude is used as a normalization denominator) between chip sequences corresponding to every two of the remaining M values in S is the smallest, or an average value of normalized cross-correlation sidelobe amplitudes is the smallest.

It may be understood that for fixed M, a plurality of value sets may be selected through the cyclic iteration in step (2). For example, the plurality of value sets may meet the following condition: The plurality of value sets (each value set includes M values) have a same sum of Hamming distances that is greater than a sum of Hamming distances of other M values; or the plurality of value sets (each value set includes M values) have a same sum of normalized auto-correlation sidelobe amplitudes that is less than a sum of normalized auto-correlation sidelobe amplitudes of other M values; or the plurality of value sets (each value set includes M values) have a same sum of normalized cross-correlation sidelobe amplitudes (for example, an auto-correlation peak amplitude is used as a normalization denominator) that is less than a sum of normalized cross-correlation sidelobe amplitudes of other M values.

The following uses examples to describe, based on different mapping tables from data symbols to 32-bit chip sequences, some or all value sets selected by using steps (1) to (3).

In an example, some or all value sets of the SFD field selected based on a mapping table from data symbols to chip sequences shown in the following table 2 by using steps (1) to (3) are shown in the following table 3 and table 4. Any value set shown in Table 4 includes the existing value of the SFD field: 1 1 1 0 0 1 0 1.

It may be understood that the first value set in this embodiment of this application may include any M values in the following table 3 and/or table 4, the value of the SFD field may be selected from the first value set, and the value of the preamble field may be obtained by repeating the value in the first value set for one or more times.

**Table 2: Mapping table 1 from data symbols to chip sequences**

| Data symbol | Chip values (c₀, c₁, ..., C₃₀, and c₃₁) |
|---|---|
| Data symbol | Chip values |
| 0 | 1 1 0 1 1 0 0 1 1 1 0 0 0 0 1 1 0 1 0 1 0 0 1 0 0 0 1 0 1 1 1 0 |
| 1 | 1 1 1 0 1 1 0 1 1 0 0 1 1 1 0 0 0 0 1 1 0 1 0 1 0 0 1 0 0 0 1 0 |
| 2 | 0 0 1 0 1 1 1 0 1 1 0 1 1 0 0 1 1 1 0 0 0 0 1 1 0 1 0 1 0 0 1 0 |
| 3 | 0 0 1 0 0 0 1 0 1 1 1 0 1 1 0 1 1 0 0 1 1 1 0 0 0 0 1 1 0 1 0 1 |
| 4 | 0 1 0 1 0 0 1 0 0 0 1 0 1 1 1 0 1 1 0 1 1 0 0 1 1 1 0 0 0 0 1 1 |
| 5 | 0 0 1 1 0 1 0 1 0 0 1 0 0 0 1 0 1 1 1 0 1 1 0 1 1 0 0 1 1 1 0 0 |
| 6 | 1 1 0 0 0 0 1 1 0 1 0 1 0 0 1 0 0 0 1 0 1 1 1 0 1 1 0 1 1 0 0 1 |
| 7 | 1 0 0 1 1 1 0 0 0 0 1 1 0 1 0 1 0 0 1 0 0 0 1 0 1 1 1 0 1 1 0 1 |
| 8 | 1 0 0 0 1 1 0 0 1 0 0 1 0 1 1 0 0 0 0 0 0 1 1 1 0 1 1 1 1 0 1 1 |
| 9 | 1 0 1 1 1 0 0 0 1 1 0 0 1 0 0 1 0 1 1 0 0 0 0 0 0 1 1 1 0 1 1 1 |
| 10 | 0 1 1 1 1 0 1 1 1 0 0 0 1 1 0 0 1 0 0 1 0 1 1 0 0 0 0 0 0 1 1 1 |
| 11 | 0 1 1 1 0 1 1 1 1 0 1 1 1 0 0 0 1 1 0 0 1 0 0 1 0 1 1 0 0 0 0 0 |
| 12 | 0 0 0 0 0 1 1 1 0 1 1 1 1 0 1 1 1 0 0 0 1 1 0 0 1 0 0 1 0 1 1 0 |
| 13 | 0 1 1 0 0 0 0 0 0 1 1 1 0 1 1 1 1 0 1 1 1 0 0 0 1 1 0 0 1 0 0 1 |
| 14 | 1 0 0 1 0 1 1 0 0 0 0 0 0 1 1 1 0 1 1 1 1 0 1 1 1 0 0 0 1 1 0 0 |
| 15 | 1 1 0 0 1 0 0 1 0 1 1 0 0 0 0 0 0 1 1 1 0 1 1 1 1 0 1 1 1 0 0 0 |

**Table 3**

| Value of M | Data symbol corresponding to the SFD field | Value of the SFD field (8 bits) | Chip sequence corresponding to the SFD field |
|---|---|---|---|
| 1 | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| 2 | [12, 12] | [0 0 1 1 0 0 1 1] | 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 1 1 0 0 1 0 0 1 0 1 1 0 |
| | [15, 15] | [1 1 1 1 1 1 1 1] | 1 1 0 0 1 0 0 1 0 1 1 0 0 0 0 0 0 1 1 1 0 11 1 1 0 1 1 1 0 0 0 1 1 0 0 1 0 0 1 0 1 1 0 0 0 0 0 0 1 1 1 0 1 1 1 1 0 1 1 1 0 0 0 |
| 3 | [9, 14] | [1 0 0 1 0 1 1 1] | 1 0 1 1 1 0 0 0 1 1 0 0 1 0 0 1 0 1 1 0 0 0 0 0 0 1 1 1 0 1 1 1 1 0 0 1 0 1 1 0 0 0 0 0 0 1 1 1 0 1 1 1 1 0 1 1 1 0 0 0 1 1 0 0 |
| | [13, 11] | [1 0 1 1 1 1 0 1] | 0 1 1 0 0 0 0 0 0 1 1 1 0 1 1 1 1 0 1 1 1 0 0 0 1 1 0 0 1 0 0 1 0 1 1 1 0 1 1 1 1 0 1 1 1 0 0 0 1 1 0 0 1 0 0 1 0 1 1 0 0 0 0 0 |
| | [15, 9] | [1 1 1 1 1 0 0 1] | 1 1 0 0 1 0 0 1 0 1 1 0 0 0 0 0 0 1 1 1 0 1 1 1 1 0 1 1 1 0 0 0 1 0 1 1 1 0 0 0 1 1 0 0 1 0 0 1 0 1 1 0 0 0 0 0 0 1 1 1 0 1 1 1 |
| 4 | [2,3] | [0 1 0 0 1 1 0 0] | 0 0 1 0 1 1 1 0 1 1 0 1 1 0 0 1 1 1 0 0 0 0 1 1 0 1 0 1 0 0 1 0 0 0 1 0 0 0 1 0 1 1 1 0 1 1 0 1 1 0 0 1 1 1 0 0 0 0 1 1 0 1 0 1 |
| | [5, 14] | [1 0 1 0 0 1 1 1] | 0 0 1 1 0 1 0 1 0 0 1 0 0 0 1 0 1 1 1 0 1 1 0 1 1 0 0 1 1 1 0 0 1 0 0 1 0 1 1 0 0 0 0 0 0 1 1 1 0 1 1 1 1 0 1 1 1 0 0 0 1 1 0 0 |
| | [7, 1] | [1 1 1 0 1 0 0 0] | 1 0 0 1 1 1 0 0 0 0 1 1 0 1 0 1 0 0 1 0 0 0 1 0 1 1 1 0 1 1 0 1 1 1 1 0 1 1 0 1 1 0 0 1 1 1 0 0 0 0 1 1 0 1 0 1 0 0 1 0 0 0 1 0 |
| | [10, 6] | [0 1 0 1 0 1 1 0] | 0 1 1 1 1 0 1 1 1 0 0 0 1 1 0 0 1 0 0 1 0 1 1 0 0 0 0 0 0 1 1 1 1 1 0 0 0 0 1 1 0 1 0 1 0 0 1 0 0 0 1 0 1 1 1 0 1 1 0 1 1 0 0 1 |
| 5 (including the data symbol 0) | [0, 6] | [0 0 0 0 0 1 1 0] | 1 1 0 1 1 0 0 1 1 1 0 0 0 0 1 1 0 1 0 1 0 0 1 0 0 0 1 0 1 1 1 0 1 1 0 0 0 0 1 1 0 1 0 1 0 0 1 0 0 0 1 0 1 1 1 0 1 1 0 1 1 0 0 1 |
| | [3, 5] | [1 1 0 0 1 0 1 0] | 0 0 1 0 0 0 1 0 1 1 1 0 1 1 0 1 1 0 0 1 1 1 0 0 0 0 1 1 0 1 0 1 0 0 1 1 0 1 0 1 0 0 1 0 0 0 1 0 1 1 1 0 1 1 0 1 1 0 0 1 1 1 0 0 |
| | [6, 0] | [0 1 1 0 0 0 0 0] | 1 1 0 0 0 0 1 1 0 1 0 1 0 0 1 0 0 0 1 0 1 1 1 0 1 1 0 1 1 0 0 1 1 1 0 1 1 0 0 1 1 1 0 0 0 0 1 1 0 1 0 1 0 0 1 0 0 0 1 0 1 1 1 0 |
| | [7, 3] | [1 1 1 0 1 1 0 0] | 1 0 0 1 1 1 0 0 0 0 1 1 0 1 0 1 0 0 1 0 0 0 1 0 1 1 1 0 1 1 0 1 0 0 1 0 0 0 1 0 1 1 1 0 1 1 0 1 1 0 0 1 1 1 0 0 0 0 1 1 0 1 0 1 |
| | [11, 2] | [1 1 0 1 0 1 0 0] | 0 1 1 1 0 1 1 1 1 0 1 1 1 0 0 0 1 1 0 0 1 0 0 1 0 1 1 0 0 0 0 0 0 0 1 0 1 1 1 0 1 1 0 1 1 0 0 1 1 1 0 0 0 0 1 1 0 1 0 1 0 0 1 0 |
| 5 (excluding the data symbol 0) | [1, 7] | [1 0 0 0 1 1 1 0] | 1 1 1 0 1 1 0 1 1 0 0 1 1 1 0 0 0 0 1 1 0 1 0 1 0 0 1 0 0 0 1 0 1 0 0 1 1 1 0 0 0 0 1 1 0 1 0 1 0 0 1 0 0 0 1 0 1 1 1 0 1 1 0 1 |
| | [4, 6] | [0 0 1 0 0 1 1 0] | 0 1 0 1 0 0 1 0 0 0 1 0 1 1 1 0 1 1 0 1 1 0 0 1 1 1 0 0 0 0 1 1 1 1 0 0 0 0 1 1 0 1 0 1 0 0 1 0 0 0 1 0 1 1 1 0 1 1 0 1 1 0 0 1 |
| | [7, 1] | [1 1 1 0 1 0 0 0] | 1 0 0 1 1 1 0 0 0 0 1 1 0 1 0 1 0 0 1 0 0 0 1 0 1 1 1 0 1 1 0 1 1 1 1 0 1 1 0 1 1 0 0 1 1 1 0 0 0 0 1 1 0 1 0 1 0 0 1 0 0 0 1 0 |
| | [12, 3] | [0 0 1 1 1 1 0 0] | 0 0 0 0 0 1 1 1 0 1 1 1 1 0 1 1 1 0 0 0 1 1 0 0 1 0 0 1 0 1 1 0 0 0 1 0 0 0 1 0 1 1 1 0 1 1 0 1 1 0 0 1 1 1 0 0 0 0 1 1 0 1 0 1 |
| | [15, 4] | [1 1 1 1 0 0 1 0] | 1 1 0 0 1 0 0 1 0 1 1 0 0 0 0 0 0 1 1 1 0 1 1 1 1 0 1 1 1 0 0 0 0 1 0 1 0 0 1 0 0 0 1 0 1 1 1 0 1 1 0 1 1 0 0 1 1 1 0 0 0 0 1 1 |
| 6 | [1, 5] | [1 0 0 0 1 0 1 0] | 1 1 1 0 1 1 0 1 1 0 0 1 1 1 0 0 0 0 1 1 0 1 0 1 0 0 1 0 0 0 1 0 0 0 1 1 0 1 0 1 0 0 1 0 0 0 1 0 1 1 1 0 1 1 0 1 1 0 0 1 1 1 0 0 |
| | [2, 3] | [0 1 0 0 1 1 0 0] | 0 0 1 0 1 1 1 0 1 1 0 1 1 0 0 1 1 1 0 0 0 0 1 1 0 1 0 1 0 0 1 0 0 0 1 0 0 0 1 0 1 1 1 0 1 1 0 1 1 0 0 1 1 1 0 0 0 0 1 1 0 1 0 1 |
| | [4, 6] | [0 0 1 0 0 1 1 0] | 0 1 0 1 0 0 1 0 0 0 1 0 1 1 1 0 1 1 0 1 1 0 0 1 1 1 0 0 0 0 1 1 1 1 0 0 0 0 1 1 0 1 0 1 0 0 1 0 0 0 1 0 1 1 1 0 1 1 0 1 1 0 0 1 |
| | [5, 1] | [1 0 1 0 1 0 0 0] | 0 0 1 1 0 1 0 1 0 0 1 0 0 0 1 0 1 1 1 0 1 1 0 1 1 0 0 1 1 1 0 0 1 1 1 0 1 1 0 1 1 0 0 1 1 1 0 0 0 0 1 1 0 1 0 1 0 0 1 0 0 0 1 0 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [7, 7] | [1 1 1 0 1 1 1 0] | 1 0 0 1 1 1 0 0 0 0 1 1 0 1 0 1 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 |
| 7 | [1,4] | [1 0 0 0 0 0 1 0] | 1 1 1 0 1 1 0 1 1 0 0 1 1 1 0 0 0 0 1 1 0 1 0 1 0 0 1 0 0 0 1 0 0 1 0 1 0 0 1 0 0 0 1 0 1 1 1 0 1 1 0 1 1 0 0 1 1 1 0 0 0 0 1 1 |
| | [2, 5] | [0 1 0 0 1 0 1 0] | 0 0 1 0 1 1 1 0 1 1 0 1 1 0 0 1 1 1 0 0 0 0 1 1 0 1 0 1 0 0 1 0 0 0 1 1 0 1 0 1 0 0 1 0 0 0 1 0 1 1 1 0 1 1 0 1 1 0 0 1 1 1 0 0 |
| | [3, 3] | [1 1 0 0 1 1 0 0] | 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 1 0 0 1 1 1 0 0 0 0 1 1 0 1 0 1 |
| | [4, 2] | [0 0 1 0 0 1 0 0] | 0 1 0 1 0 0 1 0 0 0 1 0 1 1 1 0 1 1 0 1 1 0 0 1 1 1 0 0 0 0 1 1 0 0 1 0 1 1 1 0 1 1 0 1 1 0 0 1 1 1 0 0 0 0 1 1 0 1 0 1 0 0 1 0 |
| | [5, 6] | [1 0 1 0 0 1 1 0] | 0 0 1 1 0 1 0 1 0 0 1 0 0 0 1 0 1 1 1 0 1 1 0 1 1 0 0 1 1 1 0 0 1 1 0 0 0 0 1 1 0 1 0 1 0 0 1 0 0 0 1 0 1 1 1 0 1 1 0 1 1 0 0 1 |
| | [6, 1] | [0 1 1 0 1 0 0 0] | 1 1 0 0 0 0 1 1 0 1 0 1 0 0 1 0 0 0 1 0 1 1 1 0 1 1 0 1 1 0 0 1 1 1 1 0 1 1 0 1 1 0 0 1 1 1 0 0 0 0 1 1 0 1 0 1 0 0 1 0 0 0 1 0 |
| | [7, 7] | [1 1 1 0 1 1 1 0] | 1 0 0 1 1 1 0 0 0 0 1 1 0 1 0 1 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 |
| 8 (including the data symbol 0) | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1, 3] | [1 0 0 0 1 1 0 0] | 1 1 1 0 1 1 0 1 1 0 0 1 1 1 0 0 0 0 1 1 0 1 0 1 0 0 1 0 0 0 1 0 0 0 1 0 0 0 1 0 1 1 1 0 1 1 0 1 1 0 0 1 1 1 0 0 0 0 1 1 0 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [3, 5] | [1 1 0 0 1 0 1 0] | 0 0 1 0 0 0 1 0 1 1 1 0 1 1 0 1 1 0 0 1 1 1 0 0 0 0 1 1 0 1 0 1 0 0 1 1 0 1 0 1 0 0 1 0 0 0 1 0 1 1 1 0 1 1 0 1 1 0 0 1 1 1 0 0 |
| | [4, 1] | [0 0 1 0 1 0 0 0] | 0 1 0 1 0 0 1 0 0 0 1 0 1 1 1 0 1 1 0 1 1 0 0 1 1 1 0 0 0 0 1 1 1 1 1 0 1 1 0 1 1 0 0 1 1 1 0 0 0 0 1 1 0 1 0 1 0 0 1 0 0 0 1 0 |
| | [5, 2] | [1 0 1 0 0 1 0 0] | 0 0 1 1 0 1 0 1 0 0 1 0 0 0 1 0 1 1 1 0 1 1 0 1 1 0 0 1 1 1 0 0 0 0 1 0 1 1 1 0 1 1 0 1 1 0 0 1 1 1 0 0 0 0 1 1 0 1 0 1 0 0 1 0 |
| | [6, 6] | [0 1 1 0 0 1 1 0] | 1 1 0 0 0 0 1 1 0 1 0 1 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 1 0 0 1 |
| | [7, 0] | [1 1 1 0 0 0 0 0] | 1 0 0 1 1 1 0 0 0 0 1 1 0 1 0 1 0 0 1 0 0 0 1 0 1 1 1 0 1 1 0 1 1 1 0 1 1 0 0 1 1 1 0 0 0 0 1 1 0 1 0 1 0 0 1 0 0 0 1 0 1 1 1 0 |
| 8 (excluding the data symbol 0) | [1, 7] | [1 0 0 0 1 1 1 0] | 1 1 1 0 1 1 0 1 1 0 0 1 1 1 0 0 0 0 1 1 0 1 0 1 0 0 1 0 0 0 1 0 1 0 0 1 1 1 0 0 0 0 1 1 0 1 0 1 0 0 1 0 0 0 1 0 1 1 1 0 1 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [3, 3] | [1 1 0 0 1 1 0 0] | 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 1 0 0 1 1 1 0 0 0 0 1 1 0 1 0 1 |
| | [4, 1] | [0 0 1 0 1 0 0 0] | 0 1 0 1 0 0 1 0 0 0 1 0 1 1 1 0 1 1 0 1 1 0 0 1 1 1 0 0 0 0 1 1 1 1 1 0 1 1 0 1 1 0 0 1 1 1 0 0 0 0 1 1 0 1 0 1 0 0 1 0 0 0 1 0 |
| | [5, 5] | [1 0 1 0 1 0 1 0] | 0 0 1 1 0 1 0 1 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 1 0 0 1 1 1 0 0 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [7, 15] | [1 1 1 0 1 1 1 1] | 1 0 0 1 1 1 0 0 0 0 1 1 0 1 0 1 0 0 1 0 0 0 1 0 1 1 1 0 1 1 0 1 1 1 0 0 1 0 0 1 0 1 1 0 0 0 0 0 0 1 1 1 0 1 1 1 1 0 1 1 1 0 0 0 |
| | [15, 6] | [1 1 1 1 0 1 1 0] | 1 1 0 0 1 0 0 1 0 1 1 0 0 0 0 0 0 1 1 1 0 1 1 1 1 0 1 1 1 0 0 0 1 1 0 0 0 0 1 1 0 1 0 1 0 0 1 0 0 0 1 0 1 1 1 0 1 1 0 1 1 0 0 1 |
| 9 (including the datasymbol 0) | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1,4] | [1 0 0 0 0 0 1 0] | 1 1 1 0 1 1 0 1 1 0 0 1 1 1 0 0 0 0 1 1 0 1 0 1 0 0 1 0 0 0 1 0 0 1 0 1 0 0 1 0 0 0 1 0 1 1 1 0 1 1 0 1 1 0 0 1 1 1 0 0 0 0 1 1 |
| | [2, 15] | [0 1 0 0 1 1 1 1] | 0 0 1 0 1 1 1 0 1 1 0 1 1 0 0 1 1 1 0 0 0 0 1 1 0 1 0 1 0 0 1 0 1 1 0 0 1 0 0 1 0 1 1 0 0 0 0 0 0 1 1 1 0 1 1 1 1 0 1 1 1 0 0 0 |
| | [3, 2] | [1 1 0 0 0 1 0 0] | 0 0 1 0 0 0 1 0 1 1 1 0 1 1 0 1 1 0 0 1 1 1 0 0 0 0 1 1 0 1 0 1 0 0 1 0 1 1 1 0 1 1 0 1 1 0 0 1 1 1 0 0 0 0 1 1 0 1 0 1 0 0 1 0 |
| | [4, 5] | [0 0 1 0 1 0 1 0] | 0 1 0 1 0 0 1 0 0 0 1 0 1 1 1 0 1 1 0 1 1 0 0 1 1 1 0 0 0 0 1 1 0 0 1 1 0 1 0 1 0 0 1 0 0 0 1 0 1 1 1 0 1 1 0 1 1 0 0 1 1 1 0 0 |
| | [5, 1] | [1 0 1 0 1 0 0 0] | 0 0 1 1 0 1 0 1 0 0 1 0 0 0 1 0 1 1 1 0 1 1 0 1 1 0 0 1 1 1 0 0 1 1 1 0 1 1 0 1 1 0 0 1 1 1 0 0 0 0 1 1 0 1 0 1 0 0 1 0 0 0 1 0 |
| | [6, 3] | [0 1 1 0 1 1 0 0] | 1 1 0 0 0 0 1 1 0 1 0 1 0 0 1 0 0 0 1 0 1 1 1 0 1 1 0 1 1 0 0 1 0 0 1 0 0 0 1 0 1 1 1 0 1 1 0 1 1 0 0 1 1 1 0 0 0 0 1 1 0 1 0 1 |
| | [7, 6] | [1 1 1 0 0 1 1 0] | 1 0 0 1 1 1 0 0 0 0 1 1 0 1 0 1 0 0 1 0 0 0 1 0 1 1 1 0 1 1 0 1 1 1 0 0 0 0 1 1 0 1 0 1 0 0 1 0 0 0 1 0 1 1 1 0 1 1 0 1 1 0 0 1 |
| | [15, 0] | [1 1 1 1 0 0 0 0] | 1 1 0 0 1 0 0 1 0 1 1 0 0 0 0 0 0 1 1 1 0 1 1 1 1 0 1 1 1 0 0 0 1 1 0 1 1 0 0 1 1 1 0 0 0 0 1 1 0 1 0 1 0 0 1 0 0 0 1 0 1 1 1 0 |
| 9 (excluding the data symbol 0) | [1, 15] | [1 0 0 0 1 1 1 1] | 1 1 1 0 1 1 0 1 1 0 0 1 1 1 0 0 0 0 1 1 0 1 0 1 0 0 1 0 0 0 1 0 1 1 0 0 1 0 0 1 0 1 1 0 0 0 0 0 0 1 1 1 0 1 1 1 1 0 1 1 1 0 0 0 |
| | [2, 5] | [0 1 0 0 1 0 1 0] | 0 0 1 0 1 1 1 0 1 1 0 1 1 0 0 1 1 1 0 0 0 0 1 1 0 1 0 1 0 0 1 0 0 0 1 1 0 1 0 1 0 0 1 0 0 0 1 0 1 1 1 0 1 1 0 1 1 0 0 1 1 1 0 0 |
| | [4, 6] | [0 0 1 0 0 1 1 0] | 0 1 0 1 0 0 1 0 0 0 1 0 1 1 1 0 1 1 0 1 1 0 0 1 1 1 0 0 0 0 1 1 1 1 0 0 0 0 1 1 0 1 0 1 0 0 1 0 0 0 1 0 1 1 1 0 1 1 0 1 1 0 0 1 |
| | [5, 2] | [1 0 1 0 0 1 0 0] | 0 0 1 1 0 1 0 1 0 0 1 0 0 0 1 0 1 1 1 0 1 1 0 1 1 0 0 1 1 1 0 0 0 0 1 0 1 1 1 0 1 1 0 1 1 0 0 1 1 1 0 0 0 0 1 1 0 1 0 1 0 0 1 0 |
| | [6, 3] | [0 1 1 0 1 1 0 0] | 1 1 0 0 0 0 1 1 0 1 0 1 0 0 1 0 0 0 1 0 1 1 1 0 1 1 0 1 1 0 0 1 0 0 1 0 0 0 1 0 1 1 1 0 1 1 0 1 1 0 0 1 1 1 0 0 0 0 1 1 0 1 0 1 |
| | [7, 4] | [1 1 1 0 0 0 1 0] | 1 0 0 1 1 1 0 0 0 0 1 1 0 1 0 1 0 0 1 0 0 0 1 0 1 1 1 0 1 1 0 1 0 1 0 1 0 0 1 0 0 0 1 0 1 1 1 0 1 1 0 1 1 0 0 1 1 1 0 0 0 0 1 1 |
| | [9, 1] | [1 0 0 1 1 0 0 0] | 1 0 1 1 1 0 0 0 1 1 0 0 1 0 0 1 0 1 1 0 0 0 0 0 0 1 1 1 0 1 1 1 1 1 1 0 1 1 0 1 1 0 0 1 1 1 0 0 0 0 1 1 0 1 0 1 0 0 1 0 0 0 1 0 |
| | [10, 7] | [0 1 0 1 1 1 1 0] | 0 1 1 1 1 0 1 1 1 0 0 0 1 1 0 0 1 0 0 1 0 1 1 0 0 0 0 0 0 1 1 1 1 0 0 1 1 1 0 0 0 0 1 1 0 1 0 1 0 0 1 0 0 0 1 0 1 1 1 0 1 1 0 1 |
| | [15, 10] | [1 1 1 1 0 1 0 1] | 1 1 0 0 1 0 0 1 0 1 1 0 0 0 0 0 0 1 1 1 0 1 1 1 1 0 1 1 1 0 0 0 0 1 1 1 1 0 1 1 1 0 0 0 1 1 0 0 1 0 0 1 0 1 1 0 0 0 0 0 0 1 1 1 |
| 10 (including the data symbol 0) | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1,4] | [1 0 0 0 0 0 1 0] | 1 1 1 0 1 1 0 1 1 0 0 1 1 1 0 0 0 0 1 1 0 1 0 1 0 0 1 0 0 0 1 0 0 1 0 1 0 0 1 0 0 0 1 0 1 1 1 0 1 1 0 1 1 0 0 1 1 1 0 0 0 0 1 1 |
| | [2, 5] | [0 1 0 0 1 0 1 0] | 0 0 1 0 1 1 1 0 1 1 0 1 1 0 0 1 1 1 0 0 0 0 1 1 0 1 0 1 0 0 1 0 0 0 1 1 0 1 0 1 0 0 1 0 0 0 1 0 1 1 1 0 1 1 0 1 1 0 0 1 1 1 0 0 |
| | [3, 2] | [1 1 0 0 0 1 0 0] | 0 0 1 0 0 0 1 0 1 1 1 0 1 1 0 1 1 0 0 1 1 1 0 0 0 0 1 1 0 1 0 1 0 0 1 0 1 1 1 0 1 1 0 1 1 0 0 1 1 1 0 0 0 0 1 1 0 1 0 1 0 0 1 0 |
| | [4, 12] | [0 0 1 0 0 0 1 1] | 0 1 0 1 0 0 1 0 0 0 1 0 1 1 1 0 1 1 0 1 1 0 0 1 1 1 0 0 0 0 1 1 0 0 0 0 0 1 1 1 0 1 1 1 1 0 1 1 1 0 0 0 1 1 0 0 1 0 0 1 0 1 1 0 |
| | [5, 1] | [1 0 1 0 1 0 0 0] | 0 0 1 1 0 1 0 1 0 0 1 0 0 0 1 0 1 1 1 0 1 1 0 1 1 0 0 1 1 1 0 0 1 1 1 0 1 1 0 1 1 0 0 1 1 1 0 0 0 0 1 1 0 1 0 1 0 0 1 0 0 0 1 0 |
| | [6, 15] | [0 1 1 0 1 1 1 1] | 1 1 0 0 0 0 1 1 0 1 0 1 0 0 1 0 0 0 1 0 1 1 1 0 1 1 0 1 1 0 0 1 1 1 0 0 1 0 0 1 0 1 1 0 0 0 0 0 0 1 1 1 0 1 1 1 1 0 1 1 1 0 0 0 |
| | [7, 3] | [1 1 1 0 1 1 0 0] | 1 0 0 1 1 1 0 0 0 0 1 1 0 1 0 1 0 0 1 0 0 0 1 0 1 1 1 0 1 1 0 1 0 0 1 0 0 0 1 0 1 1 1 0 1 1 0 1 1 0 0 1 1 1 0 0 0 0 1 1 0 1 0 1 |
| | [9, 6] | [1 0 0 1 0 1 1 0] | 1 0 1 1 1 0 0 0 1 1 0 0 1 0 0 1 0 1 1 0 0 0 0 0 0 1 1 1 0 1 1 1 1 1 0 0 0 0 1 1 0 1 0 1 0 0 1 0 0 0 1 0 1 1 1 0 1 1 0 1 1 0 0 1 |
| | [14, 0] | [0 1 1 1 0 0 0 0] | 1 0 0 1 0 1 1 0 0 0 0 0 0 1 1 1 0 1 1 1 1 0 1 1 1 0 0 0 1 1 0 0 1 1 0 1 1 0 0 1 1 1 0 0 0 0 1 1 0 1 0 1 0 0 1 0 0 0 1 0 1 1 1 0 |
| 10 (excluding the data symbol 0) | [1, 15] | [1 0 0 0 1 1 1 1] | 1 1 1 0 1 1 0 1 1 0 0 1 1 1 0 0 0 0 1 1 0 1 0 1 0 0 1 0 0 0 1 0 1 1 0 0 1 0 0 1 0 1 1 0 0 0 0 0 0 1 1 1 0 1 1 1 1 0 1 1 1 0 0 0 |
| | [2, 10] | [0 1 0 0 0 1 0 1] | 0 0 1 0 1 1 1 0 1 1 0 1 1 0 0 1 1 1 0 0 0 0 1 1 0 1 0 1 0 0 1 0 0 1 1 1 1 0 1 1 1 0 0 0 1 1 0 0 1 0 0 1 0 1 1 0 0 0 0 0 0 1 1 1 |
| | [3, 8] | [1 1 0 0 0 0 0 1] | 0 0 1 0 0 0 1 0 1 1 1 0 1 1 0 1 1 0 0 1 1 1 0 0 0 0 1 1 0 1 0 1 1 0 0 0 1 1 0 0 1 0 0 1 0 1 1 0 0 0 0 0 0 1 1 1 0 1 1 1 1 0 1 1 |
| | [4, 12] | [0 0 1 0 0 0 1 1] | 0 1 0 1 0 0 1 0 0 0 1 0 1 1 1 0 1 1 0 1 1 0 0 1 1 1 0 0 0 0 1 1 0 0 0 0 0 1 1 1 0 1 1 1 1 0 1 1 1 0 0 0 1 1 0 0 1 0 0 1 0 1 1 0 |
| | [5, 13] | [1 0 1 0 1 0 1 1] | 0 0 1 1 0 1 0 1 0 0 1 0 0 0 1 0 1 1 1 0 1 1 0 1 1 0 0 1 1 1 0 0 0 1 1 0 0 0 0 0 0 1 1 1 0 1 1 1 1 0 1 1 1 0 0 0 1 1 0 0 1 0 0 1 |
| | [6, 11] | [0 1 1 0 1 1 0 1] | 1 1 0 0 0 0 1 1 0 1 0 1 0 0 1 0 0 0 1 0 1 1 1 0 1 1 0 1 1 0 0 1 0 1 1 1 0 1 1 1 1 0 1 1 1 0 0 0 1 1 0 0 1 0 0 1 0 1 1 0 0 0 0 0 |
| | [7, 14] | [1 1 1 0 0 1 1 1] | 1 0 0 1 1 1 0 0 0 0 1 1 0 1 0 1 0 0 1 0 0 0 1 0 1 1 1 0 1 1 0 1 1 0 0 1 0 1 1 0 0 0 0 0 0 1 1 1 0 1 1 1 1 0 1 1 1 0 0 0 1 1 0 0 |
| | [9, 11] | [1 0 0 1 1 1 0 1] | 1 0 1 1 1 0 0 0 1 1 0 0 1 0 0 1 0 1 1 0 0 0 0 0 0 1 1 1 0 1 1 1 0 1 1 1 0 1 1 1 1 0 1 1 1 0 0 0 1 1 0 0 1 0 0 1 0 1 1 0 0 0 0 0 |
| | [13, 9] | [1 0 1 1 1 0 0 1] | 0 1 1 0 0 0 0 0 0 1 1 1 0 1 1 1 1 0 1 1 1 0 0 0 1 1 0 0 1 0 0 1 1 0 1 1 1 0 0 0 1 1 0 0 1 0 0 1 0 1 1 0 0 0 0 0 0 1 1 1 0 1 1 1 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |

**Table 4**

| Value of M | Data symbol corresponding to the SFD field | Value of the SFD field (8 bits) | Chip sequence corresponding to the SFD field |
|---|---|---|---|
| 1 | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| 2 | [7, 10] | [1 1 1 0 0 1 0 1] | 1 0 0 1 1 1 0 0 0 0 1 1 0 1 0 1 0 01 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 3 | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [12, 15] | [0 0 1 1 1 1 1 1] | 0 0 0 0 0 1 1 1 0 1 1 1 1 0 1 1 1 0 0 0 1 1 0 0 1 0 0 1 0 1 1 0 1 1 0 0 1 0 0 1 0 1 1 0 0 0 0 0 0 1 1 1 0 1 1 1 1 0 1 1 1 0 0 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 4 | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [10, 15] | [0 1 0 1 1 1 1 1] | 0 1 1 1 1 0 1 1 1 0 0 0 1 1 0 0 1 0 0 1 0 1 1 0 0 0 0 0 0 1 1 1 1 1 0 0 1 0 0 1 0 1 1 0 0 0 0 0 0 1 1 1 0 1 1 1 1 0 1 1 1 0 0 0 |
| | [12, 13] | [0 0 1 1 1 0 1 1] | 0 0 0 0 0 1 1 1 0 1 1 1 1 0 1 1 1 0 0 0 1 1 0 0 1 0 0 1 0 1 1 0 0 1 1 0 0 0 0 0 0 1 1 1 0 1 1 1 1 0 1 1 1 0 0 0 1 1 0 0 1 0 0 1 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 5 | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [4, 2] | [0 0 1 0 0 1 0 0] | 0 1 0 1 0 0 1 0 0 0 1 0 1 1 1 0 1 1 0 1 1 0 0 1 1 1 0 0 0 0 1 1 0 0 1 0 1 1 1 0 1 1 0 1 1 0 0 1 1 1 0 0 0 0 1 1 0 1 0 1 0 0 1 0 |
| | [12, 5] | [0 0 1 1 1 0 1 0] | 0 0 0 0 0 1 1 1 0 1 1 1 1 0 1 1 1 0 0 0 1 1 0 0 1 0 0 1 0 1 1 0 0 0 1 1 0 1 0 1 0 0 1 0 0 0 1 0 1 1 1 0 1 1 0 1 1 0 0 1 1 1 0 0 |
| | [15, 7] | [1 1 1 1 1 1 1 0] | 1 1 0 0 1 0 0 1 0 1 1 0 0 0 0 0 0 1 1 1 0 1 1 1 1 0 1 1 1 0 0 0 1 0 0 1 1 1 0 0 0 0 1 1 0 1 0 1 0 0 1 0 0 0 1 0 1 1 1 0 1 1 0 1 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 6 (including the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [0, 5] | [0 0 0 0 1 0 1 0] | 1 1 0 1 1 0 0 1 1 1 0 0 0 0 1 1 0 1 0 1 0 0 1 0 0 0 1 0 1 1 1 0 0 0 1 1 0 1 0 1 0 0 1 0 0 0 1 0 1 1 1 0 1 1 0 1 1 0 0 1 1 1 0 0 |
| | [3, 7] | [1 1 0 0 1 1 1 0] | 0 0 1 0 0 0 1 0 1 1 1 0 1 1 0 1 1 0 0 1 1 1 0 0 0 0 1 1 0 1 0 1 1 0 0 1 1 1 0 0 0 0 1 1 0 1 0 1 0 0 1 0 0 0 1 0 1 1 1 0 1 1 0 1 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [11, 6] | [1 1 0 1 0 1 1 0] | 0 1 1 1 0 1 1 1 1 0 1 1 1 0 0 0 1 1 0 0 1 0 0 1 0 1 1 0 0 0 0 0 1 1 0 0 0 0 1 1 0 1 0 1 0 0 1 0 0 0 1 0 1 1 1 0 1 1 0 1 1 0 0 1 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 6 (excluding the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [1, 5] | [1 0 0 0 1 0 1 0] | 1 1 1 0 1 1 0 1 1 0 0 1 1 1 0 0 0 0 1 1 0 1 0 1 0 0 1 0 0 0 1 0 0 0 1 1 0 1 0 1 0 0 1 0 0 0 1 0 1 1 1 0 1 1 0 1 1 0 0 1 1 1 0 0 |
| | [2, 6] | [0 1 0 0 0 1 1 0] | 0 0 1 0 1 1 1 0 1 1 0 1 1 0 0 1 1 1 0 0 0 0 1 1 0 1 0 1 0 0 1 0 1 1 0 0 0 0 1 1 0 1 0 1 0 0 1 0 0 0 1 0 1 1 1 0 1 1 0 1 1 0 0 1 |
| | [3, 7] | [1 1 0 0 1 1 1 0] | 0 0 1 0 0 0 1 0 1 1 1 0 1 1 0 1 1 0 0 1 1 1 0 0 0 0 1 1 0 1 0 1 1 0 0 1 1 1 0 0 0 0 1 1 0 1 0 1 0 0 1 0 0 0 1 0 1 1 1 0 1 1 0 1 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 7 (including the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1, 4] | [1 0 0 0 0 0 1 0] | 1 1 1 0 1 1 0 1 1 0 0 1 1 1 0 0 0 0 1 1 0 1 0 1 0 0 1 0 0 0 1 0 0 1 0 1 0 0 1 0 0 0 1 0 1 1 1 0 1 1 0 1 1 0 0 1 1 1 0 0 0 0 1 1 |
| | [3, 5] | [1 1 0 0 1 0 1 0] | 0 0 1 0 0 0 1 0 1 1 1 0 1 1 0 1 1 0 0 1 1 1 0 0 0 0 1 1 0 1 0 1 0 0 1 1 0 1 0 1 0 0 1 0 0 0 1 0 1 1 1 0 1 1 0 1 1 0 0 1 1 1 0 0 |
| | [5, 15] | [1 0 1 0 1 1 1 1] | 0 0 1 1 0 1 0 1 0 0 1 0 0 0 1 0 1 1 1 0 1 1 0 1 1 0 0 1 1 1 0 0 1 1 0 0 1 0 0 1 0 1 1 0 0 0 0 0 0 1 1 1 0 1 1 1 1 0 1 1 1 0 0 0 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 7 (excluding the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [1, 7] | [1 0 0 0 1 1 1 0] | 1 1 1 0 1 1 0 1 1 0 0 1 1 1 0 0 0 0 1 1 0 1 0 1 0 0 1 0 0 0 1 0 1 0 0 1 1 1 0 0 0 0 1 1 0 1 0 1 0 0 1 0 0 0 1 0 1 1 1 0 1 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [4, 5] | [0 0 1 0 1 0 1 0] | 0 1 0 1 0 0 1 0 0 0 1 0 1 1 1 0 1 1 0 1 1 0 0 1 1 1 0 0 0 0 1 1 0 0 1 1 0 1 0 1 0 0 1 0 0 0 1 0 1 1 1 0 1 1 0 1 1 0 0 1 1 1 0 0 |
| | [5, 15] | [1 0 1 0 1 1 1 1] | 0 0 1 1 0 1 0 1 0 0 1 0 0 0 1 0 1 1 1 0 1 1 0 1 1 0 0 1 1 1 0 0 1 1 0 0 1 0 0 1 0 1 1 0 0 0 0 0 0 1 1 1 0 1 1 1 1 0 1 1 1 0 0 0 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 8 (including the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1, 2] | [1 0 0 0 0 1 0 0] | 1 1 1 0 1 1 0 1 1 0 0 1 1 1 0 0 0 0 1 1 0 1 0 1 0 0 1 0 0 0 1 0 0 0 1 0 1 1 1 0 1 1 0 1 1 0 0 1 1 1 0 0 0 0 1 1 0 1 0 1 0 0 1 0 |
| | [2, 6] | [0 1 0 0 0 1 1 0] | 0 0 1 0 1 1 1 0 1 1 0 1 1 0 0 1 1 1 0 0 0 0 1 1 0 1 0 1 0 0 1 0 1 1 0 0 0 0 1 1 0 1 0 1 0 0 1 0 0 0 1 0 1 1 1 0 1 1 0 1 1 0 0 1 |
| | [3, 4] | [1 1 0 0 0 0 1 0] | 0 0 1 0 0 0 1 0 1 1 1 0 1 1 0 1 1 0 0 1 1 1 0 0 0 0 1 1 0 1 0 1 0 1 0 1 0 0 1 0 0 0 1 0 1 1 1 0 1 1 0 1 1 0 0 1 1 1 0 0 0 0 1 1 |
| | [4, 5] | [0 0 1 0 1 0 1 0] | 0 1 0 1 0 0 1 0 0 0 1 0 1 1 1 0 1 1 0 1 1 0 0 1 1 1 0 0 0 0 1 1 0 0 1 1 0 1 0 1 0 0 1 0 0 0 1 0 1 1 1 0 1 1 0 1 1 0 0 1 1 1 0 0 |
| | [6, 1] | [0 1 1 0 1 0 0 0] | 1 1 0 0 0 0 1 1 0 1 0 1 0 0 1 0 0 0 1 0 1 1 1 0 1 1 0 1 1 0 0 1 1 1 1 0 1 1 0 1 1 0 0 1 1 1 0 0 0 0 1 1 0 1 0 1 0 0 1 0 0 0 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 8 (excluding the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [1, 7] | [1 0 0 0 1 1 1 0] | 1 1 1 0 1 1 0 1 1 0 0 1 1 1 0 0 0 0 1 1 0 1 0 1 0 0 1 0 0 0 1 0 1 0 0 1 1 1 0 0 0 0 1 1 0 1 0 1 0 0 1 0 0 0 1 0 1 1 1 0 1 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [3, 5] | [1 1 0 0 1 0 1 0] | 0 0 1 0 0 0 1 0 1 1 1 0 1 1 0 1 1 0 0 1 1 1 0 0 0 0 1 1 0 1 0 1 0 0 1 1 0 1 0 1 0 0 1 0 0 0 1 0 1 1 1 0 1 1 0 1 1 0 0 1 1 1 0 0 |
| | [4, 2] | [0 0 1 0 0 1 0 0] | 0 1 0 1 0 0 1 0 0 0 1 0 1 1 1 0 1 1 0 1 1 0 0 1 1 1 0 0 0 0 1 1 0 0 1 0 1 1 1 0 1 1 0 1 1 0 0 1 1 1 0 0 0 0 1 1 0 1 0 1 0 0 1 0 |
| | [5, 6] | [1 0 1 0 0 1 1 0] | 0 0 1 1 0 1 0 1 0 0 1 0 0 0 1 0 1 1 1 0 1 1 0 1 1 0 0 1 1 1 0 0 1 1 0 0 0 0 1 1 0 1 0 1 0 0 1 0 0 0 1 0 1 1 1 0 1 1 0 1 1 0 0 1 |
| | [6, 1] | [0 1 1 0 1 0 0 0] | 1 1 0 0 0 0 1 1 0 1 0 1 0 0 1 0 0 0 1 0 1 1 1 0 1 1 0 1 1 0 0 1 1 1 1 0 1 1 0 1 1 0 0 1 1 1 0 0 0 0 1 1 0 1 0 1 0 0 1 0 0 0 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 9 (including the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1, 2] | [1 0 0 0 0 1 0 0] | 1 1 1 0 1 1 0 1 1 0 0 1 1 1 0 0 0 0 1 1 0 1 0 1 0 0 1 0 0 0 1 0 0 0 1 0 1 1 1 0 1 1 0 1 1 0 0 1 1 1 0 0 0 0 1 1 0 1 0 1 0 0 1 0 |
| | [2, 5] | [0 1 0 0 1 0 1 0] | 0 0 1 0 1 1 1 0 1 1 0 1 1 0 0 1 1 1 0 0 0 0 1 1 0 1 0 1 0 0 1 0 0 0 1 1 0 1 0 1 0 0 1 0 0 0 1 0 1 1 1 0 1 1 0 1 1 0 0 1 1 1 0 0 |
| | [3, 4] | [1 1 0 0 0 0 1 0] | 0 0 1 0 0 0 1 0 1 1 1 0 1 1 0 1 1 0 0 1 1 1 0 0 0 0 1 1 0 1 0 1 0 1 0 1 0 0 1 0 0 0 1 0 1 1 1 0 1 1 0 1 1 0 0 1 1 1 0 0 0 0 1 1 |
| | [4, 3] | [0 0 1 0 1 1 0 0] | 0 1 0 1 0 0 1 0 0 0 1 0 1 1 1 0 1 1 0 1 1 0 0 1 1 1 0 0 0 0 1 1 0 0 1 0 0 0 1 0 1 1 1 0 1 1 0 1 1 0 0 1 1 1 0 0 0 0 1 1 0 1 0 1 |
| | [5, 6] | [1 0 1 0 0 1 1 0] | 0 0 1 1 0 1 0 1 0 0 1 0 0 0 1 0 1 1 1 0 1 1 0 1 1 0 0 1 1 1 0 0 1 1 0 0 0 0 1 1 0 1 0 1 0 0 1 0 0 0 1 0 1 1 1 0 1 1 0 1 1 0 0 1 |
| | [6, 0] | [0 1 1 0 0 0 0 0] | 1 1 0 0 0 0 1 1 0 1 0 1 0 0 1 0 0 0 1 0 1 1 1 0 1 1 0 1 1 0 0 1 1 1 0 1 1 0 0 1 1 1 0 0 0 0 1 1 0 1 0 1 0 0 1 0 0 0 1 0 1 1 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 9 (excluding the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [1, 7] | [1 0 0 0 1 1 1 0] | 1 1 1 0 1 1 0 1 1 0 0 1 1 1 0 0 0 0 1 1 0 1 0 1 0 0 1 0 0 0 1 0 1 0 0 1 1 1 0 0 0 0 1 1 0 1 0 1 0 0 1 0 0 0 1 0 1 1 1 0 1 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [3, 5] | [1 1 0 0 1 0 1 0] | 0 0 1 0 0 0 1 0 1 1 1 0 1 1 0 1 1 0 0 1 1 1 0 0 0 0 1 1 0 1 0 1 0 0 1 1 0 1 0 1 0 0 1 0 0 0 1 0 1 1 1 0 1 1 0 1 1 0 0 1 1 1 0 0 |
| | [4, 2] | [0 0 1 0 0 1 0 0] | 0 1 0 1 0 0 1 0 0 0 1 0 1 1 1 0 1 1 0 1 1 0 0 1 1 1 0 0 0 0 1 1 0 0 1 0 1 1 1 0 1 1 0 1 1 0 0 1 1 1 0 0 0 0 1 1 0 1 0 1 0 0 1 0 |
| | [5, 3] | [1 0 1 0 1 1 0 0] | 0 0 1 1 0 1 0 1 0 0 1 0 0 0 1 0 1 1 1 0 1 1 0 1 1 0 0 1 1 1 0 0 0 0 1 0 0 0 1 0 1 1 1 0 1 1 0 1 1 0 0 1 1 1 0 0 0 0 1 1 0 1 0 1 |
| | [6, 1] | [0 1 1 0 1 0 0 0] | 1 1 0 0 0 0 1 1 0 1 0 1 0 0 1 0 0 0 1 0 1 1 1 0 1 1 0 1 1 0 0 1 1 1 1 0 1 1 0 1 1 0 0 1 1 1 0 0 0 0 1 1 0 1 0 1 0 0 1 0 0 0 1 0 |
| | [15, 6] | [1 1 1 1 0 1 1 0] | 1 1 0 0 1 0 0 1 0 1 1 0 0 0 0 0 0 1 1 1 0 1 1 1 1 0 1 1 1 0 0 0 1 1 0 0 0 0 1 1 0 1 0 1 0 0 1 0 0 0 1 0 1 1 1 0 1 1 0 1 1 0 0 1 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 10 (including the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [0, 7] | [0 0 0 0 1 1 1 0] | 1 1 0 1 1 0 0 1 1 1 0 0 0 0 1 1 0 1 0 1 0 0 1 0 0 0 1 0 1 1 1 0 1 0 0 1 1 1 0 0 0 0 1 1 0 1 0 1 0 0 1 0 0 0 1 0 1 1 1 0 1 1 0 1 |
| | [1, 3] | [1 0 0 0 1 1 0 0] | 1 1 1 0 1 1 0 1 1 0 0 1 1 1 0 0 0 0 1 1 0 1 0 1 0 0 1 0 0 0 1 0 0 0 1 0 0 0 1 0 1 1 1 0 1 1 0 1 1 0 0 1 1 1 0 0 0 0 1 1 0 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [3, 5] | [1 1 0 0 1 0 1 0] | 0 0 1 0 0 0 1 0 1 1 1 0 1 1 0 1 1 0 0 1 1 1 0 0 0 0 1 1 0 1 0 1 0 0 1 1 0 1 0 1 0 0 1 0 0 0 1 0 1 1 1 0 1 1 0 1 1 0 0 1 1 1 0 0 |
| | [4, 1] | [0 0 1 0 1 0 0 0] | 0 1 0 1 0 0 1 0 0 0 1 0 1 1 1 0 1 1 0 1 1 0 0 1 1 1 0 0 0 0 1 1 1 1 1 0 1 1 0 1 1 0 0 1 1 1 0 0 0 0 1 1 0 1 0 1 0 0 1 0 0 0 1 0 |
| | [5, 2] | [1 0 1 0 0 1 0 0] | 0 0 1 1 0 1 0 1 0 0 1 0 0 0 1 0 1 1 1 0 1 1 0 1 1 0 0 1 1 1 0 0 0 0 1 0 1 1 1 0 1 1 0 1 1 0 0 1 1 1 0 0 0 0 1 1 0 1 0 1 0 0 1 0 |
| | [6, 6] | [0 1 1 0 0 1 1 0] | 1 1 0 0 0 0 1 1 0 1 0 1 0 0 1 0 0 0 1 0 1 1 1 0 1 1 0 1 1 0 0 1 1 1 0 0 0 0 1 1 0 1 0 1 0 0 1 0 0 0 1 0 1 1 1 0 1 1 0 1 1 0 0 1 |
| | [15, 0] | [1 1 1 1 0 0 0 0] | 1 1 0 0 1 0 0 1 0 1 1 0 0 0 0 0 0 1 1 1 0 1 1 1 1 0 1 1 1 0 0 0 1 1 0 1 1 0 0 1 1 1 0 0 0 0 1 1 0 1 0 1 0 0 1 0 0 0 1 0 1 1 1 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |
| 10 (excluding the data symbol 0) | [7, 10] | [1 1 1 0 0 1 0 1] | 1 0 0 1 1 1 0 0 0 0 1 1 0 1 0 1 0 0 1 0 0 0 1 0 1 1 1 0 1 1 0 1 0 1 1 1 1 0 1 1 1 0 0 0 1 1 0 0 1 0 0 1 0 1 1 0 0 0 0 0 0 1 1 1 |
| | [1, 7] | [1 0 0 0 1 1 1 0] | 1 1 1 0 1 1 0 1 1 0 0 1 1 1 0 0 0 0 1 1 0 1 0 1 0 0 1 0 0 0 1 0 1 0 0 1 1 1 0 0 0 0 1 1 0 1 0 1 0 0 1 0 0 0 1 0 1 1 1 0 1 1 0 1 |
| | [2, 4] | [0 1 0 0 0 0 1 0] | 0 0 1 0 1 1 1 0 1 1 0 1 1 0 0 1 1 1 0 0 0 0 1 1 0 1 0 1 0 0 1 0 0 1 0 1 0 0 1 0 0 0 1 0 1 1 1 0 1 1 0 1 1 0 0 1 1 1 0 0 0 0 1 1 |
| | [4, 5] | [0 0 1 0 1 0 1 0] | 0 1 0 1 0 0 1 0 0 0 1 0 1 1 1 0 1 1 0 1 1 0 0 1 1 1 0 0 0 0 1 1 0 0 1 1 0 1 0 1 0 0 1 0 0 0 1 0 1 1 1 0 1 1 0 1 1 0 0 1 1 1 0 0 |
| | [5, 3] | [1 0 1 0 1 1 0 0] | 0 0 1 1 0 1 0 1 0 0 1 0 0 0 1 0 1 1 1 0 1 1 0 1 1 0 0 1 1 1 0 0 0 0 1 0 0 0 1 0 1 1 1 0 1 1 0 1 1 0 0 1 1 1 0 0 0 0 1 1 0 1 0 1 |
| | [6, 2] | [0 1 1 0 0 1 0 0] | 1 1 0 0 0 0 1 1 0 1 0 1 0 0 1 0 0 0 1 0 1 1 1 0 1 1 0 1 1 0 0 1 0 0 1 0 1 1 1 0 1 1 0 1 1 0 0 1 1 1 0 0 0 0 1 1 0 1 0 1 0 0 1 0 |
| | [9, 1] | [1 0 0 1 1 0 0 0] | 1 0 1 1 1 0 0 0 1 1 0 0 1 0 0 1 0 1 1 0 0 0 0 0 0 1 1 1 0 1 1 1 1 1 1 0 1 1 0 1 1 0 0 1 1 1 0 0 0 0 1 1 0 1 0 1 0 0 1 0 0 0 1 0 |
| | [10, 6] | [0 1 0 1 0 1 1 0] | 0 1 1 1 1 0 1 1 1 0 0 0 1 1 0 0 1 0 0 1 0 1 1 0 0 0 0 0 0 1 1 1 1 1 0 0 0 0 1 1 0 1 0 1 0 0 1 0 0 0 1 0 1 1 1 0 1 1 0 1 1 0 0 1 |
| | [14, 15] | [0 1 1 1 1 1 1 1] | 1 0 0 1 0 1 1 0 0 0 0 0 0 1 1 1 0 1 1 1 1 0 1 1 1 0 0 0 1 1 0 0 1 1 0 0 1 0 0 1 0 1 1 0 0 0 0 0 0 1 1 1 0 1 1 1 1 0 1 1 1 0 0 0 |
| | [15, 15] | [1 1 1 1 1 1 1 1] | 1 1 0 0 1 0 0 1 0 1 1 0 0 0 0 0 0 1 1 1 0 1 1 1 1 0 1 1 1 0 0 0 1 1 0 0 1 0 0 1 0 1 1 0 0 0 0 0 0 1 1 1 0 1 1 1 1 0 1 1 1 0 0 0 |

In another example, some or all value sets of the SFD field selected based on a mapping table from data symbols to chip sequences shown in the following table 5 by using steps (1) to (3) are shown in the following table 6 and table 7. Any value set shown in Table 7 includes the existing value of the SFD field: 1 1 1 0 0 1 0 1.

It may be understood that the first value set in this embodiment of this application may include any M values in the following table 6 and/or table 7, the value of the SFD field may be selected from the first value set, and the value of the preamble field may be obtained by repeating the value in the first value set for one or more times.

**Table 5: Mapping table 2 from data symbols to chip sequences**

| Data symbol | Chip values (c₀, c₁, ..., C₃₀, and c₃₁) |
|---|---|
| Data symbol | Chip values |
| 0 | 1 1 1 1 0 1 0 0 0 1 0 0 1 1 0 1 0 1 1 0 0 1 1 1 1 0 1 0 1 0 0 1 |
| 1 | 1 0 0 1 1 1 1 1 0 1 0 0 0 1 0 0 1 1 0 1 0 1 1 0 0 1 1 1 1 0 1 0 |
| 2 | 1 0 1 0 1 0 0 1 1 1 1 1 0 1 0 0 0 1 0 0 1 1 0 1 0 1 1 0 0 1 1 1 |
| 3 | 0 1 1 1 1 0 1 0 1 0 0 1 1 1 1 1 0 1 0 0 0 1 0 0 1 1 0 1 0 1 1 0 |
| 4 | 0 1 1 0 0 1 1 1 1 0 1 0 1 0 0 1 1 1 1 1 0 1 0 0 0 1 0 0 1 1 0 1 |
| 5 | 1 1 0 1 0 1 1 0 0 1 1 1 1 0 1 0 1 0 0 1 1 1 1 1 0 1 0 0 0 1 0 0 |
| 6 | 0 1 0 0 1 1 0 1 0 1 1 0 0 1 1 1 1 0 1 0 1 0 0 1 1 1 1 1 0 1 0 0 |
| 7 | 0 1 0 0 0 1 0 0 1 1 0 1 0 1 1 0 0 1 1 1 1 0 1 0 1 0 0 1 1 1 1 1 |
| 8 | 1 0 1 0 0 0 0 1 0 0 0 1 1 0 0 0 0 0 1 1 0 0 1 0 1 1 1 1 1 1 0 0 |
| 9 | 1 1 0 0 1 0 1 0 0 0 0 1 0 0 0 1 1 0 0 0 0 0 1 1 0 0 1 0 1 1 1 1 |
| 10 | 1 1 1 1 1 1 0 0 1 0 1 0 0 0 0 1 0 0 0 1 1 0 0 0 0 0 1 1 0 0 1 0 |
| 11 | 0 0 1 0 1 1 1 1 1 1 0 0 1 0 1 0 0 0 0 1 0 0 0 1 1 0 0 0 0 0 1 1 |
| 12 | 0 0 1 1 0 0 1 0 1 1 1 1 1 1 0 0 1 0 1 0 0 0 0 1 0 0 0 1 1 0 0 0 |
| 13 | 1 0 0 0 0 0 1 1 0 0 1 0 1 1 1 1 1 1 0 0 1 0 1 0 0 0 0 1 0 0 0 1 |
| 14 | 0 0 0 1 1 0 0 0 0 0 1 1 0 0 1 0 1 1 1 1 1 1 0 0 1 0 1 0 0 0 0 1 |
| 15 | 0 0 0 1 0 0 0 1 1 0 0 0 0 0 1 1 0 0 1 0 1 1 1 1 1 1 0 0 1 0 1 0 |

**Table 6**

| Value of M | Data symbol corresponding to the SFD field | Value of the SFD field (8 bits) | Chip sequence corresponding to the SFD field |
|---|---|---|---|
| 1 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 2 | [10, 13] | [0 1 0 1 1 0 1 1] | 1 1 1 1 1 1 0 0 1 0 1 0 0 0 0 1 0 0 0 1 1 0 0 0 0 0 1 1 0 0 1 0 1 0 0 0 0 0 1 1 0 0 1 0 1 1 1 1 1 1 0 0 1 0 1 0 0 0 0 1 0 0 0 1 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 3 | [8, 15] | [0 0 0 1 1 1 1 1] | 1 0 1 0 0 0 0 1 0 0 0 1 1 0 0 0 0 0 1 1 0 0 1 0 1 1 1 1 1 1 0 0 0 0 0 1 0 0 0 1 1 0 0 0 0 0 1 1 0 0 1 0 1 1 1 1 1 1 0 0 1 0 1 0 |
| | [11, 10] | [1 1 0 1 0 1 0 1] | 0 0 1 0 1 1 1 1 1 1 0 0 1 0 1 0 0 0 0 1 0 0 0 1 1 0 0 0 0 0 1 1 1 1 1 1 1 1 0 0 1 0 1 0 0 0 0 1 0 0 0 1 1 0 0 0 0 0 1 1 0 0 1 0 |
| | [14, 13] | [0 1 1 1 1 0 1 1] | 0 0 0 1 1 0 0 0 0 0 1 1 0 0 1 0 1 1 1 1 1 1 0 0 1 0 1 0 0 0 0 1 1 0 0 0 0 0 1 1 0 0 1 0 1 1 1 1 1 1 0 0 1 0 1 0 0 0 0 1 0 0 0 1 |
| 4 | [10, 9] | [0 1 0 1 1 0 0 1] | 1 1 1 1 1 1 0 0 1 0 1 0 0 0 0 1 0 0 0 1 1 0 0 0 0 0 1 1 0 0 1 0 1 1 0 0 1 0 1 0 0 0 0 1 0 0 0 1 1 0 0 0 0 0 1 1 0 0 1 0 1 1 1 1 |
| | [12, 14] | [0 0 1 1 0 1 1 1] | 0 0 1 1 0 0 1 0 1 1 1 1 1 1 0 0 1 0 1 0 0 0 0 1 0 0 0 1 1 0 0 0 0 0 0 1 1 0 0 0 0 0 1 1 0 0 1 0 1 1 1 1 1 1 0 0 1 0 1 0 0 0 0 1 |
| | [13, 12] | [1 0 1 1 0 0 1 1] | 1 0 0 0 0 0 1 1 0 0 1 0 1 1 1 1 1 1 0 0 1 0 1 0 0 0 0 1 0 0 0 1 0 0 1 1 0 0 1 0 1 1 1 1 1 1 0 0 1 0 1 0 0 0 0 1 0 0 0 1 1 0 0 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 5 | [2, 5] | [0 1 0 0 1 0 1 0] | 1 0 1 0 1 0 0 1 1 1 1 1 0 1 0 0 0 1 0 0 1 1 0 1 0 1 1 0 0 1 1 1 1 1 0 1 0 1 1 0 0 1 1 1 1 0 1 0 1 0 0 1 1 1 1 1 0 1 0 0 0 1 0 0 |
| | [7, 13] | [1 1 1 0 1 0 1 1] | 0 1 0 0 0 1 0 0 1 1 0 1 0 1 1 0 0 1 1 1 1 0 1 0 1 0 0 1 1 1 1 1 1 0 0 0 0 0 1 1 0 0 1 0 1 1 1 1 1 1 0 0 1 0 1 0 0 0 0 1 0 0 0 1 |
| | [10, 10] | [0 1 0 1 0 1 0 1] | 1 1 1 1 1 1 0 0 1 0 1 0 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 |
| | [13, 8] | [1 0 1 1 0 0 0 1] | 1 0 0 0 0 0 1 1 0 0 1 0 1 1 1 1 1 1 0 0 1 0 1 0 0 0 0 1 0 0 0 1 1 0 1 0 0 0 0 1 0 0 0 1 1 0 0 0 0 0 1 1 0 0 1 0 1 1 1 1 1 1 0 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 6 | [1, 9] | [1 0 0 0 1 0 0 1] | 1 0 0 1 1 1 1 1 0 1 0 0 0 1 0 0 1 1 0 1 0 1 1 0 0 1 1 1 1 0 1 0 1 1 0 0 1 0 1 0 0 0 0 1 0 0 0 1 1 0 0 0 0 0 1 1 0 0 1 0 1 1 1 1 |
| | [4, 15] | [0 0 1 0 1 1 1 1] | 0 1 1 0 0 1 1 1 1 0 1 0 1 0 0 1 1 1 1 1 0 1 0 0 0 1 0 0 1 1 0 1 0 0 0 1 0 0 0 1 1 0 0 0 0 0 1 1 0 0 1 0 1 1 1 1 1 1 0 0 1 0 1 0 |
| | [7, 4] | [1 1 1 0 0 0 1 0] | 0 1 0 0 0 1 0 0 1 1 0 1 0 1 1 0 0 1 1 1 1 0 1 0 1 0 0 1 1 1 1 1 0 1 1 0 0 1 1 1 1 0 1 0 1 0 0 1 1 1 1 1 0 1 0 0 0 1 0 0 1 1 0 1 |
| | [9, 14] | [1 0 0 1 0 1 1 1] | 1 1 0 0 1 0 1 0 0 0 0 1 0 0 0 1 1 0 0 0 0 0 1 1 0 0 1 0 1 1 1 1 0 0 0 1 1 0 0 0 0 0 1 1 0 0 1 0 1 1 1 1 1 1 0 0 1 0 1 0 0 0 0 1 |
| | [12, 12] | [0 0 1 1 0 0 1 1] | 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 0 0 0 1 0 0 0 1 1 0 0 0 |
| | [15, 1] | [1 1 1 1 1 0 0 0] | 0 0 0 1 0 0 0 1 1 0 0 0 0 0 1 1 0 0 1 0 1 1 1 1 1 1 0 0 1 0 1 0 1 0 0 1 1 1 1 1 0 1 0 0 0 1 0 0 1 1 0 1 0 1 1 0 0 1 1 1 1 0 1 0 |
| 7 (including the data symbol 0) | [0, 14] | [0 0 0 0 0 1 1 1] | 1 1 1 1 0 1 0 0 0 1 0 0 1 1 0 1 0 1 1 0 0 1 1 1 1 0 1 0 1 0 0 1 0 0 0 1 1 0 0 0 0 0 1 1 0 0 1 0 1 1 1 1 1 1 0 0 1 0 1 0 0 0 0 1 |
| | [3, 4] | [1 1 0 0 0 0 1 0] | 0 1 1 1 1 0 1 0 1 0 0 1 1 1 1 1 0 1 0 0 0 1 0 0 1 1 0 1 0 1 1 0 0 1 1 0 0 1 1 1 1 0 1 0 1 0 0 1 1 1 1 1 0 1 0 0 0 1 0 0 1 1 0 1 |
| | [5, 6] | [1 0 1 0 0 1 1 0] | 1 1 0 1 0 1 1 0 0 1 1 1 1 0 1 0 1 0 0 1 1 1 1 1 0 1 0 0 0 1 0 0 0 1 0 0 1 1 0 1 0 1 1 0 0 1 1 1 1 0 1 0 1 0 0 1 1 1 1 1 0 1 0 0 |
| | [8, 1] | [0 0 0 1 1 0 0 0] | 1 0 1 0 0 0 0 1 0 0 0 1 1 0 0 0 0 0 1 1 0 0 1 0 1 1 1 1 1 1 0 0 1 0 0 1 1 1 1 1 0 1 0 0 0 1 0 0 1 1 0 1 0 1 1 0 0 1 1 1 1 0 1 0 |
| | [11, 15] | [1 1 0 1 1 1 1 1] | 0 0 1 0 1 1 1 1 1 1 0 0 1 0 1 0 0 0 0 1 0 0 0 1 1 0 0 0 0 0 1 1 0 0 0 1 0 0 0 1 1 0 0 0 0 0 1 1 0 0 1 0 1 1 1 1 1 1 0 0 1 0 1 0 |
| | [13, 12] | [1 0 1 1 0 0 1 1] | 1 0 0 0 0 0 1 1 0 0 1 0 1 1 1 1 1 1 0 0 1 0 1 0 0 0 0 1 0 0 0 1 0 0 1 1 0 0 1 0 1 1 1 1 1 1 0 0 1 0 1 0 0 0 0 1 0 0 0 1 1 0 0 0 |
| | [14, 9] | [0 1 1 1 1 0 0 1] | 0 0 0 1 1 0 0 0 0 0 1 1 0 0 1 0 1 1 1 1 1 1 0 0 1 0 1 0 0 0 0 1 1 1 0 0 1 0 1 0 0 0 0 1 0 0 0 1 1 0 0 0 0 0 1 1 0 0 1 0 1 1 1 1 |
| 7 (excluding the data symbol 0) | [1, 12] | [1 0 0 0 0 0 1 1] | 1 0 0 1 1 1 1 1 0 1 0 0 0 1 0 0 1 1 0 1 0 1 1 0 0 1 1 1 1 0 1 0 0 0 1 1 0 0 1 0 1 1 1 1 1 1 0 0 1 0 1 0 0 0 0 1 0 0 0 1 1 0 0 0 |
| | [3, 7] | [1 1 0 0 1 1 1 0] | 0 1 1 1 1 0 1 0 1 0 0 1 1 1 1 1 0 1 0 0 0 1 0 0 1 1 0 1 0 1 1 0 0 1 0 0 0 1 0 0 1 1 0 1 0 1 1 0 0 1 1 1 1 0 1 0 1 0 0 1 1 1 1 1 |
| | [6, 15] | [0 1 1 0 1 1 1 1] | 0 1 0 0 1 1 0 1 0 1 1 0 0 1 1 1 1 0 1 0 1 0 0 1 1 1 1 1 0 1 0 0 0 0 0 1 0 0 0 1 1 0 0 0 0 0 1 1 0 0 1 0 1 1 1 1 1 1 0 0 1 0 1 0 |
| | [8, 1] | [0 0 0 1 1 0 0 0] | 1 0 1 0 0 0 0 1 0 0 0 1 1 0 0 0 0 0 1 1 0 0 1 0 1 1 1 1 1 1 0 0 1 0 0 1 1 1 1 1 0 1 0 0 0 1 0 0 1 1 0 1 0 1 1 0 0 1 1 1 1 0 1 0 |
| | [11, 14] | [1 1 0 1 0 1 1 1] | 0 0 1 0 1 1 1 1 1 1 0 0 1 0 1 0 0 0 0 1 0 0 0 1 1 0 0 0 0 0 1 1 0 0 0 1 1 0 0 0 0 0 1 1 0 0 1 0 1 1 1 1 1 1 0 0 1 0 1 0 0 0 0 1 |
| | [13, 4] | [1 0 1 1 0 0 1 0] | 1 0 0 0 0 0 1 1 0 0 1 0 1 1 1 1 1 1 0 0 1 0 1 0 0 0 0 1 0 0 0 1 0 1 1 0 0 1 1 1 1 0 1 0 1 0 0 1 1 1 1 1 0 1 0 0 0 1 0 0 1 1 0 1 |
| | [14, 9] | [0 1 1 1 1 0 0 1] | 0 0 0 1 1 0 0 0 0 0 1 1 0 0 1 0 1 1 1 1 1 1 0 0 1 0 1 0 0 0 0 1 1 1 0 0 1 0 1 0 0 0 0 1 0 0 0 1 1 0 0 0 0 0 1 1 0 0 1 0 1 1 1 1 |
| 8 (including the data symbol 0) | [0, 15] | [0 0 0 0 1 1 1 1] | 1 1 1 1 0 1 0 0 0 1 0 0 1 1 0 1 0 1 1 0 0 1 1 1 1 0 1 0 1 0 0 1 0 0 0 1 0 0 0 1 1 0 0 0 0 0 1 1 0 0 1 0 1 1 1 1 1 1 0 0 1 0 1 0 |
| | [3, 13] | [1 1 0 0 1 0 1 1] | 0 1 1 1 1 0 1 0 1 0 0 1 1 1 1 1 0 1 0 0 0 1 0 0 1 1 0 1 0 1 1 0 1 0 0 0 0 0 1 1 0 0 1 0 1 1 1 1 1 1 0 0 1 0 1 0 0 0 0 1 0 0 0 1 |
| | [6, 2] | [0 1 1 0 0 1 0 0] | 0 1 0 0 1 1 0 1 0 1 1 0 0 1 1 1 1 0 1 0 1 0 0 1 1 1 1 1 0 1 0 0 1 0 1 0 1 0 0 1 1 1 1 1 0 1 0 0 0 1 0 0 1 1 0 1 0 1 1 0 0 1 1 1 |
| | [8, 8] | [0 0 0 1 0 0 0 1] | 1 0 1 0 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 |
| | [9, 10] | [1 0 0 1 0 1 0 1] | 1 1 0 0 1 0 1 0 0 0 0 1 0 0 0 1 1 0 0 0 0 0 1 1 0 0 1 0 1 1 1 1 1 1 1 1 1 1 0 0 1 0 1 0 0 0 0 1 0 0 0 1 1 0 0 0 0 0 1 1 0 0 1 0 |
| | [11, 7] | [1 1 0 1 1 1 1 0] | 0 0 1 0 1 1 1 1 1 1 0 0 1 0 1 0 0 0 0 1 0 0 0 1 1 0 0 0 0 0 1 1 0 1 0 0 0 1 0 0 1 1 0 1 0 1 1 0 0 1 1 1 1 0 1 0 1 0 0 1 1 1 1 1 |
| | [13, 12] | [1 0 1 1 0 0 1 1] | 1 0 0 0 0 0 1 1 0 0 1 0 1 1 1 1 1 1 0 0 1 0 1 0 0 0 0 1 0 0 0 1 0 0 1 1 0 0 1 0 1 1 1 1 1 1 0 0 1 0 1 0 0 0 0 1 0 0 0 1 1 0 0 0 |
| | [14, 5] | [0 1 1 1 1 0 1 0] | 0 0 0 1 1 0 0 0 0 0 1 1 0 0 1 0 1 1 1 1 1 1 0 0 1 0 1 0 0 0 0 1 1 1 0 1 0 1 1 0 0 1 1 1 1 0 1 0 1 0 0 1 1 1 1 1 0 1 0 0 0 1 0 0 |
| 8 (excluding the data symbol 0) | [1, 15] | [1 0 0 0 1 1 1 1] | 1 0 0 1 1 1 1 1 0 1 0 0 0 1 0 0 1 1 0 1 0 1 1 0 0 1 1 1 1 0 1 0 0 0 0 1 0 0 0 1 1 0 0 0 0 0 1 1 0 0 1 0 1 1 1 1 1 1 0 0 1 0 1 0 |
| | [4, 9] | [0 0 1 0 1 0 0 1] | 0 1 1 0 0 1 1 1 1 0 1 0 1 0 0 1 1 1 1 1 0 1 0 0 0 1 0 0 1 1 0 1 1 1 0 0 1 0 1 0 0 0 0 1 0 0 0 1 1 0 0 0 0 0 1 1 0 0 1 0 1 1 1 1 |
| | [6, 7] | [0 1 1 0 1 1 1 0] | 0 1 0 0 1 1 0 1 0 1 1 0 0 1 1 1 1 0 1 0 1 0 0 1 1 1 1 1 0 1 0 0 0 1 0 0 0 1 0 0 1 1 0 1 0 1 1 0 0 1 1 1 1 0 1 0 1 0 0 1 1 1 1 1 |
| | [7, 12] | [1 1 1 0 0 0 1 1] | 0 1 0 0 0 1 0 0 1 1 0 1 0 1 1 0 0 1 1 1 1 0 1 0 1 0 0 1 1 1 1 1 0 0 1 1 0 0 1 0 1 1 1 1 1 1 0 0 1 0 1 0 0 0 0 1 0 0 0 1 1 0 0 0 |
| | [10, 4] | [0 1 0 1 0 0 1 0] | 1 1 1 1 1 1 0 0 1 0 1 0 0 0 0 1 0 0 0 1 1 0 0 0 0 0 1 1 0 0 1 0 0 1 1 0 0 1 1 1 1 0 1 0 1 0 0 1 1 1 1 1 0 1 0 0 0 1 0 0 1 1 0 1 |
| | [12, 1] | [0 0 1 1 1 0 0 0] | 0 0 1 1 0 0 1 0 1 1 1 1 1 1 0 0 1 0 1 0 0 0 0 1 0 0 0 1 1 0 0 0 1 0 0 1 1 1 1 1 0 1 0 0 0 1 0 0 1 1 0 1 0 1 1 0 0 1 1 1 1 0 1 0 |
| | [14, 10] | [0 1 1 1 0 1 0 1] | 0 0 0 1 1 0 0 0 0 0 1 1 0 0 1 0 1 1 1 1 1 1 0 0 1 0 1 0 0 0 0 1 1 1 1 1 1 1 0 0 1 0 1 0 0 0 0 1 0 0 0 1 1 0 0 0 0 0 1 1 0 0 1 0 |
| | [15, 14] | [1 1 1 1 0 1 1 1] | 0 0 0 1 0 0 0 1 1 0 0 0 0 0 1 1 0 0 1 0 1 1 1 1 1 1 0 0 1 0 1 0 0 0 0 1 1 0 0 0 0 0 1 1 0 0 1 0 1 1 1 1 1 1 0 0 1 0 1 0 0 0 0 1 |
| 9 (including the data symbol 0) | [0, 12] | [0 0 0 0 0 0 1 1] | 1 1 1 1 0 1 0 0 0 1 0 0 1 1 0 1 0 1 1 0 0 1 1 1 1 0 1 0 1 0 0 1 0 0 1 1 0 0 1 0 1 1 1 1 1 1 0 0 1 0 1 0 0 0 0 1 0 0 0 1 1 0 0 0 |
| | [1, 9] | [1 0 0 0 1 0 0 1] | 1 0 0 1 1 1 1 1 0 1 0 0 0 1 0 0 1 1 0 1 0 1 1 0 0 1 1 1 1 0 1 0 1 1 0 0 1 0 1 0 0 0 0 1 0 0 0 1 1 0 0 0 0 0 1 1 0 0 1 0 1 1 1 1 |
| | [2, 4] | [0 1 0 0 0 0 1 0] | 1 0 1 0 1 0 0 1 1 1 1 1 0 1 0 0 0 1 0 0 1 1 0 1 0 1 1 0 0 1 1 1 0 1 1 0 0 1 1 1 1 0 1 0 1 0 0 1 1 1 1 1 0 1 0 0 0 1 0 0 1 1 0 1 |
| | [3, 14] | [1 1 0 0 0 1 1 1] | 0 1 1 1 1 0 1 0 1 0 0 1 1 1 1 1 0 1 0 0 0 1 0 0 1 1 0 1 0 1 1 0 0 0 0 1 1 0 0 0 0 0 1 1 0 0 1 0 1 1 1 1 1 1 0 0 1 0 1 0 0 0 0 1 |
| | [4, 6] | [0 0 1 0 0 1 1 0] | 0 1 1 0 0 1 1 1 1 0 1 0 1 0 0 1 1 1 1 1 0 1 0 0 0 1 0 0 1 1 0 1 0 1 0 0 1 1 0 1 0 1 1 0 0 1 1 1 1 0 1 0 1 0 0 1 1 1 1 1 0 1 0 0 |
| | [6, 7] | [0 1 1 0 1 1 1 0] | 0 1 0 0 1 1 0 1 0 1 1 0 0 1 1 1 1 0 1 0 1 0 0 1 1 1 1 1 0 1 0 0 0 1 0 0 0 1 0 0 1 1 0 1 0 1 1 0 0 1 1 1 1 0 1 0 1 0 0 1 1 1 1 1 |
| | [12, 15] | [0 0 1 1 1 1 1 1] | 0 0 1 1 0 0 1 0 1 1 1 1 1 1 0 0 1 0 1 0 0 0 0 1 0 0 0 1 1 0 0 0 0 0 0 1 0 0 0 1 1 0 0 0 0 0 1 1 0 0 1 0 1 1 1 1 1 1 0 0 1 0 1 0 |
| | [13, 11] | [1 0 1 1 1 1 0 1] | 1 0 0 0 0 0 1 1 0 0 1 0 1 1 1 1 1 1 0 0 1 0 1 0 0 0 0 1 0 0 0 1 0 0 1 0 1 1 1 1 1 1 0 0 1 0 1 0 0 0 0 1 0 0 0 1 1 0 0 0 0 0 1 1 |
| | [15, 1] | [1 1 1 1 1 0 0 0] | 0 0 0 1 0 0 0 1 1 0 0 0 0 0 1 1 0 0 1 0 1 1 1 1 1 1 0 0 1 0 1 0 1 0 0 1 1 1 1 1 0 1 0 0 0 1 0 0 1 1 0 1 0 1 1 0 0 1 1 1 1 0 1 0 |
| 9 (excluding the data symbol 0) | [1, 12] | [1 0 0 0 0 0 1 1] | 1 0 0 1 1 1 1 1 0 1 0 0 0 1 0 0 1 1 0 1 0 1 1 0 0 1 1 1 1 0 1 0 0 0 1 1 0 0 1 0 1 1 1 1 1 1 0 0 1 0 1 0 0 0 0 1 0 0 0 1 1 0 0 0 |
| | [2, 4] | [0 1 0 0 0 0 1 0] | 1 0 1 0 1 0 0 1 1 1 1 1 0 1 0 0 0 1 0 0 1 1 0 1 0 1 1 0 0 1 1 1 0 1 1 0 0 1 1 1 1 0 1 0 1 0 0 1 1 1 1 1 0 1 0 0 0 1 0 0 1 1 0 1 |
| | [3, 14] | [1 1 0 0 0 1 1 1] | 0 1 1 1 1 0 1 0 1 0 0 1 1 1 1 1 0 1 0 0 0 1 0 0 1 1 0 1 0 1 1 0 0 0 0 1 1 0 0 0 0 0 1 1 0 0 1 0 1 1 1 1 1 1 0 0 1 0 1 0 0 0 0 1 |
| | [4, 9] | [0 0 1 0 1 0 0 1] | 0 1 1 0 0 1 1 1 1 0 1 0 1 0 0 1 1 1 1 1 0 1 0 0 0 1 0 0 1 1 0 1 1 1 0 0 1 0 1 0 0 0 0 1 0 0 0 1 1 0 0 0 0 0 1 1 0 0 1 0 1 1 1 1 |
| | [5, 11] | [1 0 1 0 1 1 0 1] | 1 1 0 1 0 1 1 0 0 1 1 1 1 0 1 0 1 0 0 1 1 1 1 1 0 1 0 0 0 1 0 0 0 0 1 0 1 1 1 1 1 1 0 0 1 0 1 0 0 0 0 1 0 0 0 1 1 0 0 0 0 0 1 1 |
| | [6, 7] | [0 1 1 0 1 1 1 0] | 0 1 0 0 1 1 0 1 0 1 1 0 0 1 1 1 1 0 1 0 1 0 0 1 1 1 1 1 0 1 0 0 0 1 0 0 0 1 0 0 1 1 0 1 0 1 1 0 0 1 1 1 1 0 1 0 1 0 0 1 1 1 1 1 |
| | [7, 15] | [1 1 1 0 1 1 1 1] | 0 1 0 0 0 1 0 0 1 1 0 1 0 1 1 0 0 1 1 1 1 0 1 0 1 0 0 1 1 1 1 1 0 0 0 1 0 0 0 1 1 0 0 0 0 0 1 1 0 0 1 0 1 1 1 1 1 1 0 0 1 0 1 0 |
| | [8, 6] | [0 0 0 1 0 1 1 0] | 1 0 1 0 0 0 0 1 0 0 0 1 1 0 0 0 0 0 1 1 0 0 1 0 1 1 1 1 1 1 0 0 0 1 0 0 1 1 0 1 0 1 1 0 0 1 1 1 1 0 1 0 1 0 0 1 1 1 1 1 0 1 0 0 |
| | [15, 1] | [1 1 1 1 1 0 0 0] | 0 0 0 1 0 0 0 1 1 0 0 0 0 0 1 1 0 0 1 0 1 1 1 1 1 1 0 0 1 0 1 0 1 0 0 1 1 1 1 1 0 1 0 0 0 1 0 0 1 1 0 1 0 1 1 0 0 1 1 1 1 0 1 0 |
| 10 (including the data symbol 0) | [0, 11] | [0 0 0 0 1 1 0 1] | 1 1 1 1 0 1 0 0 0 1 0 0 1 1 0 1 0 1 1 0 0 1 1 1 1 0 1 0 1 0 0 1 0 0 1 0 1 1 1 1 1 1 0 0 1 0 1 0 0 0 0 1 0 0 0 1 1 0 0 0 0 0 1 1 |
| | [1, 3] | [1 0 0 0 1 1 0 0] | 1 0 0 1 1 1 1 1 0 1 0 0 0 1 0 0 1 1 0 1 0 1 1 0 0 1 1 1 1 0 1 0 0 1 1 1 1 0 1 0 1 0 0 1 1 1 1 1 0 1 0 0 0 1 0 0 1 1 0 1 0 1 1 0 |
| | [2, 6] | [0 1 0 0 0 1 1 0] | 1 0 1 0 1 0 0 1 1 1 1 1 0 1 0 0 0 1 0 0 1 1 0 1 0 1 1 0 0 1 1 1 0 1 0 0 1 1 0 1 0 1 1 0 0 1 1 1 1 0 1 0 1 0 0 1 1 1 1 1 0 1 0 0 |
| | [3, 10] | [1 1 0 0 0 1 0 1] | 0 1 1 1 1 0 1 0 1 0 0 1 1 1 1 1 0 1 0 0 0 1 0 0 1 1 0 1 0 1 1 0 1 1 1 1 1 1 0 0 1 0 1 0 0 0 0 1 0 0 0 1 1 0 0 0 0 0 1 1 0 0 1 0 |
| | [5, 5] | [1 0 1 0 1 0 1 0] | 1 1 0 1 0 1 1 0 0 1 1 1 1 0 1 0 1 0 0 1 1 1 1 1 0 1 0 0 0 1 0 0 1 1 0 1 0 1 1 0 0 1 1 1 1 0 1 0 1 0 0 1 1 1 1 1 0 1 0 0 0 1 0 0 |
| | [6, 13] | [0 1 1 0 1 0 1 1] | 0 1 0 0 1 1 0 1 0 1 1 0 0 1 1 1 1 0 1 0 1 0 0 1 1 1 1 1 0 1 0 0 1 0 0 0 0 0 1 1 0 0 1 0 1 1 1 1 1 1 0 0 1 0 1 0 0 0 0 1 0 0 0 1 |
| | [8, 8] | [0 0 0 1 0 0 0 1] | 1 0 1 0 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 |
| | [10, 9] | [0 1 0 1 1 0 0 1] | 1 1 1 1 1 1 0 0 1 0 1 0 0 0 0 1 0 0 0 1 1 0 0 0 0 0 1 1 0 0 1 0 1 1 0 0 1 0 1 0 0 0 0 1 0 0 0 1 1 0 0 0 0 0 1 1 0 0 1 0 1 1 1 1 |
| | [12, 14] | [0 0 1 1 0 1 1 1] | 0 0 1 1 0 0 1 0 1 1 1 1 1 1 0 0 1 0 1 0 0 0 0 1 0 0 0 1 1 0 0 0 0 0 0 1 1 0 0 0 0 0 1 1 0 0 1 0 1 1 1 1 1 1 0 0 1 0 1 0 0 0 0 1 |
| | [15, 0] | [1 1 1 1 0 0 0 0] | 0 0 0 1 0 0 0 1 1 0 0 0 0 0 1 1 0 0 1 0 1 1 1 1 1 1 0 0 1 0 1 0 1 1 1 1 0 1 0 0 0 1 0 0 1 1 0 1 0 1 1 0 0 1 1 1 1 0 1 0 1 0 0 1 |
| 10 (excluding the data symbol 0) | [1, 12] | [1 0 0 0 0 0 1 1] | 1 0 0 1 1 1 1 1 0 1 0 0 0 1 0 0 1 1 0 1 0 1 1 0 0 1 1 1 1 0 1 0 0 0 1 1 0 0 1 0 1 1 1 1 1 1 0 0 1 0 1 0 0 0 0 1 0 0 0 1 1 0 0 0 |
| | [2, 4] | [0 1 0 0 0 0 1 0] | 1 0 1 0 1 0 0 1 1 1 1 1 0 1 0 0 0 1 0 0 1 1 0 1 0 1 1 0 0 1 1 1 0 1 1 0 0 1 1 1 1 0 1 0 1 0 0 1 1 1 1 1 0 1 0 0 0 1 0 0 1 1 0 1 |
| | [3, 7] | [1 1 0 0 1 1 1 0] | 0 1 1 1 1 0 1 0 1 0 0 1 1 1 1 1 0 1 0 0 0 1 0 0 1 1 0 1 0 1 1 0 0 1 0 0 0 1 0 0 1 1 0 1 0 1 1 0 0 1 1 1 1 0 1 0 1 0 0 1 1 1 1 1 |
| | [4, 11] | [0 0 1 0 1 1 0 1] | 0 1 1 0 0 1 1 1 1 0 1 0 1 0 0 1 1 1 1 1 0 1 0 0 0 1 0 0 1 1 0 1 0 0 1 0 1 1 1 1 1 1 0 0 1 0 1 0 0 0 0 1 0 0 0 1 1 0 0 0 0 0 1 1 |
| | [6, 6] | [0 1 1 0 0 1 1 0] | 0 1 0 0 1 1 0 1 0 1 1 0 0 1 1 1 1 0 1 0 1 0 0 1 1 1 1 1 0 1 0 0 0 1 0 0 1 1 0 1 0 1 1 0 0 1 1 1 1 0 1 0 1 0 0 1 1 1 1 1 0 1 0 0 |
| | [7, 14] | [1 1 1 0 0 1 1 1] | 0 1 0 0 0 1 0 0 1 1 0 1 0 1 1 0 0 1 1 1 1 0 1 0 1 0 0 1 1 1 1 1 0 0 0 1 1 0 0 0 0 0 1 1 0 0 1 0 1 1 1 1 1 1 0 0 1 0 1 0 0 0 0 1 |
| | [9, 9] | [1 0 0 1 1 0 0 1] | 1 1 0 0 1 0 1 0 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 |
| | [11, 10] | [1 1 0 1 0 1 0 1] | 0 0 1 0 1 1 1 1 1 1 0 0 1 0 1 0 0 0 0 1 0 0 0 1 1 0 0 0 0 0 1 1 1 1 1 1 1 1 0 0 1 0 1 0 0 0 0 1 0 0 0 1 1 0 0 0 0 0 1 1 0 0 1 0 |
| | [13, 15] | [1 0 1 1 1 1 1 1] | 1 0 0 0 0 0 1 1 0 0 1 0 1 1 1 1 1 1 0 0 1 0 1 0 0 0 0 1 0 0 0 1 0 0 0 1 0 0 0 1 1 0 0 0 0 0 1 1 0 0 1 0 1 1 1 1 1 1 0 0 1 0 1 0 |
| | [15, 1] | [1 1 1 1 1 0 0 0] | 0 0 0 1 0 0 0 1 1 0 0 0 0 0 1 1 0 0 1 0 1 1 1 1 1 1 0 0 1 0 1 0 1 0 0 1 1 1 1 1 0 1 0 0 0 1 0 0 1 1 0 1 0 1 1 0 0 1 1 1 1 0 1 0 |

**Table 7**

| Value of M | Data symbol corresponding to the SFD field | Value of the SFD field (8 bits) | Chip sequence corresponding to the SFD field |
|---|---|---|---|
| 1 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 2 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 3 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [13, 15] | [1 0 1 1 1 1 1 1] | 1 0 0 0 0 0 1 1 0 0 1 0 1 1 1 1 1 1 0 0 1 0 1 0 0 0 0 1 0 0 0 1 0 0 0 1 0 0 0 1 1 0 0 0 0 0 1 1 0 0 1 0 1 1 1 1 1 1 0 0 1 0 1 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 4 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [10, 15] | [0 1 0 1 1 1 1 1] | 1 1 1 1 1 1 0 0 1 0 1 0 0 0 0 1 0 0 0 1 1 0 0 0 0 0 1 1 0 0 1 0 0 0 0 1 0 0 0 1 1 0 0 0 0 0 1 1 0 0 1 0 1 1 1 1 1 1 0 0 1 0 1 0 |
| | [13, 13] | [1 0 1 1 1 0 1 1] | 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 0 0 0 1 0 0 0 1 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 5 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [1, 15] | [1 0 0 0 1 1 1 1] | 1 0 0 1 1 1 1 1 0 1 0 0 0 1 0 0 1 1 0 1 0 1 1 0 0 1 1 1 1 0 1 0 0 0 0 1 0 0 0 1 1 0 0 0 0 0 1 1 0 0 1 0 1 1 1 1 1 1 0 0 1 0 1 0 |
| | [4, 13] | [0 0 1 0 1 0 1 1] | 0 1 1 0 0 1 1 1 1 0 1 0 1 0 0 1 1 1 1 1 0 1 0 0 0 1 0 0 1 1 0 1 1 0 0 0 0 0 1 1 0 0 1 0 1 1 1 1 1 1 0 0 1 0 1 0 0 0 0 1 0 0 0 1 |
| | [15, 12] | [1 1 1 1 0 0 1 1] | 0 0 0 1 0 0 0 1 1 0 0 0 0 0 1 1 0 0 1 0 1 1 1 1 1 1 0 0 1 0 1 0 0 0 1 1 0 0 1 0 1 1 1 1 1 1 0 0 1 0 1 0 0 0 0 1 0 0 0 1 1 0 0 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 6 | [7, 10] | [11100101] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [2, 5] | [0 1 0 0 1 0 1 0] | 1 0 1 0 1 0 0 1 1 1 1 1 0 1 0 0 0 1 0 0 1 1 0 1 0 1 1 0 0 1 1 1 1 1 0 1 0 1 1 0 0 1 1 1 1 0 1 0 1 0 0 1 1 1 1 1 0 1 0 0 0 1 0 0 |
| | [12, 13] | [0 0 1 1 1 0 1 1] | 0 0 1 1 0 0 1 0 1 1 1 1 1 1 0 0 1 0 1 0 0 0 0 1 0 0 0 1 1 0 0 0 1 0 0 0 0 0 1 1 0 0 1 0 1 1 1 1 1 1 0 0 1 0 1 0 0 0 0 1 0 0 0 1 |
| | [13, 8] | [1 0 1 1 0 0 0 1] | 1 0 0 0 0 0 1 1 0 0 1 0 1 1 1 1 1 1 0 0 1 0 1 0 0 0 0 1 0 0 0 1 1 0 1 0 0 0 0 1 0 0 0 1 1 0 0 0 0 0 1 1 0 0 1 0 1 1 1 1 1 1 0 0 |
| | [15, 11] | [1 1 1 1 1 1 0 1] | 0 0 0 1 0 0 0 1 1 0 0 0 0 0 1 1 0 0 1 0 1 1 1 1 1 1 0 0 1 0 1 0 0 0 1 0 1 1 1 1 1 1 0 0 1 0 1 0 0 0 0 1 0 0 0 1 1 0 0 0 0 0 1 1 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 7 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [2, 7] | [0 1 0 0 1 1 1 0] | 1 0 1 0 1 0 0 1 1 1 1 1 0 1 0 0 0 1 0 0 1 1 0 1 0 1 1 0 0 1 1 1 0 1 0 0 0 1 0 0 1 1 0 1 0 1 1 0 0 1 1 1 1 0 1 0 1 0 0 1 1 1 1 1 |
| | [10, 13] | [0 1 0 1 1 0 1 1] | 1 1 1 1 1 1 0 0 1 0 1 0 0 0 0 1 0 0 0 1 1 0 0 0 0 0 1 1 0 0 1 0 1 0 0 0 0 0 1 1 0 0 1 0 1 1 1 1 1 1 0 0 1 0 1 0 0 0 0 1 0 0 0 1 |
| | [12, 15] | [0 0 1 1 1 1 1 1] | 0 0 1 1 0 0 1 0 1 1 1 1 1 1 0 0 1 0 1 0 0 0 0 1 0 0 0 1 1 0 0 0 0 0 0 1 0 0 0 1 1 0 0 0 0 0 1 1 0 0 1 0 1 1 1 1 1 1 0 0 1 0 1 0 |
| | [13, 2] | [1 0 1 1 0 1 0 0] | 1 0 0 0 0 0 1 1 0 0 1 0 1 1 1 1 1 1 0 0 1 0 1 0 0 0 0 1 0 0 0 1 1 0 1 0 1 0 0 1 1 1 1 1 0 1 0 0 0 1 0 0 1 1 0 1 0 1 1 0 0 1 1 1 |
| | [15, 12] | [1 1 1 1 0 0 1 1] | 0 0 0 1 0 0 0 1 1 0 0 0 0 0 1 1 0 0 1 0 1 1 1 1 1 1 0 0 1 0 1 0 0 0 1 1 0 0 1 0 1 1 1 1 1 1 0 0 1 0 1 0 0 0 0 1 0 0 0 1 1 0 0 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 8 | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [1, 2] | [1 0 0 0 0 1 0 0] | 1 0 0 1 1 1 1 1 0 1 0 0 0 1 0 0 1 1 0 1 0 1 1 0 0 1 1 1 1 0 1 0 1 0 1 0 1 0 0 1 1 1 1 1 0 1 0 0 0 1 0 0 1 1 0 1 0 1 1 0 0 1 1 1 |
| | [4, 15] | [0 0 1 0 1 1 1 1] | 0 1 1 0 0 1 1 1 1 0 1 0 1 0 0 1 1 1 1 1 0 1 0 0 0 1 0 0 1 1 0 1 0 0 0 1 0 0 0 1 1 0 0 0 0 0 1 1 0 0 1 0 1 1 1 1 1 1 0 0 1 0 1 0 |
| | [9, 5] | [1 0 0 1 1 0 1 0] | 1 1 0 0 1 0 1 0 0 0 0 1 0 0 0 1 1 0 0 0 0 0 1 1 0 0 1 0 1 1 1 1 1 1 0 1 0 1 1 0 0 1 1 1 1 0 1 0 1 0 0 1 1 1 1 1 0 1 0 0 0 1 0 0 |
| | [12, 7] | [0 0 1 1 1 1 1 0] | 0 0 1 1 0 0 1 0 1 1 1 1 1 1 0 0 1 0 1 0 0 0 0 1 0 0 0 1 1 0 0 0 0 1 0 0 0 1 0 0 1 1 0 1 0 1 1 0 0 1 1 1 1 0 1 0 1 0 0 1 1 1 1 1 |
| | [14, 12] | [0 1 1 1 0 0 1 1] | 0 0 0 1 1 0 0 0 0 0 1 1 0 0 1 0 1 1 1 1 1 1 0 0 1 0 1 0 0 0 0 1 0 0 1 1 0 0 1 0 1 1 1 1 1 1 0 0 1 0 1 0 0 0 0 1 0 0 0 1 1 0 0 0 |
| | [15, 13] | [1 1 1 1 1 0 1 1] | 0 0 0 1 0 0 0 1 1 0 0 0 0 0 1 1 0 0 1 0 1 1 1 1 1 1 0 0 1 0 1 0 1 0 0 0 0 0 1 1 0 0 1 0 1 1 1 1 1 1 0 0 1 0 1 0 0 0 0 1 0 0 0 1 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 9 (including the data symbol 0) | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [2, 5] | [0 1 0 0 1 0 1 0] | 1 0 1 0 1 0 0 1 1 1 1 1 0 1 0 0 0 1 0 0 1 1 0 1 0 1 1 0 0 1 1 1 1 1 0 1 0 1 1 0 0 1 1 1 1 0 1 0 1 0 0 1 1 1 1 1 0 1 0 0 0 1 0 0 |
| | [4, 13] | [0 0 1 0 1 0 1 1] | 0 1 1 0 0 1 1 1 1 0 1 0 1 0 0 1 1 1 1 1 0 1 0 0 0 1 0 0 1 1 0 1 1 0 0 0 0 0 1 1 0 0 1 0 1 1 1 1 1 1 0 0 1 0 1 0 0 0 0 1 0 0 0 1 |
| | [9, 7] | [1 0 0 1 1 1 1 0] | 1 1 0 0 1 0 1 0 0 0 0 1 0 0 0 1 1 0 0 0 0 0 1 1 0 0 1 0 1 1 1 1 0 1 0 0 0 1 0 0 1 1 0 1 0 1 1 0 0 1 1 1 1 0 1 0 1 0 0 1 1 1 1 1 |
| | [10, 8] | [0 1 0 1 0 0 0 1] | 1 1 1 1 1 1 0 0 1 0 1 0 0 0 0 1 0 0 0 1 1 0 0 0 0 0 1 1 0 0 1 0 1 0 1 0 0 0 0 1 0 0 0 1 1 0 0 0 0 0 1 1 0 0 1 0 1 1 1 1 1 1 0 0 |
| | [12, 2] | [0 0 1 1 0 1 0 0] | 0 0 1 1 0 0 1 0 1 1 1 1 1 1 0 0 1 0 1 0 0 0 0 1 0 0 0 1 1 0 0 0 1 0 1 0 1 0 0 1 1 1 1 1 0 1 0 0 0 1 0 0 1 1 0 1 0 1 1 0 0 1 1 1 |
| | [14, 12] | [0 1 1 1 0 0 1 1] | 0 0 0 1 1 0 0 0 0 0 1 1 0 0 1 0 1 1 1 1 1 1 0 0 1 0 1 0 0 0 0 1 0 0 1 1 0 0 1 0 1 1 1 1 1 1 0 0 1 0 1 0 0 0 0 1 0 0 0 1 1 0 0 0 |
| | [15, 0] | [1 1 1 1 0 0 0 0] | 0 0 0 1 0 0 0 1 1 0 0 0 0 0 1 1 0 0 1 0 1 1 1 1 1 1 0 0 1 0 1 0 1 1 1 1 0 1 0 0 0 1 0 0 1 1 0 1 0 1 1 0 0 1 1 1 1 0 1 0 1 0 0 1 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 9 (excluding the data symbol 0) | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [1, 15] | [1 0 0 0 1 1 1 1] | 1 0 0 1 1 1 1 1 0 1 0 0 0 1 0 0 1 1 0 1 0 1 1 0 0 1 1 1 1 0 1 0 0 0 0 1 0 0 0 1 1 0 0 0 0 0 1 1 0 0 1 0 1 1 1 1 1 1 0 0 1 0 1 0 |
| | [4, 2] | [0 0 1 0 0 1 0 0] | 0 1 1 0 0 1 1 1 1 0 1 0 1 0 0 1 1 1 1 1 0 1 0 0 0 1 0 0 1 1 0 1 1 0 1 0 1 0 0 1 1 1 1 1 0 1 0 0 0 1 0 0 1 1 0 1 0 1 1 0 0 1 1 1 |
| | [6, 8] | [0 1 1 0 0 0 0 1] | 0 1 0 0 1 1 0 1 0 1 1 0 0 1 1 1 1 0 1 0 1 0 0 1 1 1 1 1 0 1 0 0 1 0 1 0 0 0 0 1 0 0 0 1 1 0 0 0 0 0 1 1 0 0 1 0 1 1 1 1 1 1 0 0 |
| | [9, 12] | [1 0 0 1 0 0 1 1] | 1 1 0 0 1 0 1 0 0 0 0 1 0 0 0 1 1 0 0 0 0 0 1 1 0 0 1 0 1 1 1 1 0 0 1 1 0 0 1 0 1 1 1 1 1 1 0 0 1 0 1 0 0 0 0 1 0 0 0 1 1 0 0 0 |
| | [12, 13] | [0 0 1 1 1 0 1 1] | 0 0 1 1 0 0 1 0 1 1 1 1 1 1 0 0 1 0 1 0 0 0 0 1 0 0 0 1 1 0 0 0 1 0 0 0 0 0 1 1 0 0 1 0 1 1 1 1 1 1 0 0 1 0 1 0 0 0 0 1 0 0 0 1 |
| | [14, 7] | [0 1 1 1 1 1 1 0] | 0 0 0 1 1 0 0 0 0 0 1 1 0 0 1 0 1 1 1 1 1 1 0 0 1 0 1 0 0 0 0 1 0 1 0 0 0 1 0 0 1 1 0 1 0 1 1 0 0 1 1 1 1 0 1 0 1 0 0 1 1 1 1 1 |
| | [15, 5] | [1 1 1 1 1 0 1 0] | 0 0 0 1 0 0 0 1 1 0 0 0 0 0 1 1 0 0 1 0 1 1 1 1 1 1 0 0 1 0 1 0 1 1 0 1 0 1 1 0 0 1 1 1 1 0 1 0 1 0 0 1 1 1 1 1 0 1 0 0 0 1 0 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 10 (including the data symbol 0) | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| | [0, 15] | [0 0 0 0 1 1 1 1] | 1 1 1 1 0 1 0 0 0 1 0 0 1 1 0 1 0 1 1 0 0 1 1 1 1 0 1 0 1 0 0 1 0 0 0 1 0 0 0 1 1 0 0 0 0 0 1 1 0 0 1 0 1 1 1 1 1 1 0 0 1 0 1 0 |
| | [1, 7] | [1 0 0 0 1 1 1 0] | 1 0 0 1 1 1 1 1 0 1 0 0 0 1 0 0 1 1 0 1 0 1 1 0 0 1 1 1 1 0 1 0 0 1 0 0 0 1 0 0 1 1 0 1 0 1 1 0 0 1 1 1 1 0 1 0 1 0 0 1 1 1 1 1 |
| | [2, 2] | [0 1 0 0 0 1 0 0] | 1 0 1 0 1 0 0 1 1 1 1 1 0 1 0 0 0 1 0 0 1 1 0 1 0 1 1 0 0 1 1 1 1 0 1 0 1 0 0 1 1 1 1 1 0 1 0 0 0 1 0 0 1 1 0 1 0 1 1 0 0 1 1 1 |
| | [4, 13] | [0 0 1 0 1 0 1 1] | 0 1 1 0 0 1 1 1 1 0 1 0 1 0 0 1 1 1 1 1 0 1 0 0 0 1 0 0 1 1 0 1 1 0 0 0 0 0 1 1 0 0 1 0 1 1 1 1 1 1 0 0 1 0 1 0 0 0 0 1 0 0 0 1 |
| | [6, 12] | [0 1 1 0 0 0 1 1] | 0 1 0 0 1 1 0 1 0 1 1 0 0 1 1 1 1 0 1 0 1 0 0 1 1 1 1 1 0 1 0 0 0 0 1 1 0 0 1 0 1 1 1 1 1 1 0 0 1 0 1 0 0 0 0 1 0 0 0 1 1 0 0 0 |
| | [12, 4] | [0 0 1 1 0 0 1 0] | 0 0 1 1 0 0 1 0 1 1 1 1 1 1 0 0 1 0 1 0 0 0 0 1 0 0 0 1 1 0 0 0 0 1 1 0 0 1 1 1 1 0 1 0 1 0 0 1 1 1 1 1 0 1 0 0 0 1 0 0 1 1 0 1 |
| | [14, 9] | [0 1 1 1 1 0 0 1] | 0 0 0 1 1 0 0 0 0 0 1 1 0 0 1 0 1 1 1 1 1 1 0 0 1 0 1 0 0 0 0 1 1 1 0 0 1 0 1 0 0 0 0 1 0 0 0 1 1 0 0 0 0 0 1 1 0 0 1 0 1 1 1 1 |
| | [15, 5] | [1 1 1 1 1 0 1 0] | 0 0 0 1 0 0 0 1 1 0 0 0 0 0 1 1 0 0 1 0 1 1 1 1 1 1 0 0 1 0 1 0 1 1 0 1 0 1 1 0 0 1 1 1 1 0 1 0 1 0 0 1 1 1 1 1 0 1 0 0 0 1 0 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |
| 10 (excluding the data symbol 0) | [7, 10] | [1 1 1 0 0 1 0 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 11 1 0 0 1 0 1 0 |
| | [1, 15] | [1 0 0 0 1 1 1 1] | 1 0 0 1 1 1 1 1 0 1 0 0 0 1 0 0 1 1 0 1 0 1 1 0 0 1 1 1 1 0 1 0 0 0 0 1 0 0 0 1 1 0 0 0 0 0 1 1 0 0 1 0 1 1 1 1 1 1 0 0 1 0 1 0 |
| | [2, 9] | [0 1 0 0 1 0 0 1] | 1 0 1 0 1 0 0 1 1 1 1 1 0 1 0 0 0 1 0 0 1 1 0 1 0 1 1 0 0 1 1 1 1 1 0 0 1 0 1 0 0 0 0 1 0 0 0 1 1 0 0 0 0 0 1 1 0 0 1 0 1 1 1 1 |
| | [3, 14] | [1 1 0 0 0 1 1 1] | 0 1 1 1 1 0 1 0 1 0 0 1 1 1 1 1 0 1 0 0 0 1 0 0 1 1 0 1 0 1 1 0 0 0 0 1 1 0 0 0 0 0 1 1 0 0 1 0 1 1 1 1 1 1 0 0 1 0 1 0 0 0 0 1 |
| | [4, 7] | [0 0 1 0 1 1 1 0] | 0 1 1 0 0 1 1 1 1 0 1 0 1 0 0 1 1 1 1 1 0 1 0 0 0 1 0 0 1 1 0 1 0 1 0 0 0 1 0 0 1 1 0 1 0 1 1 0 0 1 1 1 1 0 1 0 1 0 0 1 1 1 1 1 |
| | [5, 12] | [1 0 1 0 0 0 1 1] | 1 1 0 1 0 1 1 0 0 1 1 1 1 0 1 0 1 0 0 1 1 1 1 1 0 1 0 0 0 1 0 0 0 0 1 1 0 0 1 0 1 1 1 1 1 1 0 0 1 0 1 0 0 0 0 1 0 0 0 1 1 0 0 0 |
| | [6, 4] | [0 1 1 0 0 0 1 0] | 0 1 0 0 1 1 0 1 0 1 1 0 0 1 1 1 1 0 1 0 1 0 0 1 1 1 1 1 0 1 0 0 0 1 1 0 0 1 1 1 1 0 1 0 1 0 0 1 1 1 1 1 0 1 0 0 0 1 0 0 1 1 0 1 |
| | [8, 6] | [0 0 0 1 0 1 1 0] | 1 0 1 0 0 0 0 1 0 0 0 1 1 0 0 0 0 0 1 1 0 0 1 0 1 1 1 1 1 1 0 0 0 1 0 0 1 1 0 1 0 1 1 0 0 1 1 1 1 0 1 0 1 0 0 1 1 1 1 1 0 1 0 0 |
| | [15, 1] | [1 1 1 1 1 0 0 0] | 0 0 0 1 0 0 0 1 1 0 0 0 0 0 1 1 0 0 1 0 1 1 1 1 1 1 0 0 1 0 1 0 1 0 0 1 1 1 1 1 0 1 0 0 0 1 0 0 1 1 0 1 0 1 1 0 0 1 1 1 1 0 1 0 |
| | [15, 15] | [1 1 1 1 1 1 1 1] | 0 0 0 1 0 0 0 1 1 0 0 0 0 0 1 1 0 0 1 0 1 1 1 1 1 1 0 0 1 0 1 0 0 0 0 1 0 0 0 1 1 0 0 0 0 0 1 1 0 0 1 0 1 1 1 1 1 1 0 0 1 0 1 0 |

In still another example, some or all value sets of the SFD field selected based on a mapping table from data symbols to chip sequences shown in the following table 8 by using steps (1) to (3) are shown in the following table 9 and table 10. Any value set shown in Table 10 includes the existing value of the SFD field: 1 1 1 0 0 1 0 1.

It may be understood that the first value set in this embodiment of this application may include any M values in the following table 9 and/or table 10, the value of the SFD field may be selected from the first value set, and the value of the preamble field may be obtained by repeating the value in the first value set for one or more times.

**Table 8: Mapping table 3 from data symbols to chip sequences**

| Data symbol | Chip values (c₀, c₁, ..., C₃₀, and c₃₁) |
|---|---|
| Data symbol | Chip values |
| 0 | 1 0 0 1 1 1 0 1 0 1 1 0 0 0 1 1 0 0 0 1 0 1 0 0 0 1 0 0 0 1 0 0 |
| 1 | 1 0 1 0 1 0 1 1 0 1 1 1 1 1 1 1 1 0 0 1 0 0 1 0 1 1 1 1 1 0 0 1 |
| 2 | 1 1 1 1 0 0 1 0 1 0 1 0 1 1 0 1 1 1 1 1 1 1 1 0 0 1 0 0 1 0 1 1 |
| 3 | 0 1 1 1 1 0 0 1 0 1 0 1 0 1 1 0 1 1 1 1 1 1 1 1 0 0 1 0 0 1 0 1 |
| 4 | 1 0 1 0 1 1 1 1 1 0 0 1 0 1 0 1 0 1 1 0 1 1 1 1 1 1 1 1 0 0 1 0 |
| 5 | 1 1 0 0 0 0 0 1 0 0 0 0 1 0 0 1 0 0 1 0 0 1 1 1 0 0 1 0 1 1 1 0 |
| 6 | 1 0 1 0 0 0 0 0 1 0 0 0 0 1 0 0 1 0 0 1 0 0 1 1 1 0 0 1 0 1 1 1 |
| 7 | 1 0 1 1 1 0 1 0 0 0 0 0 1 0 0 0 0 1 0 0 1 0 0 1 0 0 1 1 1 0 0 1 |
| 8 | 0 1 1 0 0 1 0 1 1 1 0 1 0 0 0 0 0 1 0 0 0 0 1 0 0 1 0 0 1 0 0 1 |
| 9 | 0 0 0 1 0 1 0 0 0 1 1 1 1 0 0 0 1 0 0 0 1 1 1 1 1 1 1 0 0 0 1 1 |
| 10 | 0 1 0 1 0 0 1 1 1 1 0 0 1 1 0 0 1 1 0 0 0 1 0 0 1 1 1 1 0 1 0 0 |
| 11 | 0 0 1 0 0 1 0 0 0 1 1 0 1 1 1 0 0 1 1 0 1 1 1 0 1 0 0 1 1 1 0 0 |
| 12 | 1 1 0 1 1 1 0 0 1 1 0 1 1 1 0 1 0 0 1 1 1 0 0 0 1 0 0 1 0 0 0 1 |
| 13 | 0 0 0 0 0 0 1 1 1 0 1 1 0 0 1 0 0 0 1 1 1 0 0 0 0 0 0 1 1 0 1 0 |
| 14 | 0 1 0 1 1 0 0 0 0 0 1 1 0 1 1 1 1 1 0 0 0 1 0 1 1 0 0 1 1 0 1 0 |
| 15 | 0 1 1 0 1 1 0 0 1 1 0 0 1 0 1 1 1 1 0 1 1 0 0 1 1 1 1 0 1 1 1 0 |

**Table 9**

| Value of M | Data symbol corresponding to the SFD field | Value of the SFD field (8 bits) | Chip sequence corresponding to the SFD field |
|---|---|---|---|
| 1 (including the data symbol 0) | [0, 0] | [0 0 0 0 0 0 0 0] | 1 0 0 1 1 1 0 1 0 1 1 0 0 0 1 1 0 0 0 1 0 1 0 0 0 1 0 0 0 1 0 0 1 0 0 1 1 1 0 1 0 1 1 0 0 0 1 1 0 0 0 1 0 1 0 0 0 1 0 0 0 1 0 0 |
| 1 (including the data symbol 0) | [0, 13] | [0 0 0 0 0 1 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| 1 (including the data symbol 0) | [13, 0] | [1 0 1 1 1 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| 1 (excluding the data symbol 0) | [13, 13] | [1 0 1 1 0 1 1 1] | 0 0 0 0 0 0 1 1 1 0 1 1 0 0 1 0 0 0 1 1 1 0 0 0 0 0 0 1 1 0 1 0 0 0 0 0 0 0 1 1 1 0 1 1 0 0 1 0 0 0 1 1 1 0 0 0 0 0 0 1 1 0 1 0 |
| 2 (including the data symbol 0) | [0, 7] | [0 0 0 0 1 1 1 0] | 1 0 0 1 1 1 0 1 0 1 1 0 0 0 1 1 0 0 0 1 0 1 0 0 0 1 0 0 0 1 0 0 1 0 1 1 1 0 1 0 0 0 0 0 1 0 0 0 0 1 0 0 1 0 0 1 0 0 1 1 1 0 0 1 |
| | [7, 0] | [1 1 1 0 0 0 0 0] | 1 0 1 1 1 0 1 0 0 0 0 0 1 0 0 0 0 1 0 0 1 0 0 1 0 0 1 1 1 0 0 1 1 0 0 1 1 1 0 1 0 1 1 0 0 0 1 1 0 0 0 1 0 1 0 0 0 1 0 0 0 1 0 0 |
| 2 (excluding the data symbol 0) | [12, 13] | [0 0 1 1 1 0 1 1] | 1 1 0 1 1 1 0 0 1 1 0 1 1 1 0 1 0 0 1 1 1 0 0 0 1 0 0 1 0 0 0 1 0 0 0 0 0 0 1 1 1 0 1 1 0 0 1 0 0 0 1 1 1 0 0 0 0 0 0 1 1 0 1 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 3 (including the data symbol 0) | [0, 7] | [0 0 0 0 1 1 1 0] | 1 0 0 1 1 1 0 1 0 1 1 0 0 0 1 1 0 0 0 1 0 1 0 0 0 1 0 0 0 1 0 0 1 0 1 1 1 0 1 0 0 0 0 0 1 0 0 0 0 1 0 0 1 0 0 1 0 0 1 1 1 0 0 1 |
| | [7, 0] | [1 1 1 0 0 0 0 0] | 1 0 1 1 1 0 1 0 0 0 0 0 1 0 0 0 0 1 0 0 1 0 0 1 0 0 1 1 1 0 0 1 1 0 0 1 1 1 0 1 0 1 1 0 0 0 1 1 0 0 0 1 0 1 0 0 0 1 0 0 0 1 0 0 |
| | [15, 6] | [1 1 1 1 0 1 1 0] | 0 1 1 0 1 1 0 0 1 1 0 0 1 0 1 1 1 1 0 1 1 0 0 1 1 1 1 0 1 1 1 0 1 0 1 0 0 0 0 0 1 0 0 0 0 1 0 0 1 0 0 1 0 0 1 1 1 0 0 1 0 1 1 1 |
| 3 (excluding the data symbol 0) | [1, 13] | [1 0 0 0 1 0 1 1] | 10 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [5, 15] | [1 0 1 0 1 1 1 1] | 1 1 0 0 0 0 0 1 0 0 0 0 1 0 0 1 0 0 1 0 0 11 1 0 0 1 0 1 1 1 0 0 1 1 0 1 1 0 0 1 1 0 0 1 0 1 1 1 1 0 1 1 0 0 1 1 1 1 0 1 1 1 0 |
| | [12, 10] | [0 0 1 1 0 1 0 1] | 1 1 0 1 1 1 0 0 1 1 0 1 1 1 0 1 0 0 1 1 1 0 0 0 1 0 0 1 0 0 0 1 0 1 0 1 0 0 1 1 1 1 0 0 1 1 0 0 1 1 0 0 0 1 0 0 1 1 1 1 0 1 0 0 |
| 4 (including the data symbol 0) | [0, 7] | [0 0 0 0 1 1 1 0] | 1 0 0 1 1 1 0 1 0 1 1 0 0 0 1 1 0 0 0 1 0 1 0 0 0 1 0 0 0 1 0 0 1 0 1 1 1 0 1 0 0 0 0 0 1 0 0 0 0 1 0 0 1 0 0 1 0 0 1 1 1 0 0 1 |
| | [2, 6] | [0 1 0 0 0 1 1 0] | 1 1 1 1 0 0 1 0 1 0 1 0 1 1 0 1 1 1 1 1 1 1 1 0 0 1 0 0 1 0 1 1 1 0 1 0 0 0 0 0 1 0 0 0 0 1 0 0 1 0 0 1 0 0 1 1 1 0 0 1 0 1 1 1 |
| | [7, 0] | [1 1 1 0 0 0 0 0] | 1 0 1 1 1 0 1 0 0 0 0 0 1 0 0 0 0 1 0 0 1 0 0 1 0 0 1 1 1 0 0 1 1 0 0 1 1 1 0 1 0 1 1 0 0 0 1 1 0 0 0 1 0 1 0 0 0 1 0 0 0 1 0 0 |
| | [15, 4] | [1 1 1 1 0 0 1 0] | 0 1 1 0 1 1 0 0 1 1 0 0 1 0 1 1 1 1 0 1 1 0 0 1 1 1 1 0 1 1 1 0 1 0 1 0 1 1 1 1 1 0 0 1 0 1 0 1 0 1 1 0 1 1 1 1 1 1 1 1 0 0 1 0 |
| 4 (excluding the data symbol 0) | [1, 12] | [1 0 0 0 0 0 1 1] | 1 0 1 0 1 0 1 1 0 1 1 1 1 1 1 1 1 0 0 1 0 0 1 0 1 1 1 1 1 0 0 1 1 1 0 1 1 1 0 0 1 1 0 1 1 1 0 1 0 0 1 1 1 0 0 0 1 0 0 1 0 0 0 1 |
| | [5, 15] | [1 0 1 0 1 1 1 1] | 1 1 0 0 0 0 0 1 0 0 0 0 1 0 0 1 0 0 1 0 0 1 1 1 0 0 1 0 1 1 1 0 0 1 1 0 1 1 0 0 1 1 0 0 1 0 1 1 1 1 0 1 1 0 0 1 1 1 1 0 1 1 1 0 |
| | [12, 13] | [0 0 1 1 1 0 1 1] | 1 1 0 1 1 1 0 0 1 1 0 1 1 1 0 1 0 0 1 1 1 0 0 0 1 0 0 1 0 0 0 1 0 0 0 0 0 0 1 1 1 0 1 1 0 0 1 0 0 0 1 1 1 0 0 0 0 0 0 1 1 0 1 0 |
| | [15, 5] | [1 1 1 1 1 0 1 0] | 0 1 1 0 1 1 0 0 1 1 0 0 1 0 1 1 1 1 0 1 1 0 0 1 1 1 1 0 1 1 1 0 1 1 0 0 0 0 0 1 0 0 0 0 1 0 0 1 0 0 1 0 0 1 1 1 0 0 1 0 1 1 1 0 |
| 5 (including the data symbol 0) | [0, 7] | [0 0 0 0 1 1 1 0] | 1 0 0 1 1 1 0 1 0 1 1 0 0 0 1 1 0 0 0 1 0 1 0 0 0 1 0 0 0 1 0 0 1 0 1 1 1 0 1 0 0 0 0 0 1 0 0 0 0 1 0 0 1 0 0 1 0 0 1 1 1 0 0 1 |
| | [1, 15] | [1 0 0 0 1 1 1 1] | 1 0 1 0 1 0 1 1 0 1 1 1 1 1 1 1 1 0 0 1 0 0 1 0 1 1 1 1 1 0 0 1 0 1 1 0 1 1 0 0 1 1 0 0 1 0 1 1 1 1 0 1 1 0 0 1 1 1 1 0 1 1 1 0 |
| | [2, 13] | [0 1 0 0 1 0 1 1] | 1 1 1 1 0 0 1 0 1 0 1 0 1 1 0 1 1 1 1 1 1 1 1 0 0 1 0 0 1 0 1 1 0 0 0 0 0 0 1 1 1 0 1 1 0 0 1 0 0 0 1 1 1 0 0 0 0 0 0 1 1 0 1 0 |
| | [5, 10] | [1 0 1 0 0 1 0 1] | 1 1 0 0 0 0 0 1 0 0 0 0 1 0 0 1 0 0 1 0 0 1 1 1 0 0 1 0 1 1 1 0 0 1 0 1 0 0 1 1 1 1 0 0 1 1 0 0 1 1 0 0 0 1 0 0 1 1 1 1 0 1 0 0 |
| | [15, 0] | [1 1 1 1 0 0 0 0] | 0 1 1 0 1 1 0 0 1 1 0 0 1 0 1 1 1 1 0 1 1 0 0 1 1 1 1 0 1 1 1 0 1 0 0 1 1 1 0 1 0 1 1 0 0 0 1 1 0 0 0 1 0 1 0 0 0 1 0 0 0 1 0 0 |
| 5 (excluding the data symbol 0) | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [2, 5] | [0 1 0 0 1 0 1 0] | 1 1 1 1 0 0 1 0 1 0 1 0 1 1 0 1 1 1 1 1 1 1 1 0 0 1 0 0 1 0 1 1 1 1 0 0 0 0 0 1 0 0 0 0 1 0 0 1 0 0 1 0 0 1 1 1 0 0 1 0 1 1 1 0 |
| | [5, 10] | [1 0 1 0 0 1 0 1] | 1 1 0 0 0 0 0 1 0 0 0 0 1 0 0 1 0 0 1 0 0 1 1 1 0 0 1 0 1 1 1 0 0 1 0 1 0 0 1 1 1 1 0 0 1 1 0 0 1 1 0 0 0 1 0 0 1 1 1 1 0 1 0 0 |
| | [12, 12] | [0 0 1 1 0 0 1 1] | 1 1 0 1 1 1 0 0 1 1 0 1 1 1 0 1 0 0 1 1 1 0 0 0 1 0 0 1 0 0 0 1 1 1 0 1 1 1 0 0 1 1 0 1 1 1 0 1 0 0 1 1 1 0 0 0 1 0 0 1 0 0 0 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 6 (including the data symbol 0) | [0, 15] | [0 0 0 0 1 1 1 1] | 1 0 0 1 1 1 0 1 0 1 1 0 0 0 1 1 0 0 0 1 0 1 0 0 0 1 0 0 0 1 0 0 0 1 1 0 1 1 0 0 1 1 0 0 1 0 1 1 1 1 0 1 1 0 0 1 1 1 1 0 1 1 1 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [2, 10] | [0 1 0 0 0 1 0 1] | 1 1 1 1 0 0 1 0 1 0 1 0 1 1 0 1 1 1 1 1 1 1 1 0 0 1 0 0 1 0 1 1 0 1 0 1 0 0 1 1 1 1 0 0 1 1 0 0 1 1 0 0 0 1 0 0 1 1 1 1 0 1 0 0 |
| | [5, 7] | [1 0 1 0 1 1 1 0] | 1 1 0 0 0 0 0 1 0 0 0 0 1 0 0 1 0 0 1 0 0 1 1 1 0 0 1 0 1 1 1 0 1 0 1 1 1 0 1 0 0 0 0 0 1 0 0 0 0 1 0 0 1 0 0 1 0 0 1 1 1 0 0 1 |
| | [12, 0] | [0 0 1 1 0 0 0 0] | 1 1 0 1 1 1 0 0 1 1 0 1 1 1 0 1 0 0 1 1 1 0 0 0 1 0 0 1 0 0 0 1 1 0 0 1 1 1 0 1 0 1 1 0 0 0 1 1 0 0 0 1 0 1 0 0 0 1 0 0 0 1 0 0 |
| | [15, 6] | [1 1 1 1 0 1 1 0] | 0 1 1 0 1 1 0 0 1 1 0 0 1 0 1 1 1 1 0 1 1 0 0 1 1 1 1 0 1 1 1 0 1 0 1 0 0 0 0 0 1 0 0 0 0 1 0 0 1 0 0 1 0 0 1 1 1 0 0 1 0 1 1 1 |
| 6 (excluding the data symbol 0) | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [2, 12] | [0 1 0 0 0 0 1 1] | 1 1 1 1 0 0 1 0 1 0 1 0 1 1 0 1 1 1 1 1 1 1 1 0 0 1 0 0 1 0 1 1 1 1 0 1 1 1 0 0 1 1 0 1 1 1 0 1 0 0 1 1 1 0 0 0 1 0 0 1 0 0 0 1 |
| | [3, 15] | [1 1 0 0 1 1 1 1] | 0 1 1 1 1 0 0 1 0 1 0 1 0 1 1 0 1 1 1 1 1 1 1 1 0 0 1 0 0 1 0 1 0 1 1 0 1 1 0 0 1 1 0 0 1 0 1 1 1 1 0 1 1 0 0 1 1 1 1 0 1 1 1 0 |
| | [5, 5] | [1 0 1 0 1 0 1 0] | 1 1 0 0 0 0 0 1 0 0 0 0 1 0 0 1 0 0 1 0 0 1 1 1 0 0 1 0 1 1 1 0 1 1 0 0 0 0 0 1 0 0 0 0 1 0 0 1 0 0 1 0 0 1 1 1 0 0 1 0 1 1 1 0 |
| | [13, 1] | [1 0 1 1 1 0 0 0] | 0 0 0 0 0 0 1 1 1 0 1 1 0 0 1 0 0 0 1 1 1 0 0 0 0 0 0 1 1 0 1 0 1 0 1 0 1 0 1 1 0 1 1 1 1 1 1 1 1 0 0 1 0 0 1 0 1 1 1 1 1 0 0 1 |
| | [15, 10] | [1 1 1 1 0 1 0 1] | 0 1 1 0 1 1 0 0 1 1 0 0 1 0 1 1 1 1 0 1 1 0 0 1 1 1 1 0 1 1 1 0 0 1 0 1 0 0 1 1 1 1 0 0 1 1 0 0 1 1 0 0 0 1 0 0 1 1 1 1 0 1 0 0 |
| 7 (including the data symbol 0) | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 10] | [0 1 0 0 0 1 0 1] | 1 1 1 1 0 0 1 0 1 0 1 0 1 1 0 1 1 1 1 1 1 1 1 0 0 1 0 0 1 0 1 1 0 1 0 1 0 0 1 1 1 1 0 0 1 1 0 0 1 1 0 0 0 1 0 0 1 1 1 1 0 1 0 0 |
| | [4, 6] | [0 0 1 0 0 1 1 0] | 1 0 1 0 1 1 1 1 1 0 0 1 0 1 0 1 0 1 1 0 1 1 1 1 1 1 1 1 0 0 1 0 1 0 1 0 0 0 0 0 1 0 0 0 0 1 0 0 1 0 0 1 0 0 1 1 1 0 0 1 0 1 1 1 |
| | [9, 9] | [1 0 0 1 1 0 0 1] | 0 0 0 1 0 1 0 0 0 1 1 1 1 0 0 0 1 0 0 0 1 1 1 1 1 1 1 0 0 0 1 1 0 0 0 1 0 1 0 0 0 1 1 1 1 0 0 0 1 0 0 0 1 1 1 1 1 1 1 0 0 0 1 1 |
| | [10, 7] | [0 1 0 1 1 1 1 0] | 0 1 0 1 0 0 1 1 1 1 0 0 1 1 0 0 1 1 0 0 0 1 0 0 1 1 1 1 0 1 0 0 1 0 1 1 1 0 1 0 0 0 0 0 1 0 0 0 0 1 0 0 1 0 0 1 0 0 1 1 1 0 0 1 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 7 (excluding the data symbol 0) | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [2, 5] | [0 1 0 0 1 0 1 0] | 1 1 1 1 0 0 1 0 1 0 1 0 1 1 0 1 1 1 1 1 1 1 1 0 0 1 0 0 1 0 1 1 1 1 0 0 0 0 0 1 0 0 0 0 1 0 0 1 0 0 1 0 0 1 1 1 0 0 1 0 1 1 1 0 |
| | [3, 12] | [1 1 0 0 0 0 1 1] | 0 1 1 1 1 0 0 1 0 1 0 1 0 1 1 0 1 1 1 1 1 1 1 1 0 0 1 0 0 1 0 1 1 1 0 1 1 1 0 0 1 1 0 1 1 1 0 1 0 0 1 1 1 0 0 0 1 0 0 1 0 0 0 1 |
| | [5, 10] | [1 0 1 0 0 1 0 1] | 1 1 0 0 0 0 0 1 0 0 0 0 1 0 0 1 0 0 1 0 0 1 1 1 0 0 1 0 1 1 1 0 0 1 0 1 0 0 1 1 1 1 0 0 1 1 0 0 1 1 0 0 0 1 0 0 1 1 1 1 0 1 0 0 |
| | [8, 9] | [0 0 0 1 1 0 0 1] | 0 1 1 0 0 1 0 1 1 1 0 1 0 0 0 0 0 1 0 0 0 0 1 0 0 1 0 0 1 0 0 1 0 0 0 1 0 1 0 0 0 1 1 1 1 0 0 0 1 0 0 0 1 1 1 1 1 1 1 0 0 0 1 1 |
| | [14, 1] | [0 1 1 1 1 0 0 0] | 0 1 0 1 1 0 0 0 0 0 1 1 0 1 1 1 1 1 0 0 0 1 0 1 1 0 0 1 1 0 1 0 1 0 1 0 1 0 1 1 0 1 1 1 1 1 1 1 1 0 0 1 0 0 1 0 1 1 1 1 1 0 0 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 8 (including the data symbol 0) | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 7] | [0 1 0 0 1 1 1 0] | 1 1 1 1 0 0 1 0 1 0 1 0 1 1 0 1 1 1 1 1 1 1 1 0 0 1 0 0 1 0 1 1 1 0 1 1 1 0 1 0 0 0 0 0 1 0 0 0 0 1 0 0 1 0 0 1 0 0 1 1 1 0 0 1 |
| | [4, 6] | [0 0 1 0 0 1 1 0] | 1 0 1 0 1 1 1 1 1 0 0 1 0 1 0 1 0 1 1 0 1 1 1 1 1 1 1 1 0 0 1 0 1 0 1 0 0 0 0 0 1 0 0 0 0 1 0 0 1 0 0 1 0 0 1 1 1 0 0 1 0 1 1 1 |
| | [6, 4] | [0 1 1 0 0 0 1 0] | 1 0 1 0 0 0 0 0 1 0 0 0 0 1 0 0 1 0 0 1 0 0 1 1 1 0 0 1 0 1 1 1 1 0 1 0 1 1 1 1 1 0 0 1 0 1 0 1 0 1 1 0 1 1 1 1 1 1 1 1 0 0 1 0 |
| | [9, 9] | [1 0 0 1 1 0 0 1] | 0 0 0 1 0 1 0 0 0 1 1 1 1 0 0 0 1 0 0 0 1 1 1 1 1 1 1 0 0 0 1 1 0 0 0 1 0 1 0 0 0 1 1 1 1 0 0 0 1 0 0 0 1 1 1 1 1 1 1 0 0 0 1 1 |
| | [10, 10] | [0 1 0 1 0 1 0 1] | 0 1 0 1 0 0 1 1 1 1 0 0 1 1 0 0 1 1 0 0 0 1 0 0 1 1 1 1 0 1 0 0 0 1 0 1 0 0 1 1 1 1 0 0 1 1 0 0 1 1 0 0 0 1 0 0 1 1 1 1 0 1 0 0 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 8 (excluding the data symbol 0) [5, 9] | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [2, 12] | [0 1 0 0 0 0 1 1] | 1 1 1 1 0 0 1 0 1 0 1 0 1 1 0 1 1 1 1 1 1 1 1 0 0 1 0 0 1 0 1 1 1 1 0 1 1 1 0 0 1 1 0 1 1 1 0 1 0 0 1 1 1 0 0 0 1 0 0 1 0 0 0 1 |
| | [4, 15] | [0 0 1 0 1 1 1 1] | 1 0 1 0 1 1 1 1 1 0 0 1 0 1 0 1 0 1 1 0 1 1 1 1 1 1 1 1 0 0 1 0 0 1 1 0 1 1 0 0 1 1 0 0 1 0 1 1 1 1 0 1 1 0 0 1 1 1 1 0 1 1 1 0 |
| | [5, 9] | [1 0 1 0 1 0 0 1] | 1 1 0 0 0 0 0 1 0 0 0 0 1 0 0 1 0 0 1 0 0 1 1 1 0 0 1 0 1 1 1 0 0 0 0 1 0 1 0 0 0 1 1 1 1 0 0 0 1 0 0 0 1 1 1 1 1 1 1 0 0 0 1 1 |
| | [8, 3] | [0 0 0 1 1 1 0 0] | 0 1 1 0 0 1 0 1 1 1 0 1 0 0 0 0 0 1 0 0 0 0 1 0 0 1 0 0 1 0 0 1 0 1 1 1 1 0 0 1 0 1 0 1 0 1 1 0 1 1 1 1 1 1 1 1 0 0 1 0 0 1 0 1 |
| | [12, 5] | [0 0 1 1 1 0 1 0] | 1 1 0 1 1 1 0 0 1 1 0 1 1 1 0 1 0 0 1 1 1 0 0 0 1 0 0 1 0 0 0 1 1 1 0 0 0 0 0 1 0 0 0 0 1 0 0 1 0 0 1 0 0 1 1 1 0 0 1 0 1 1 1 0 |
| | [14, 1] | [0 1 1 1 1 0 0 0] | 0 1 0 1 1 0 0 0 0 0 1 1 0 1 1 1 1 1 0 0 0 1 0 1 1 0 0 1 1 0 1 0 1 0 1 0 1 0 1 1 0 1 1 1 1 1 1 1 1 0 0 1 0 0 1 0 1 1 1 1 1 0 0 1 |
| | [15, 10] | [1 1 1 1 0 1 0 1] | 0 1 1 0 1 1 0 0 1 1 0 0 1 0 1 1 1 1 0 1 1 0 0 1 1 1 1 0 1 1 1 0 0 1 0 1 0 0 1 1 1 1 0 0 1 1 0 0 1 1 0 0 0 1 0 0 1 1 1 1 0 1 0 0 |
| 9 (including the data symbol 0) | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [1, 7] | [1 0 0 0 1 1 1 0] | 1 0 1 0 1 0 1 1 0 1 1 1 1 1 1 1 1 0 0 1 0 0 1 0 1 1 1 1 1 0 0 1 1 0 1 1 1 0 1 0 0 0 0 0 1 0 0 0 0 1 0 0 1 0 0 1 0 0 1 1 1 0 0 1 |
| | [2, 9] | [0 1 0 0 1 0 0 1] | 1 1 1 1 0 0 1 0 1 0 1 0 1 1 0 1 1 1 1 1 1 1 1 0 0 1 0 0 1 0 1 1 0 0 0 1 0 1 0 0 0 1 1 1 1 0 0 0 1 0 0 0 1 1 1 1 1 1 1 0 0 0 1 1 |
| | [4, 10] | [0 0 1 0 0 1 0 1] | 1 0 1 0 1 1 1 1 1 0 0 1 0 1 0 1 0 1 1 0 1 1 1 1 1 1 1 1 0 0 1 0 0 1 0 1 0 0 1 1 1 1 0 0 1 1 0 0 1 1 0 0 0 1 0 0 1 1 1 1 0 1 0 0 |
| | [5, 6] | [1 0 1 0 0 1 1 0] | 1 1 0 0 0 0 0 1 0 0 0 0 1 0 0 1 0 0 1 0 0 1 1 1 0 0 1 0 1 1 1 0 1 0 1 0 0 0 0 0 1 0 0 0 0 1 0 0 1 0 0 1 0 0 1 1 1 0 0 1 0 1 1 1 |
| | [6, 3] | [0 1 1 0 1 1 0 0] | 1 0 1 0 0 0 0 0 1 0 0 0 0 1 0 0 1 0 0 1 0 0 1 1 1 0 0 1 0 1 1 1 0 1 1 1 1 0 0 1 0 1 0 1 0 1 1 0 1 1 1 1 1 1 1 1 0 0 1 0 0 1 0 1 |
| | [8, 15] | [0 0 0 1 1 1 1 1] | 0 1 1 0 0 1 0 1 1 1 0 1 0 0 0 0 0 1 0 0 0 0 1 0 0 1 0 0 1 0 0 1 0 1 1 0 1 1 0 0 1 1 0 0 1 0 1 1 1 1 0 1 1 0 0 1 1 1 1 0 1 1 1 0 |
| | [14, 0] | [0 1 1 1 0 0 0 0] | 0 1 0 1 1 0 0 0 0 0 1 1 0 1 1 1 1 1 0 0 0 1 0 1 1 0 0 1 1 0 1 0 1 0 0 1 1 1 0 1 0 1 1 0 0 0 1 1 0 0 0 1 0 1 0 0 0 1 0 0 0 1 0 0 |
| | [15, 4] | [1 1 1 1 0 0 1 0] | 0 1 1 0 1 1 0 0 1 1 0 0 1 0 1 1 1 1 0 1 1 0 0 1 1 1 1 0 1 1 1 0 1 0 1 0 1 1 1 1 1 0 0 1 0 1 0 1 0 1 1 0 1 1 1 1 1 1 1 1 0 0 1 0 |
| 9 (excluding the data symbol 0) [5, 9] | [1, 15] | [1 0 0 0 1 1 1 1] | 1 0 1 0 1 0 1 1 0 1 1 1 1 1 1 1 1 0 0 1 0 0 1 0 1 1 1 1 1 0 0 1 0 1 1 0 1 1 0 0 1 1 0 0 1 0 1 1 1 1 0 1 1 0 0 1 1 1 1 0 1 1 1 0 |
| | [2, 5] | [0 1 0 0 1 0 1 0] | 1 1 1 1 0 0 1 0 1 0 1 0 1 1 0 1 1 1 1 1 1 1 1 0 0 1 0 0 1 0 1 1 1 1 0 0 0 0 0 1 0 0 0 0 1 0 0 1 0 0 1 0 0 1 1 1 0 0 1 0 1 1 1 0 |
| | [3, 10] | [1 1 0 0 0 1 0 1] | 0 1 1 1 1 0 0 1 0 1 0 1 0 1 1 0 1 1 1 1 1 1 1 1 0 0 1 0 0 1 0 1 0 1 0 1 0 0 1 1 1 1 0 0 1 1 0 0 1 1 0 0 0 1 0 0 1 1 1 1 0 1 0 0 |
| | [5, 9] | [1 0 1 0 1 0 0 1] | 1 1 0 0 0 0 0 1 0 0 0 0 1 0 0 1 0 0 1 0 0 1 1 1 0 0 1 0 1 1 1 0 0 0 0 1 0 1 0 0 0 1 1 1 1 0 0 0 1 0 0 0 1 1 1 1 1 1 1 0 0 0 1 1 |
| | [6, 3] | [0 1 1 0 1 1 0 0] | 1 0 1 0 0 0 0 0 1 0 0 0 0 1 0 0 1 0 0 1 0 0 1 1 1 0 0 1 0 1 1 1 0 1 1 1 1 0 0 1 0 1 0 1 0 1 1 0 1 1 1 1 1 1 1 1 0 0 1 0 0 1 0 1 |
| | [8, 13] | [0 0 0 1 1 0 1 1] | 0 1 1 0 0 1 0 1 1 1 0 1 0 0 0 0 0 1 0 0 0 0 1 0 0 1 0 0 1 0 0 1 0 0 0 0 0 0 1 1 1 0 1 1 0 0 1 0 0 0 1 1 1 0 0 0 0 0 0 1 1 0 1 0 |
| | [13, 1] | [1 0 1 1 1 0 0 0] | 0 0 0 0 0 0 1 1 1 0 1 1 0 0 1 0 0 0 1 1 1 0 0 0 0 0 0 1 1 0 1 0 1 0 1 0 1 0 1 1 0 1 1 1 1 1 1 1 1 0 0 1 0 0 1 0 1 1 1 1 1 0 0 1 |
| | [14, 12] | [0 1 1 1 0 0 1 1] | 0 1 0 1 1 0 0 0 0 0 1 1 0 1 1 1 1 1 0 0 0 1 0 1 1 0 0 1 1 0 1 0 1 1 0 1 1 1 0 0 1 1 0 1 1 1 0 1 0 0 1 1 1 0 0 0 1 0 0 1 0 0 0 1 |
| | [15, 7] | [1 1 1 1 1 1 1 0] | 0 1 1 0 1 1 0 0 1 1 0 0 1 0 1 1 1 1 0 1 1 0 0 1 1 1 1 0 1 1 1 0 1 0 1 1 1 0 1 0 0 0 0 0 1 0 0 0 0 1 0 0 1 0 0 1 0 0 1 1 1 0 0 1 |
| 10 (including the data symbol 0) | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 9] | [0 1 0 0 1 0 0 1] | 1 1 1 1 0 0 1 0 1 0 1 0 1 1 0 1 1 1 1 1 1 1 1 0 0 1 0 0 1 0 1 1 0 0 0 1 0 1 0 0 0 1 1 1 1 0 0 0 1 0 0 0 1 1 1 1 1 1 1 0 0 0 1 1 |
| | [3, 10] | [1 1 0 0 0 1 0 1] | 0 1 1 1 1 0 0 1 0 1 0 1 0 1 1 0 1 1 1 1 1 1 1 1 0 0 1 0 0 1 0 1 0 1 0 1 0 0 1 1 1 1 0 0 1 1 0 0 1 1 0 0 0 1 0 0 1 1 1 1 0 1 0 0 |
| | [4, 6] | [0 0 1 0 0 1 1 0] | 1 0 1 0 1 1 1 1 1 0 0 1 0 1 0 1 0 1 1 0 1 1 1 1 1 1 1 1 0 0 1 0 1 0 1 0 0 0 0 0 1 0 0 0 0 1 0 0 1 0 0 1 0 0 1 1 1 0 0 1 0 1 1 1 |
| | [5, 5] | [1 0 1 0 1 0 1 0] | 1 1 0 0 0 0 0 1 0 0 0 0 1 0 0 1 0 0 1 0 0 1 1 1 0 0 1 0 1 1 1 0 1 1 0 0 0 0 0 1 0 0 0 0 1 0 0 1 0 0 1 0 0 1 1 1 0 0 1 0 1 1 1 0 |
| | [6, 7] | [0 1 1 0 1 1 1 0] | 1 0 1 0 0 0 0 0 1 0 0 0 0 1 0 0 1 0 0 1 0 0 1 1 1 0 0 1 0 1 1 1 1 0 1 1 1 0 1 0 0 0 0 0 1 0 0 0 0 1 0 0 1 0 0 1 0 0 1 1 1 0 0 1 |
| | [7, 3] | [1 1 1 0 1 1 0 0] | 1 0 1 1 1 0 1 0 0 0 0 0 1 0 0 0 0 1 0 0 1 0 0 1 0 0 1 1 1 0 0 1 0 1 1 1 1 0 0 1 0 1 0 1 0 1 1 0 1 1 1 1 1 1 1 1 0 0 1 0 0 1 0 1 |
| | [12, 15] | [0 0 1 1 1 1 1 1] | 1 1 0 1 1 1 0 0 1 1 0 1 1 1 0 1 0 0 1 1 1 0 0 0 1 0 0 1 0 0 0 1 0 1 1 0 1 1 0 0 1 1 0 0 1 0 1 1 1 1 0 1 1 0 0 1 1 1 1 0 1 1 1 0 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [15, 12] | [1 1 1 1 0 0 1 1] | 0 1 1 0 1 1 0 0 1 1 0 0 1 0 1 1 1 1 0 1 1 0 0 1 1 1 1 0 1 1 1 0 1 1 0 1 1 1 0 0 1 1 0 1 1 1 0 1 0 0 1 1 1 0 0 0 1 0 0 1 0 0 0 1 |
| 10 (excluding the data symbol 0) | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [2, 5] | [0 1 0 0 1 0 1 0] | 1 1 1 1 0 0 1 0 1 0 1 0 1 1 0 1 1 1 1 1 1 1 1 0 0 1 0 0 1 0 1 1 1 1 0 0 0 0 0 1 0 0 0 0 1 0 0 1 0 0 1 0 0 1 1 1 0 0 1 0 1 1 1 0 |
| | [3, 9] | [1 1 0 0 1 0 0 1] | 0 1 1 1 1 0 0 1 0 1 0 1 0 1 1 0 1 1 1 1 1 1 1 1 0 0 1 0 0 1 0 1 0 0 0 1 0 1 0 0 0 1 1 1 1 0 0 0 1 0 0 0 1 1 1 1 1 1 1 0 0 0 1 1 |
| | [4, 10] | [0 0 1 0 0 1 0 1] | 1 0 1 0 1 1 1 1 1 0 0 1 0 1 0 1 0 1 1 0 1 1 1 1 1 1 1 1 0 0 1 0 0 1 0 1 0 0 1 1 1 1 0 0 1 1 0 0 1 1 0 0 0 1 0 0 1 1 1 1 0 1 0 0 |
| | [5, 12] | [1 0 1 0 0 0 1 1] | 1 1 0 0 0 0 0 1 0 0 0 0 1 0 0 1 0 0 1 0 0 1 1 1 0 0 1 0 1 1 1 0 1 1 0 1 1 1 0 0 1 1 0 1 1 1 0 1 0 0 1 1 1 0 0 0 1 0 0 1 0 0 0 1 |
| | [7, 6] | [1 1 1 0 0 1 1 0] | 1 0 1 1 1 0 1 0 0 0 0 0 1 0 0 0 0 1 0 0 1 0 0 1 0 0 1 1 1 0 0 1 1 0 1 0 0 0 0 0 1 0 0 0 0 1 0 0 1 0 0 1 0 0 1 1 1 0 0 1 0 1 1 1 |
| | [8, 3] | [0 0 0 1 1 1 0 0] | 0 1 1 0 0 1 0 1 1 1 0 1 0 0 0 0 0 1 0 0 0 0 1 0 0 1 0 0 1 0 0 1 0 1 1 1 1 0 0 1 0 1 0 1 0 1 1 0 1 1 1 1 1 1 1 1 0 0 1 0 0 1 0 1 |
| | [12, 15] | [0 0 1 1 1 1 1 1] | 1 1 0 1 1 1 0 0 1 1 0 1 1 1 0 1 0 0 1 1 1 0 0 0 1 0 0 1 0 0 0 1 0 1 1 0 1 1 0 0 1 1 0 0 1 0 1 1 1 1 0 1 1 0 0 1 1 1 1 0 1 1 1 0 |
| | [14, 1] | [0 1 1 1 1 0 0 0] | 0 1 0 1 1 0 0 0 0 0 1 1 0 1 1 1 1 1 0 0 0 1 0 1 1 0 0 1 1 0 1 0 1 0 1 0 1 0 1 1 0 1 1 1 1 1 1 1 1 0 0 1 0 0 1 0 1 1 1 1 1 0 0 1 |
| | [15, 7] | [1 1 1 1 1 1 1 0] | 0 1 1 0 1 1 0 0 1 1 0 0 1 0 1 1 1 1 0 1 1 0 0 1 1 1 1 0 1 1 1 0 1 0 1 1 1 0 1 0 0 0 0 0 1 0 0 0 0 1 0 0 1 0 0 1 0 0 1 1 1 0 0 1 |

**Table 10**

| Value of M | Data symbol corresponding to the SFD field | Value of the SFD field (8 bits) | Chip sequence corresponding to the SFD field |
|---|---|---|---|
| 1 | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| 2 | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 3 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 3 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [15, 13] | [1 1 1 1 1 0 1 1] | 0 1 1 0 1 1 0 0 1 1 0 0 1 0 1 1 1 1 0 1 1 0 0 1 1 1 1 0 1 1 1 0 0 0 0 0 0 0 1 1 1 0 1 1 0 0 1 0 0 0 1 1 1 0 0 0 0 0 0 1 1 0 1 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 4 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [6, 15] | [0 1 1 0 1 1 1 1] | 1 0 1 0 0 0 0 0 1 0 0 0 0 1 0 0 1 0 0 1 0 0 1 1 1 0 0 1 0 1 1 1 0 1 1 0 1 1 0 0 1 1 0 0 1 0 1 1 1 1 0 1 1 0 0 1 1 1 1 0 1 1 1 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 4 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [12, 13] | [0 0 1 1 1 0 1 1] | 1 1 0 1 1 1 0 0 1 1 0 1 1 1 0 1 0 0 1 1 1 0 0 0 1 0 0 1 0 0 0 1 0 0 0 0 0 0 1 1 1 0 1 1 0 0 1 0 0 0 1 1 1 0 0 0 0 0 0 1 1 0 1 0 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 5 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [6, 0] | [0 1 1 0 0 0 0 0] | 1 0 1 0 0 0 0 0 1 0 0 0 0 1 0 0 1 0 0 1 0 0 1 1 1 0 0 1 0 1 1 1 1 0 0 1 1 1 0 1 0 1 1 0 0 0 1 1 0 0 0 1 0 1 0 0 0 1 0 0 0 1 0 0 |
| | [15, 7] | [1 1 1 1 1 1 1 0] | 0 1 1 0 1 1 0 0 1 1 0 0 1 0 1 1 1 1 0 1 1 0 0 1 1 1 1 0 1 1 1 0 1 0 1 1 1 0 1 0 0 0 0 0 1 0 0 0 0 1 0 0 1 0 0 1 0 0 1 1 1 0 0 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 5 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [5, 15] | [1 0 1 0 1 1 1 1] | 1 1 0 0 0 0 0 1 0 0 0 0 1 0 0 1 0 0 1 0 0 1 1 1 0 0 1 0 1 1 1 0 0 1 1 0 1 1 0 0 1 1 0 0 1 0 1 1 1 1 0 1 1 0 0 1 1 1 1 0 1 1 1 0 |
| | [12, 9] | [0 0 1 1 1 0 0 1] | 1 1 0 1 1 1 0 0 1 1 0 1 1 1 0 1 0 0 1 1 1 0 0 0 1 0 0 1 0 0 0 1 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 6 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [10, 7] | [0 1 0 1 1 1 1 0] | 0 1 0 1 0 0 1 1 1 1 0 0 1 1 0 0 1 1 0 0 0 1 0 0 1 1 1 1 0 1 0 0 1 0 1 1 1 0 1 0 0 0 0 0 1 0 0 0 0 1 0 0 1 0 0 1 0 0 1 1 1 0 0 1 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 6 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [5, 12] | [1 0 1 0 0 0 1 1] | 1 1 0 0 0 0 0 1 0 0 0 0 1 0 0 1 0 0 1 0 0 1 1 1 0 0 1 0 1 1 1 0 1 1 0 1 1 1 0 0 1 1 0 1 1 1 0 1 0 0 1 1 1 0 0 0 |
| | [12, 5] | [0 0 1 1 1 0 1 0] | 1 1 0 1 1 1 0 0 1 1 0 1 1 1 0 1 0 0 1 1 1 0 0 0 1 0 0 1 0 0 0 1 1 1 0 0 0 0 0 1 0 0 0 0 1 0 0 1 0 0 1 0 0 1 1 1 0 0 1 0 1 1 1 0 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 7 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 7] | [0 1 0 0 1 1 1 0] | 1 1 1 1 0 0 1 0 1 0 1 0 1 1 0 1 1 1 1 1 1 1 1 0 0 1 0 0 1 0 1 1 1 0 1 1 1 0 1 0 0 0 0 0 1 0 0 0 0 1 0 0 1 0 0 1 0 0 1 1 1 0 0 1 |
| | [5, 15] | [1 0 1 0 1 1 1 1] | 1 1 0 0 0 0 0 1 0 0 0 0 1 0 0 1 0 0 1 0 0 1 1 1 0 0 1 0 1 1 1 0 0 1 1 0 1 1 0 0 1 1 0 0 1 0 1 1 1 1 0 1 1 0 0 1 1 1 1 0 1 1 1 0 |
| | [12, 6] | [0 0 1 1 0 1 1 0] | 1 1 0 1 1 1 0 0 1 1 0 1 1 1 0 1 0 0 1 1 1 0 0 0 1 0 0 1 0 0 0 1 1 0 1 0 0 0 0 0 1 0 0 0 0 1 0 0 1 0 0 1 0 0 1 1 1 0 0 1 0 1 1 1 |
| | [15, 0] | [1 1 1 1 0 0 0 0] | 0 1 1 0 1 1 0 0 1 1 0 0 1 0 1 1 1 1 0 1 1 0 0 1 1 1 1 0 1 1 1 0 1 0 0 1 1 1 0 1 0 1 1 0 0 0 1 1 0 0 0 1 0 1 0 0 0 1 0 0 0 1 0 0 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 7 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [5, 1] | [1 0 1 0 1 0 0 0] | 1 1 0 0 0 0 0 1 0 0 0 0 1 0 0 1 0 0 1 0 0 1 1 1 0 0 1 0 1 1 1 0 1 0 1 0 1 0 1 1 0 1 1 1 1 1 1 1 1 0 0 1 0 0 1 0 1 1 1 1 1 0 0 1 |
| | [8, 12] | [0 0 0 1 0 0 1 1] | 0 1 1 0 0 1 0 1 1 1 0 1 0 0 0 0 0 1 0 0 0 0 1 0 0 1 0 0 1 0 0 1 1 1 0 1 1 1 0 0 1 1 0 1 1 1 0 1 0 0 1 1 1 0 0 0 1 0 0 1 0 0 0 1 |
| | [13, 5] | [1 0 1 1 1 0 1 0] | 0 0 0 0 0 0 1 1 1 0 1 1 0 0 1 0 0 0 1 1 1 0 0 0 0 0 0 1 1 0 1 0 1 1 0 0 0 0 0 1 0 0 0 0 1 0 0 1 0 0 1 0 0 1 1 1 0 0 1 0 1 1 1 0 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 8 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 7] | [0 1 0 0 1 1 1 0] | 1 1 1 1 0 0 1 0 1 0 1 0 1 1 0 1 1 1 1 1 1 1 1 0 0 1 0 0 1 0 1 1 1 0 1 1 1 0 1 0 0 0 0 0 1 0 0 0 0 1 0 0 1 0 0 1 0 0 1 1 1 0 0 1 |
| | [3, 6] | [1 1 0 0 0 1 1 0] | 0 1 1 1 1 0 0 1 0 1 0 1 0 1 1 0 1 1 1 1 1 1 1 1 0 0 1 0 0 1 0 1 1 0 1 0 0 0 0 0 1 0 0 0 0 1 0 0 1 0 0 1 0 0 1 1 1 0 0 1 0 1 1 1 |
| | [5, 15] | [1 0 1 0 1 1 1 1] | 1 1 0 0 0 0 0 1 0 0 0 0 1 0 0 1 0 0 1 0 0 1 1 1 0 0 1 0 1 1 1 0 0 1 1 0 1 1 0 0 1 1 0 0 1 0 1 1 1 1 0 1 1 0 0 1 1 1 1 0 1 1 1 0 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 8 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [3, 15] | [1 1 0 0 1 1 1 1] | 0 1 1 1 1 0 0 1 0 1 0 1 0 1 1 0 1 1 1 1 1 1 1 1 0 0 1 0 0 1 0 1 0 1 1 0 1 1 0 0 1 1 0 0 1 0 1 1 1 1 0 1 1 0 0 1 1 1 1 0 1 1 1 0 |
| | [5, 5] | [1 0 1 0 1 0 1 0] | 1 1 0 0 0 0 0 1 0 0 0 0 1 0 0 1 0 0 1 0 0 1 1 1 0 0 1 0 1 1 1 0 1 1 0 0 0 0 0 1 0 0 0 0 1 0 0 1 0 0 1 0 0 1 1 1 0 0 1 0 1 1 1 0 |
| | [13, 1] | [1 0 1 1 1 0 0 0] | 0 0 0 0 0 0 1 1 1 0 1 1 0 0 1 0 0 0 1 1 1 0 0 0 0 0 0 1 1 0 1 0 1 0 1 0 1 0 1 1 0 1 1 1 1 1 1 1 1 0 0 1 0 0 1 0 1 1 1 1 1 0 0 1 |
| | [14, 9] | [0 1 1 1 1 0 0 1] | 0 1 0 1 1 0 0 0 0 0 1 1 0 1 1 1 1 1 0 0 0 1 0 1 1 0 0 1 1 0 1 0 0 0 0 1 0 1 0 0 0 1 1 1 1 0 0 0 1 0 0 0 1 1 1 1 1 1 1 0 0 0 1 1 |
| | [15, 12] | [1 1 1 1 0 0 1 1] | 0 1 1 0 1 1 0 0 1 1 0 0 1 0 1 1 1 1 0 1 1 0 0 1 1 1 1 0 1 1 1 0 1 1 0 1 1 1 0 0 1 1 0 1 1 1 0 1 0 0 1 1 1 0 0 0 1 0 0 1 0 0 0 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 9 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 7] | [0 1 0 0 1 1 1 0] | 1 1 1 1 0 0 1 0 1 0 1 0 1 1 0 1 1 1 1 1 1 1 1 0 0 1 0 0 1 0 1 1 1 0 1 1 1 0 1 0 0 0 0 0 1 0 0 0 0 1 0 0 1 0 0 1 0 0 1 1 1 0 0 1 |
| | [3, 9] | [1 1 0 0 1 0 0 1] | 0 1 1 1 1 0 0 1 0 1 0 1 0 1 1 0 1 1 1 1 1 1 1 1 0 0 1 0 0 1 0 1 0 0 0 1 0 1 0 0 0 1 1 1 1 0 0 0 1 0 0 0 1 1 1 1 1 1 1 0 0 0 1 1 |
| | [4, 4] | [0 0 1 0 0 0 1 0] | 1 0 1 0 1 1 1 1 1 0 0 1 0 1 0 1 0 1 1 0 1 1 1 1 1 1 1 1 0 0 1 0 1 0 1 0 1 1 1 1 1 0 0 1 0 1 0 1 0 1 1 0 1 1 1 1 1 1 1 1 0 0 1 0 |
| | [9, 15] | [1 0 0 1 1 1 1 1] | 0 0 0 1 0 1 0 0 0 1 1 1 1 0 0 0 1 0 0 0 1 1 1 1 1 1 1 0 0 0 1 1 0 1 1 0 1 1 0 0 1 1 0 0 1 0 1 1 1 1 0 1 1 0 0 1 1 1 1 0 1 1 1 0 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [15, 6] | [1 1 1 1 0 1 1 0] | 0 1 1 0 1 1 0 0 1 1 0 0 1 0 1 1 1 1 0 1 1 0 0 1 1 1 1 0 1 1 1 0 1 0 1 0 0 0 0 0 1 0 0 0 0 1 0 0 1 0 0 1 0 0 1 1 1 0 0 1 0 1 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 9 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [3, 15] | [1 1 0 0 1 1 1 1] | 0 1 1 1 1 0 0 1 0 1 0 1 0 1 1 0 1 1 1 1 1 1 1 1 0 0 1 0 0 1 0 1 0 1 1 0 1 1 0 0 1 1 0 0 1 0 1 1 1 1 0 1 1 0 0 1 1 1 1 0 1 1 1 0 |
| | [4, 5] | [0 0 1 0 1 0 1 0] | 1 0 1 0 1 1 1 1 1 0 0 1 0 1 0 1 0 1 1 0 1 1 1 1 1 1 1 1 0 0 1 0 1 1 0 0 0 0 0 1 0 0 0 0 1 0 0 1 0 0 1 0 0 1 1 1 0 0 1 0 1 1 1 0 |
| | [5, 3] | [1 0 1 0 1 1 0 0] | 1 1 0 0 0 0 0 1 0 0 0 0 1 0 0 1 0 0 1 0 0 1 1 1 0 0 1 0 1 1 1 0 0 1 1 1 1 0 0 1 0 1 0 1 0 1 1 0 1 1 1 1 1 1 1 1 0 0 1 0 0 1 0 1 |
| | [12, 12] | [0 0 1 1 0 0 1 1] | 1 1 0 1 1 1 0 0 1 1 0 1 1 1 0 1 0 0 1 1 1 0 0 0 1 0 0 1 0 0 0 1 1 1 0 1 1 1 0 0 1 1 0 1 1 1 0 1 0 0 1 1 1 0 0 0 1 0 0 1 0 0 0 1 |
| | [13, 1] | [1 0 1 1 1 0 0 0] | 0 0 0 0 0 0 1 1 1 0 1 1 0 0 1 0 0 0 1 1 1 0 0 0 0 0 0 1 1 0 1 0 1 0 1 0 1 0 1 1 0 1 1 1 1 1 1 1 1 0 0 1 0 0 1 0 1 1 1 1 1 0 0 1 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 10 (including the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [0, 13] | [0 0 0 0 1 0 1 1] | 1 0 0 1 1 1 0 1 0 1 1 0 0 0 1 1 0 0 0 1 0 1 0 0 0 1 0 0 0 1 0 0 0 0 0 0 0 0 1 1 1 0 1 1 0 0 1 0 0 0 1 1 1 0 0 0 0 0 0 1 1 0 1 0 |
| | [2, 7] | [0 1 0 0 1 1 1 0] | 1 1 1 1 0 0 1 0 1 0 1 0 1 1 0 1 1 1 1 1 1 1 1 0 0 1 0 0 1 0 1 1 1 0 1 1 1 0 1 0 0 0 0 0 1 0 0 0 0 1 0 0 1 0 0 1 0 0 1 1 1 0 0 1 |
| | [3, 9] | [1 1 0 0 1 0 0 1] | 0 1 1 1 1 0 0 1 0 1 0 1 0 1 1 0 1 1 1 1 1 1 1 1 0 0 1 0 0 1 0 1 0 0 0 1 0 1 0 0 0 1 1 1 1 0 0 0 1 0 0 0 1 1 1 1 1 1 1 0 0 0 1 1 |
| | [4, 4] | [0 0 1 0 0 0 1 0] | 1 0 1 0 1 1 1 1 1 0 0 1 0 1 0 1 0 1 1 0 1 1 1 1 1 1 1 1 0 0 1 0 1 0 1 0 1 1 1 1 1 0 0 1 0 1 0 1 0 1 1 0 1 1 1 1 1 1 1 1 0 0 1 0 |
| | [6, 3] | [0 1 1 0 1 1 0 0] | 1 0 1 0 0 0 0 0 1 0 0 0 0 1 0 0 1 0 0 1 0 0 1 1 1 0 0 1 0 1 1 1 0 1 1 1 1 0 0 1 0 1 0 1 0 1 1 0 1 1 1 1 1 1 1 1 0 0 1 0 0 1 0 1 |
| | [13, 0] | [1 0 1 1 0 0 0 0] | 0 0 0 0 0 0 1 1 1 0 1 1 0 0 1 0 0 0 1 1 1 0 0 0 0 0 0 1 1 0 1 0 1 0 0 1 1 1 0 1 0 1 1 0 0 0 1 1 0 0 0 1 0 1 0 0 0 1 0 0 0 1 0 0 |
| | [14, 6] | [0 1 1 1 0 1 1 0] | 0 1 0 1 1 0 0 0 0 0 1 1 0 1 1 1 1 1 0 0 0 1 0 1 1 0 0 1 1 0 1 0 1 0 1 0 0 0 0 0 1 0 0 0 0 1 0 0 1 0 0 1 0 0 1 1 1 0 0 1 0 1 1 1 |
| | [15, 2] | [1 1 1 1 0 1 0 0] | 0 1 1 0 1 1 0 0 1 1 0 0 1 0 1 1 1 1 0 1 1 0 0 1 1 1 1 0 1 1 1 0 1 1 1 1 0 0 1 0 1 0 1 0 1 1 0 1 1 1 1 1 1 1 1 0 0 1 0 0 1 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |
| 10 (excluding the data symbol 0) | [7, 10] | [1 1 1 0 0 1 0 1] | 1 0 1 1 1 0 1 0 0 0 0 0 1 0 0 0 0 1 0 0 1 0 0 1 0 0 1 1 1 0 0 1 0 1 0 1 0 0 1 1 1 1 0 0 1 1 0 0 1 1 0 0 0 1 0 0 1 1 1 1 0 1 0 0 |
| | [1, 13] | [1 0 0 0 1 0 1 1] | 1 0 1 0 1 0 1 1 0 1 1 1 1 1 1 1 1 0 0 1 0 0 1 0 1 1 1 1 1 0 0 1 0 0 0 0 0 0 1 1 1 0 1 1 0 0 1 0 0 0 1 1 1 0 0 0 0 0 0 1 1 0 1 0 |
| | [3, 12] | [1 1 0 0 0 0 1 1] | 0 1 1 1 1 0 0 1 0 1 0 1 0 1 1 0 1 1 1 1 1 1 1 1 0 0 1 0 0 1 0 1 1 1 0 1 1 1 0 0 1 1 0 1 1 1 0 1 0 0 1 1 1 0 0 0 1 0 0 1 0 0 0 1 |
| | [4, 15] | [0 0 1 0 1 1 1 1] | 1 0 1 0 1 1 1 1 1 0 0 1 0 1 0 1 0 1 1 0 1 1 1 1 1 1 1 1 0 0 1 0 0 1 1 0 1 1 0 0 1 1 0 0 1 0 1 1 1 1 0 1 1 0 0 1 1 1 1 0 1 1 1 0 |
| | [5, 7] | [1 0 1 0 1 1 1 0] | 1 1 0 0 0 0 0 1 0 0 0 0 1 0 0 1 0 0 1 0 0 1 1 1 0 0 1 0 1 1 1 0 1 0 1 1 1 0 1 0 0 0 0 0 1 0 0 0 0 1 0 0 1 0 0 1 0 0 1 1 1 0 0 1 |
| | [8, 3] | [0 0 0 1 1 1 0 0] | 0 1 1 0 0 1 0 1 1 1 0 1 0 0 0 0 0 1 0 0 0 0 1 0 0 1 0 0 1 0 0 1 0 1 1 1 1 0 0 1 0 1 0 1 0 1 1 0 1 1 1 1 1 1 1 1 0 0 1 0 0 1 0 1 |
| | [12, 5] | [0 0 1 1 1 0 1 0] | 1 1 0 1 1 1 0 0 1 1 0 1 1 1 0 1 0 0 1 1 1 0 0 0 1 0 0 1 0 0 0 1 1 1 0 0 0 0 0 1 0 0 0 0 1 0 0 1 0 0 1 0 0 1 1 1 0 0 1 0 1 1 1 0 |
| | [14, 1] | [0 1 1 1 1 0 0 0] | 0 1 0 1 1 0 0 0 0 0 1 1 0 1 1 1 1 1 0 0 0 1 0 1 1 0 0 1 1 0 1 0 1 0 1 0 1 0 1 1 0 1 1 1 1 1 1 1 1 0 0 1 0 0 1 0 1 1 1 1 1 0 0 1 |
| | [15, 9] | [1 1 1 1 1 0 0 1] | 0 1 1 0 1 1 0 0 1 1 0 0 1 0 1 1 1 1 0 1 1 0 0 1 1 1 1 0 1 1 1 0 0 0 0 1 0 1 0 0 0 1 1 1 1 0 0 0 1 0 0 0 1 1 1 1 1 1 1 0 0 0 1 1 |
| | [15, 15] | [1 1 1 1 1 1 1 1] | 0 1 1 0 1 1 0 0 1 1 0 0 1 0 1 1 1 1 0 1 1 0 0 1 1 1 1 0 1 1 1 0 0 1 1 0 1 1 0 0 1 1 0 0 1 0 1 1 1 1 0 1 1 0 0 1 1 1 1 0 1 1 1 0 |

In yet another example, different from the mapping tables from the data symbols to the chip sequences shown in Table 2, Table 5, and Table 8, in a mapping table from data symbols to chip sequences shown in the following table 11, a Hamming distance between any two chip sequences is 16. Therefore, a required value set cannot be selected by restricting the Hamming distance. In this case, an appropriate value set may be selected by restricting an auto-correlation sidelobe amplitude or a cross-correlation sidelobe amplitude. In addition, for the SFD field, a value including the data symbol 0 may be excluded. Specifically, in step (2), the redundant value in S may be deleted by optimizing auto-correlation or cross-correlation obtained by mapping different values in S to a chip sequence and then performing modulation (for example, O-QPSK modulation or QPSK modulation). Alternatively, the redundant value in S may be deleted by optimizing auto-correlation or cross-correlation obtained by mapping different values in S to a chip sequence, then performing modulation (for example, O-QPSK modulation or QPSK modulation), and then performing oversampling. For example, a value with a largest auto-correlation sidelobe amplitude in S may be deleted, or a value with a largest normalized auto-correlation sidelobe amplitude (for example, an auto-correlation peak amplitude is used as a normalization denominator) in S may be deleted, or a value with a largest average auto-correlation sidelobe amplitude in S may be deleted. For another example, one value may be deleted from S, so that a sum of cross-correlation sidelobe amplitudes, or an average value of cross-correlation sidelobe amplitudes, or a maximum cross-correlation sidelobe amplitude between chip sequences corresponding to every two of the remaining M values in S is the smallest. For another example, one value may be deleted from S, so that a normalized cross-correlation sidelobe amplitude (for example, an auto-correlation peak amplitude is used as a normalization denominator) between chip sequences corresponding to every two of the remaining M values in S is the smallest, or an average value of normalized cross-correlation sidelobe amplitudes is the smallest.

**Table 11: Mapping table 4 from data symbols to chip sequences**

| Data symbol | Chip values (c₀, c₁, ..., c₃₀, and c₃₁) |
|---|---|
| Data symbol | Chip values |
| 0 | 1 1 0 0 1 0 1 0 1 0 0 1 0 0 0 0 1 1 0 0 1 0 1 0 0 1 1 0 1 1 1 1 |
| 1 | 1 0 1 0 1 1 0 0 1 1 1 1 0 1 1 0 1 0 1 0 1 1 0 0 0 0 0 0 1 0 0 1 |
| 2 | 1 0 0 1 0 0 0 0 1 1 0 0 1 0 1 0 1 0 0 1 0 0 0 0 0 0 1 1 0 1 0 1 |
| 3 | 1 1 1 1 0 1 1 0 1 0 1 0 1 1 0 0 1 1 1 1 0 1 1 0 0 1 0 1 0 0 1 1 |
| 4 | 1 0 0 1 1 1 1 1 0 0 1 1 1 0 1 0 1 0 0 1 1 1 1 1 1 1 0 0 0 1 0 1 |
| 5 | 1 1 1 1 1 0 0 1 0 1 0 1 1 1 0 0 1 1 1 1 1 0 0 1 1 0 1 0 0 0 1 1 |
| 6 | 1 1 0 0 0 1 0 1 0 1 1 0 0 0 0 0 1 1 0 0 0 1 0 1 1 0 0 1 1 1 1 1 |
| 7 | 1 0 1 0 0 0 1 1 0 0 0 0 0 1 1 0 1 0 1 0 0 0 1 1 1 1 1 1 1 0 0 1 |
| 8 | 1 0 0 1 1 1 1 1 1 1 0 0 0 1 0 1 0 1 1 0 0 0 0 0 1 1 0 0 0 1 0 1 |
| 9 | 1 1 1 1 1 0 0 1 1 0 1 0 0 0 1 1 0 0 0 0 0 1 1 0 1 0 1 0 0 0 1 1 |
| 10 | 1 1 0 0 0 1 0 1 1 0 0 1 1 1 1 1 0 0 1 1 1 0 1 0 1 0 0 1 1 1 1 1 |
| 11 | 1 0 1 0 0 0 1 1 1 1 1 1 1 0 0 1 0 1 0 1 1 1 0 0 1 1 1 1 1 0 0 1 |
| 12 | 1 1 0 0 1 0 1 0 0 1 1 0 1 1 1 1 0 0 1 1 0 1 0 1 0 1 1 0 1 1 1 1 |
| 13 | 1 0 1 0 1 1 0 0 0 0 0 0 1 0 0 1 0 1 0 1 0 0 1 1 0 0 0 0 1 0 0 1 |
| 14 | 1 0 0 1 0 0 0 0 0 0 1 1 0 1 0 1 0 1 1 0 1 1 1 1 0 0 1 1 0 1 0 1 |
| 15 | 1 1 1 1 0 1 1 0 0 1 0 1 0 0 1 1 0 0 0 0 1 0 0 1 0 1 0 1 0 0 1 1 |

In this embodiment of this application, different values of the SFD field or different values of the preamble field indicate different physical layer configurations, so that a narrowband physical layer can be flexibly configured, and no additional indication is required, thereby reducing overheads. For example, for Table 3, it is assumed that M=5 (including the data symbol 0), and correspondences between five values of the SFD field and five physical layer configurations are shown in the following table 12. A correspondence between a value of the SFD field and a physical layer configuration is not limited in embodiments of this application. This is merely an example for description herein.

**Table 12: Table of correspondences between values of the SFD field and physical layer configurations**

| Value of the SFD field (8 bits) | Physical layer configuration |
|---|---|
| [0 0 0 0 0 1 1 0] | Config 1 |
| [1 1 0 0 1 0 1 0] | Config 2 |
| [0 1 1 0 0 0 0 0] | Config 3 |
| [1 1 1 0 1 1 0 0] | Config 4 |
| [1 1 0 1 1 1 0 0] | Config 5 |

Config 1 to Config 5 in Table 12 may be five different physical layer configurations. For example, Config 1 to Config 5 in Table 12 may be the five physical layer configurations in Table 1 (O-QPSK modulation). It may be understood that the quantity of physical layer configurations and the values of the SFD field that are shown in Table 12 are merely examples. In actual application, the quantity of physical layer configurations may be different in different modulation schemes. Correspondingly, the quantity of values of the SFD field varies with the quantity of physical layer configurations (for example, the quantity of values of the SFD field is equal to the quantity of physical layer configurations). For example, it is assumed that a quantity of physical layer configurations in a modulation scheme is K. A quantity of values of the SFD field may also be K. The values of the SFD field may be any K values in Table 3 and Table 4, Table 6 and Table 7, or Table 9 and Table 10. A specific modulation scheme and a specific physical layer configuration are not limited in embodiments of this application.

In addition, for better description, different values of the SFD field in this embodiment of this application indicate performance of different physical layer configurations. The following illustrates symbol error rate simulation results of SFD symbols and payload symbols.

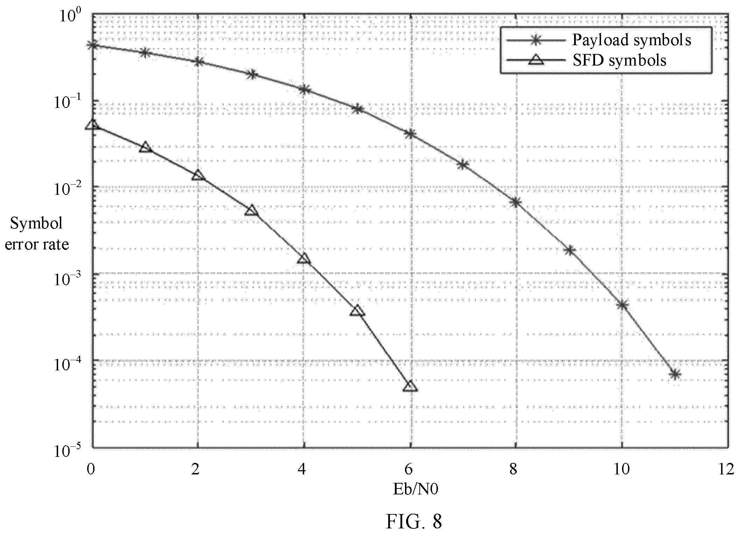

For example, FIG. 8 is a diagram of simulation of symbol error rates of SFD symbols and payload symbols according to an embodiment of this application. The SFD symbol used in a simulation process is a data symbol when M=5 (including the data symbol 0) in Table 3, the payload symbol used in the simulation process is a data symbol in Table 2, and a payload length of each data packet is 127 bytes (bytes). A simulation channel is an additive white Gaussian noise channel.

FIG. 8 shows symbol error rate performance of the SFD symbols (SFD symbols) and the payload symbols (payload symbols) on the additive white Gaussian noise channel. In FIG. 8, a horizontal coordinate represents a power ratio (unit: dB) of each bit to background noise, and a vertical coordinate represents a symbol error rate (symbol error rate) of a receiving end. It can be learned from FIG. 8 that, in a case of a same symbol error rate, for example, when the symbol error rate is 10⁻³, the SFD symbol has a lower bit to background noise power ratio, which indicates that demodulation performance of the SFD symbol is better than that of the payload symbol. In other words, in this embodiment of this application, the demodulation performance of the SFD symbol or the preamble symbol can be further improved.

For another example, to further improve the performance, another possible manner of selecting the first value set is as follows:

### Step (1): Initialization.

Data symbols are still used to represent all the possible values of the SFD field (in other words, the second value set is represented as follows by using the data symbols): *x*₀=[0, 0], *x*₁=[0, 1], *x*₂=[0, 2], ..., *x*₁₆=[1, 0], *x*₁₇=[1, 1], ..., and *x*₂₅₅=[15, 15]. It may be understood that 0 to 15 in x₀ to *x*₂₅₅ respectively represent data symbols 0 to 15. It may be further understood that a data symbol 0 is 0000 when being mapped to bits, a data symbol 1 is 1000 when being mapped to bits, a data symbol 2 is 0100 when being mapped to bits, a data symbol 3 is 1100 when being mapped to bits, the rest may be deduced by analogy, and a data symbol 15 is 1111 when being mapped to bits.

### Step (2): Exclude the data symbol 0.

A value including the data symbol 0 is excluded from all the possible values of the SFD field. In this case, the SFD field has 256-16-16+1=225 possible values.

### Step 3: Maximize a minimum Hamming distance.

In the 225 possible values of the SFD field, M-1 values are selected, and form a set with a value x₁₂₁=[7, 10] supported by the existing standard. Hamming distances obtained by mapping any two values in the set to chips are calculated. In this case, there are M*(M-1)/2 Hamming distances in total. The M-1 values are selected from the 225 possible values in a traversal manner, so that a smallest value in the M*(M-1)/2 Hamming distances in the set including the M-1 values and the value x₁₂₁=[7, 10] is greater than or equal to a smallest value in M*(M-1)/2 Hamming distances in a set including any other M-1 values in the 225 possible values and the value x₁₂₁=[7, 10].

### Step (4): Maximize a sum of Hamming distances.

On the basis of step (3), the Hamming distances obtained by mapping two values in the set to the chips are calculated, and there are M*(M-1)/2 Hamming distances in total. A set in which a sum of the M*(M-1)/2 Hamming distances can be maximized is selected from one or more sets obtained in step (3) as the first value set.

For example, some or all value sets of the SFD field selected based on the mapping table from the data symbols to the chip sequences shown in Table 2 in the foregoing manner of selecting the first value set are shown in the following table 13. The following table 13 shows an example of values of the SFD field and physical layer configurations corresponding to the values. It may be understood that a physical layer configuration #1 in the following table 13 can be indicated only by a value of the SFD field being 1 1 1 0 0 1 0 1, and a correspondence between a remaining physical layer configuration and a remaining value other than 1 1 1 0 0 1 0 1 in the first value set may be randomly combined.

**Table 13: Values of the SFD field and physical layer configurations corresponding to the values**

| Number of an SFD group | Value of the SFD field (8 bits) | | | | | | | | Physical layer configuration |
|---|---|---|---|---|---|---|---|---|---|
| 1 | 1 | 1 | 1 | 0 | 0 | 1 | 0 | 1 | **#1** 250kbps |
| | 1 | 0 | 0 | 0 | 1 | 0 | 1 | 0 | **#2** 500kbps |
| | 0 | 1 | 0 | 0 | 1 | 0 | 0 | 1 | **#3** 1000kbps |
| | 0 | 0 | 1 | 0 | 1 | 0 | 1 | 1 | **#4** 250kbps |
| | 1 | 0 | 1 | 0 | 0 | 0 | 0 | 1 | **#5** 1000kbps |
| 2 | 1 | 1 | 1 | 0 | 0 | 1 | 0 | 1 | **#1** 250kbps |
| | 1 | 0 | 0 | 0 | 1 | 0 | 1 | 0 | **#2** 500kbps |
| | 1 | 1 | 0 | 0 | 1 | 1 | 1 | 0 | **#3** 1000kbps |
| | 0 | 0 | 1 | 0 | 0 | 1 | 0 | 0 | **#4** 250kbps |
| | 0 | 1 | 1 | 0 | 0 | 1 | 1 | 0 | **#5** 1000kbps |
| 3 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 0 | 1 | 0 | 0 | 0 | 1 | 0 | 0 | **#3** 1000kbps |
| | 0 | 0 | 1 | 0 | 1 | 0 | 1 | 0 | **#4** 250kbps |
| | 0 | 1 | 1 | 0 | 1 | 1 | 1 | 0 | **#5** 1000kbps |
| 4 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 0 | 1 | 0 | 0 | 0 | 1 | 0 | 0 | **#3** 1000kbps |
| | 0 | 0 | 1 | 0 | 1 | 1 | 1 | 0 | **#4** 250kbps |
| | 0 | 1 | 1 | 0 | 1 | 0 | 1 | 0 | **#5** 1000kbps |
| 5 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 0 | 1 | 0 | 0 | 1 | 0 | 0 | 1 | **#3** 1000kbps |
| | 0 | 0 | 1 | 0 | 1 | 1 | 0 | 1 | **#4** 250kbps |
| | 1 | 0 | 1 | 0 | 0 | 1 | 1 | 1 | **#5** 1000kbps |
| 6 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 0 | 1 | 0 | 0 | 1 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 0 | 1 | 1 | 1 | **#5** 1000kbps |
| 7 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 0 | 1 | 0 | 0 | 1 | 1 | 0 | 1 | **#3** 1000kbps |
| | 0 | 0 | 1 | 0 | 1 | 0 | 0 | 1 | **#4** 250kbps |
| | 1 | 0 | 1 | 0 | 0 | 1 | 1 | 1 | **#5** 1000kbps |
| 8 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 0 | 1 | 0 | 0 | 1 | 1 | 0 | 1 | **#3** 1000kbps |
| | 0 | 0 | 1 | 0 | 1 | 0 | 0 | 1 | **#4** 250kbps |
| | 0 | 1 | 1 | 0 | 0 | 1 | 1 | 1 | **#5** 1000kbps |
| 9 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 1 | 1 | 0 | 0 | 0 | 1 | 0 | 0 | **#3** 1000kbps |
| | 0 | 0 | 1 | 0 | 1 | 0 | 1 | 0 | **#4** 250kbps |
| | 0 | 1 | 1 | 0 | 1 | 1 | 1 | 0 | **#5** 1000kbps |
| 10 | 1 | 1 | 1 | 0 | 0 | 1 | 0 | 1 | **#1** 250kbps |
| | 1 | 0 | 0 | 0 | 0 | 1 | 1 | 0 | **#2** 500kbps |
| | 1 | 1 | 0 | 0 | 0 | 1 | 0 | 0 | **#3** 1000kbps |
| | 0 | 0 | 1 | 0 | 1 | 1 | 1 | 0 | **#4** 250kbps |
| | 0 | 1 | 1 | 0 | 1 | 0 | 1 | 0 | **#5** 1000kbps |
| 11 | 1 | 1 | 1 | 0 | 0 | 1 | 0 | 1 | **#1** 250kbps |
| | 1 | 0 | 0 | 0 | 1 | 1 | 1 | 0 | **#2** 500kbps |
| | 0 | 1 | 0 | 0 | 1 | 1 | 0 | 1 | **#3** 1000kbps |
| | 0 | 0 | 1 | 0 | 1 | 1 | 1 | 1 | **#4** 250kbps |
| | 1 | 0 | 1 | 0 | 0 | 0 | 1 | 1 | **#5** 1000kbps |
| 12 | 1 | 1 | 1 | 0 | 0 | 1 | 0 | 1 | **#1** 250kbps |
| | 1 | 0 | 0 | 0 | 1 | 1 | 1 | 0 | **#2** 500kbps |
| | 1 | 1 | 0 | 0 | 1 | 0 | 1 | 0 | **#3** 1000kbps |
| | 0 | 0 | 1 | 0 | 0 | 1 | 0 | 0 | **#4** 250kbps |
| | 0 | 1 | 1 | 0 | 0 | 1 | 1 | 0 | **#5** 1000kbps |
| 13 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 0 | **#3** 1000kbps |
| | 0 | 0 | 1 | 0 | 1 | 0 | 0 | 1 | **#4** 250kbps |
| | 1 | 0 | 1 | 0 | 1 | 0 | 1 | 1 | **#5** 1000kbps |
| 14 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 0 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 1 | **#5** 1000kbps |
| 15 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 1 | 0 | 1 | **#3** 1000kbps |
| | 0 | 0 | 1 | 0 | 1 | 0 | 1 | 1 | **#4** 250kbps |
| | 0 | 1 | 1 | 0 | 1 | 1 | 1 | 1 | **#5** 1000kbps |
| 16 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 1 | 0 | 1 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 17 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 0 | 0 | 1 | 1 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 18 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 0 | 0 | 1 | **#4** 250kbps |
| | 1 | 0 | 1 | 0 | 1 | 0 | 1 | 0 | **#5** 1000kbps |
| 19 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 0 | **#5** 1000kbps |
| 20 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 1 | 0 | 1 | **#4** 250kbps |
| | 1 | 0 | 1 | 0 | 0 | 1 | 1 | 1 | **#5** 1000kbps |
| 21 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 1 | 0 | 1 | **#4** 250kbps |
| | 1 | 0 | 1 | 0 | 1 | 1 | 1 | 1 | **#5** 1000kbps |
| 22 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 1 | 0 | 1 | **#4** 250kbps |
| | 0 | 1 | 1 | 0 | 0 | 1 | 1 | 1 | **#5** 1000kbps |
| 23 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 1 | 0 | 1 | **#4** 250kbps |
| | 0 | 1 | 1 | 0 | 1 | 1 | 1 | 1 | **#5** 1000kbps |
| 24 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 0 | 1 | 0 | 0 | 1 | 0 | 1 | 1 | **#3** 1000kbps |
| | 0 | 0 | 1 | 0 | 1 | 1 | 1 | 1 | **#4** 250kbps |
| | 1 | 0 | 1 | 0 | 0 | 0 | 1 | 1 | **#5** 1000kbps |
| 25 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 1 | 1 | 0 | 0 | 1 | 0 | 1 | 0 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 1 | **#5** 1000kbps |
| 26 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 1 | 1 | 0 | 0 | 1 | 1 | 0 | 1 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 27 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 1 | 1 | 0 | 0 | 0 | 0 | 1 | 1 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 28 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 1 | 1 | 0 | 0 | 1 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 0 | **#5** 1000kbps |
| 29 | 1 | 1 | 1 | 0 | 0 | 1 | 0 | 1 | **#1** 250kbps |
| | 1 | 0 | 0 | 0 | 0 | 0 | 0 | 1 | **#2** 500kbps |
| | 1 | 1 | 0 | 0 | 0 | 1 | 1 | 1 | **#3** 1000kbps |
| | 0 | 0 | 1 | 0 | 1 | 1 | 0 | 1 | **#4** 250kbps |
| | 0 | 1 | 1 | 0 | 1 | 0 | 1 | 1 | **#5** 1000kbps |
| 30 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 0 | **#3** 1000kbps |
| | 0 | 0 | 1 | 0 | 1 | 1 | 0 | 1 | **#4** 250kbps |
| | 1 | 0 | 1 | 0 | 1 | 1 | 1 | 1 | **#5** 1000kbps |
| 31 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 0 | **#3** 1000kbps |
| | 0 | 0 | 1 | 0 | 1 | 1 | 0 | 1 | **#4** 250kbps |
| | 0 | 1 | 1 | 0 | 1 | 1 | 1 | 1 | **#5** 1000kbps |
| 32 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 1 | 0 | 1 | 1 | **#4** 250kbps |
| | 0 | 1 | 1 | 0 | 1 | 1 | 1 | 1 | **#5** 1000kbps |
| 33 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 0 | 1 | 1 | **#4** 250kbps |
| | 0 | 1 | 1 | 0 | 1 | 1 | 1 | 1 | **#5** 1000kbps |
| 34 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 35 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | **#3** 1000kbps |
| | 0 | 0 | 1 | 0 | 1 | 0 | 0 | 1 | **#4** 250kbps |
| | 1 | 0 | 1 | 0 | 1 | 0 | 1 | 1 | **#5** 1000kbps |
| 36 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | **#3** 1000kbps |
| | 0 | 0 | 1 | 0 | 1 | 0 | 0 | 1 | **#4** 250kbps |
| | 1 | 0 | 1 | 0 | 0 | 1 | 1 | 1 | **#5** 1000kbps |
| 37 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 1 | **#5** 1000kbps |
| 38 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | **#3** 1000kbps |
| | 0 | 0 | 1 | 0 | 1 | 0 | 0 | 1 | **#4** 250kbps |
| | 0 | 1 | 1 | 0 | 0 | 1 | 1 | 1 | **#5** 1000kbps |
| 39 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | **#3** 1000kbps |
| | 0 | 0 | 1 | 0 | 1 | 1 | 0 | 1 | **#4** 250kbps |
| | 1 | 0 | 1 | 0 | 1 | 1 | 1 | 0 | **#5** 1000kbps |
| 40 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | 1000kbps **#3** |
| | 0 | 0 | 1 | 0 | 1 | 1 | 0 | 1 | **#4** 250kbps |
| | 0 | 1 | 1 | 0 | 1 | 1 | 1 | 0 | **#5** 1000kbps |
| 41 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 0 | 1 | 0 | 0 | 1 | 1 | 1 | 1 | **#3** 1000kbps |
| | 0 | 0 | 1 | 0 | 1 | 0 | 1 | 1 | **#4** 250kbps |
| | 1 | 0 | 1 | 0 | 0 | 0 | 0 | 1 | **#5** 1000kbps |
| 42 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 1 | 1 | 0 | 0 | 1 | 1 | 1 | 0 | **#3** 1000kbps |
| | 0 | 0 | 1 | 0 | 1 | 1 | 0 | 1 | **#4** 250kbps |
| | 0 | 1 | 1 | 0 | 1 | 1 | 1 | 1 | **#5** 1000kbps |
| 43 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 1 | 1 | 0 | 0 | 0 | 0 | 0 | 1 | **#3** 1000kbps |
| | 0 | 0 | 1 | 0 | 1 | 0 | 1 | 1 | 250kbps **#4** |
| | 0 | 1 | 1 | 0 | 1 | 1 | 1 | 1 | **#5** 1000kbps |
| 44 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 1 | 1 | 0 | 0 | 1 | 0 | 0 | 1 | **#3** 1000kbps |
| | 0 | 0 | 1 | 0 | 1 | 0 | 1 | 1 | **#4** 250kbps |
| | 0 | 1 | 1 | 0 | 1 | 1 | 1 | 1 | **#5** 1000kbps |
| 45 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 1 | 1 | 0 | 0 | 0 | 1 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 1 | 1 | 1 | **#5** 1000kbps |
| 46 | 1 | 1 | 1 | 0 | 0 | 1 | 0 | 1 | **#1** 250kbps |
| | 1 | 0 | 0 | 0 | 0 | 0 | 1 | 1 | **#2** 500kbps |
| | 1 | 1 | 0 | 0 | 1 | 1 | 1 | 1 | **#3** 1000kbps |
| | 0 | 0 | 1 | 0 | 1 | 1 | 0 | 1 | **#4** 250kbps |
| | 0 | 1 | 1 | 0 | 1 | 1 | 1 | 0 | **#5** 1000kbps |
| 47 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 1 | 0 | 1 | 0 | 0 | 1 | 1 | 1 | **#5** 1000kbps |
| 48 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 1 | 0 | 1 | 0 | 1 | 1 | 1 | 1 | **#5** 1000kbps |
| 49 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 0 | 1 | 1 | 1 | **#5** 1000kbps |
| 50 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 1 | 1 | 1 | 1 | **#5** 1000kbps |
| 51 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 0 | 0 | 1 | 1 | **#4** 250kbps |
| | 1 | 0 | 1 | 0 | 1 | 1 | 1 | 1 | **#5** 1000kbps |
| 52 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 0 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 1 | 1 | 1 | 1 | **#5** 1000kbps |
| 53 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 0 | 1 | 0 | **#4** 250kbps |
| | 1 | 0 | 1 | 0 | 0 | 0 | 0 | 1 | **#5** 1000kbps |
| 54 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 1 | 0 | 1 | 0 | 1 | 1 | 1 | 1 | **#5** 1000kbps |
| 55 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 1 | 1 | 1 | 1 | **#5** 1000kbps |
| 56 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 1 | 1 | 1 | **#4** 250kbps |
| | 1 | 0 | 1 | 0 | 0 | 0 | 1 | 1 | **#5** 1000kbps |
| 57 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 1 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 0 | 1 | 1 | 1 | **#5** 1000kbps |
| 58 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 1 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 1 | 1 | 1 | 1 | **#5** 1000kbps |
| 59 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 1 | 1 | 0 | 0 | 0 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 1 | 1 | 1 | 1 | **#5** 1000kbps |
| 60 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 1 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 1 | 1 | 1 | 1 | **#5** 1000kbps |
| 61 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 1 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 0 | 1 | 1 | 0 | 0 | 1 | 1 | 1 | **#5** 1000kbps |
| 62 | 1 | 1 | 1 | 0 | 0 | 1 | 0 | 1 | **#1** 250kbps |
| | 1 | 0 | 0 | 0 | 1 | 0 | 1 | 1 | **#2** 500kbps |
| | 1 | 1 | 0 | 0 | 1 | 1 | 1 | 1 | **#3** 1000kbps |
| | 0 | 0 | 1 | 0 | 0 | 1 | 0 | 0 | **#4** 250kbps |
| | 0 | 1 | 1 | 0 | 0 | 1 | 1 | 1 | **#5** 1000kbps |
| 63 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 0 | 1 | 0 | 0 | **#3** 1000kbps |
| | 0 | 0 | 1 | 0 | 1 | 0 | 1 | 1 | **#4** 250kbps |
| | 0 | 1 | 1 | 0 | 1 | 1 | 1 | 1 | **#5** 1000kbps |
| 64 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 0 | 1 | 0 | 0 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 65 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 1 | 0 | 1 | **#4** 250kbps |
| | 1 | 0 | 1 | 0 | 0 | 1 | 1 | 0 | **#5** 1000kbps |
| 66 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 0 | 1 | 1 | 0 | **#5** 1000kbps |
| 67 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 1 | 0 | 1 | 0 | 1 | 1 | 1 | 1 | **#5** 1000kbps |
| 68 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 1 | 1 | 1 | 1 | **#5** 1000kbps |
| 69 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 0 | 0 | 1 | **#3** 1000kbps |
| | 0 | 0 | 1 | 0 | 1 | 1 | 1 | 1 | **#4** 250kbps |
| | 1 | 0 | 1 | 0 | 0 | 0 | 1 | 1 | **#5** 1000kbps |
| 70 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 1 | 0 | 1 | 0 | 1 | 0 | 1 | 1 | **#5** 1000kbps |
| 71 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 0 | 1 | 1 | 0 | 1 | 0 | 1 | 1 | **#5** 1000kbps |
| 72 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 1 | 0 | 0 | 1 | **#4** 250kbps |
| | 1 | 0 | 1 | 0 | 0 | 1 | 1 | 0 | **#5** 1000kbps |
| 73 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 1 | 0 | 0 | 1 | **#4** 250kbps |
| | 0 | 1 | 1 | 0 | 0 | 1 | 1 | 0 | **#5** 1000kbps |
| 74 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 1 | 0 | 1 | 1 | **#4** 250kbps |
| | 1 | 0 | 1 | 0 | 0 | 0 | 0 | 1 | **#5** 1000kbps |
| 75 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 1 | 1 | 0 | 0 | 0 | 1 | 0 | 0 | **#3** 1000kbps |
| | 0 | 0 | 1 | 0 | 1 | 0 | 1 | 1 | **#4** 250kbps |
| | 0 | 1 | 1 | 0 | 1 | 1 | 1 | 1 | **#5** 1000kbps |
| 76 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 1 | 1 | 0 | 0 | 0 | 1 | 0 | 0 | **#3** 1000kbps |
| | 0 | 0 | 1 | 0 | 1 | 1 | 1 | 1 | **#4** 250kbps |
| | 0 | 1 | 1 | 0 | 1 | 0 | 1 | 1 | **#5** 1000kbps |
| 77 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 1 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 0 | 1 | 1 | 0 | 1 | 0 | 1 | 1 | **#5** 1000kbps |
| 78 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 1 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 1 | 1 | 1 | 1 | **#5** 1000kbps |
| 79 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 1 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 0 | 1 | 1 | 0 | 1 | 0 | 1 | 1 | **#5** 1000kbps |
| 80 | 1 | 1 | 1 | 0 | 0 | 1 | 0 | 1 | **#1** 250kbps |
| | 1 | 0 | 0 | 0 | 0 | 1 | 1 | 1 | **#2** 500kbps |
| | 1 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 1 | 1 | 1 | **#5** 1000kbps |
| 81 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 1 | 1 | 1 | 0 | **#4** 250kbps |
| | 1 | 0 | 1 | 0 | 0 | 0 | 1 | 1 | **#5** 1000kbps |
| 82 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 1 | 0 | 1 | 0 | 1 | 0 | 1 | 1 | **#5** 1000kbps |
| 83 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 0 | 1 | 1 | 0 | 1 | 0 | 1 | 1 | **#5** 1000kbps |
| 84 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 1 | 1 | 0 | 1 | **#3** 1000kbps |
| | 0 | 0 | 1 | 0 | 1 | 0 | 1 | 1 | **#4** 250kbps |
| | 1 | 0 | 1 | 0 | 0 | 0 | 0 | 1 | **#5** 1000kbps |
| 85 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 0 | 0 | 1 | 1 | **#3** 1000kbps |
| | 0 | 0 | 1 | 0 | 0 | 0 | 0 | 1 | **#4** 250kbps |
| | 1 | 0 | 1 | 0 | 1 | 0 | 1 | 1 | **#5** 1000kbps |
| 86 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 0 | 0 | 1 | 1 | **#3** 1000kbps |
| | 0 | 0 | 1 | 0 | 0 | 0 | 0 | 1 | **#4** 250kbps |
| | 0 | 1 | 1 | 0 | 1 | 0 | 1 | 1 | **#5** 1000kbps |
| 87 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 1 | 0 | 1 | 0 | 1 | 0 | 1 | 1 | **#5** 1000kbps |
| 88 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 1 | 0 | 1 | 0 | 0 | 1 | 1 | 1 | **#5** 1000kbps |
| 89 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 1 | **#5** 1000kbps |
| 90 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 0 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 0 | 1 | 1 | 1 | **#5** 1000kbps |
| 91 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 1 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 0 | 1 | 1 | 0 | 0 | 1 | 1 | 1 | **#5** 1000kbps |
| 92 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 1 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 0 | 1 | 1 | 0 | 1 | 0 | 1 | 1 | **#5** 1000kbps |
| 93 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 1 | 1 | 0 | 0 | 0 | 0 | 1 | 1 | **#3** 1000kbps |
| | 0 | 0 | 1 | 0 | 0 | 0 | 0 | 1 | **#4** 250kbps |
| | 0 | 1 | 1 | 0 | 1 | 0 | 1 | 1 | **#5** 1000kbps |
| 94 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 1 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 1 | 0 | 1 | 1 | **#5** 1000kbps |
| 95 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 1 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 0 | 1 | 1 | 0 | 0 | 1 | 1 | 1 | **#5** 1000kbps |
| 96 | 1 | 1 | 1 | 0 | 0 | 1 | 0 | 1 | **#1** 250kbps |
| | 1 | 0 | 0 | 0 | 1 | 1 | 1 | 1 | **#2** 500kbps |
| | 1 | 1 | 0 | 0 | 1 | 0 | 1 | 1 | **#3** 1000kbps |
| | 0 | 0 | 1 | 0 | 0 | 1 | 0 | 0 | **#4** 250kbps |
| | 0 | 1 | 1 | 0 | 0 | 1 | 1 | 1 | **#5** 1000kbps |
| 97 | 1 | 1 | 1 | 0 | 0 | 1 | 0 | 1 | **#1** 250kbps |
| | 0 | 1 | 0 | 0 | 1 | 0 | 1 | 0 | **#2** 500kbps |
| | 1 | 1 | 0 | 0 | 0 | 1 | 0 | 0 | **#3** 1000kbps |
| | 0 | 0 | 1 | 0 | 1 | 1 | 1 | 0 | **#4** 250kbps |
| | 1 | 1 | 1 | 1 | 0 | 1 | 1 | 0 | **#5** 1000kbps |
| 98 | 1 | 1 | 1 | 0 | 0 | 1 | 0 | 1 | **#1** 250kbps |
| | 0 | 1 | 0 | 0 | 1 | 0 | 1 | 0 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 1 | 0 | 0 | 1 | **#5** 1000kbps |
| 99 | 1 | 1 | 1 | 0 | 0 | 1 | 0 | 1 | **#1** 250kbps |
| | 0 | 1 | 0 | 0 | 1 | 1 | 1 | 0 | **#2** 500kbps |
| | 1 | 1 | 0 | 0 | 0 | 1 | 0 | 0 | **#3** 1000kbps |
| | 0 | 0 | 1 | 0 | 1 | 0 | 1 | 0 | **#4** 250kbps |
| | 1 | 1 | 1 | 1 | 0 | 1 | 1 | 0 | **#5** 1000kbps |
| 100 | 1 | 1 | 1 | 0 | 0 | 1 | 0 | 1 | **#1** 250kbps |
| | 0 | 1 | 0 | 0 | 1 | 1 | 1 | 0 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 1 | 1 | 0 | 1 | **#5** 1000kbps |
| 101 | 1 | 1 | 1 | 0 | 0 | 1 | 0 | 1 | **#1** 250kbps |
| | 0 | 1 | 0 | 0 | 0 | 0 | 0 | 1 | **#2** 500kbps |
| | 1 | 1 | 0 | 0 | 1 | 1 | 0 | 1 | **#3** 1000kbps |
| | 0 | 0 | 1 | 0 | 0 | 1 | 1 | 1 | **#4** 250kbps |
| | 1 | 1 | 1 | 1 | 1 | 0 | 1 | 1 | **#5** 1000kbps |
| 102 | 1 | 1 | 1 | 0 | 0 | 1 | 0 | 1 | **#1** 250kbps |
| | 0 | 1 | 0 | 0 | 0 | 0 | 0 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 1 | 0 | 1 | 1 | **#5** 1000kbps |
| 103 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 1 | 0 | 0 | 0 | 1 | 1 | 0 | **#3** 1000kbps |
| | 0 | 0 | 1 | 0 | 1 | 1 | 0 | 1 | **#4** 250kbps |
| | 1 | 1 | 1 | 1 | 0 | 1 | 1 | 1 | **#5** 1000kbps |
| 104 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 1 | 0 | 0 | 0 | 0 | 1 | 1 | **#3** 1000kbps |
| | 0 | 0 | 1 | 0 | 1 | 1 | 1 | 1 | **#4** 250kbps |
| | 1 | 1 | 1 | 1 | 1 | 0 | 1 | 1 | **#5** 1000kbps |
| 105 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 1 | 0 | 0 | 0 | 0 | 1 | 1 | **#3** 1000kbps |
| | 0 | 0 | 1 | 0 | 1 | 1 | 1 | 1 | **#4** 250kbps |
| | 1 | 1 | 1 | 1 | 0 | 1 | 1 | 1 | **#5** 1000kbps |
| 106 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 1 | 0 | 0 | 0 | 1 | 1 | 1 | **#3** 1000kbps |
| | 0 | 0 | 1 | 0 | 1 | 1 | 0 | 1 | **#4** 250kbps |
| | 1 | 1 | 1 | 1 | 0 | 1 | 1 | 0 | **#5** 1000kbps |
| 107 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 0 | **#4** 250kbps |
| | 0 | 1 | 0 | 1 | 1 | 0 | 1 | 1 | **#5** 1000kbps |
| 108 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 1 | 0 | 1 | 0 | **#5** 1000kbps |
| 109 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 1 | 0 | 1 | 1 | **#5** 1000kbps |
| 110 | 1 | 1 | 1 | 0 | 0 | 1 | 0 | 1 | **#1** 250kbps |
| | 0 | 1 | 0 | 0 | 1 | 0 | 0 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 0 | 1 | 1 | 1 | **#5** 1000kbps |
| 111 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 1 | 0 | 0 | 0 | 1 | 1 | 0 | **#3** 1000kbps |
| | 0 | 0 | 1 | 0 | 1 | 0 | 0 | 1 | **#4** 250kbps |
| | 1 | 1 | 1 | 1 | 0 | 1 | 1 | 1 | **#5** 1000kbps |
| 112 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 1 | 0 | 0 | 0 | 0 | 0 | 1 | **#3** 1000kbps |
| | 0 | 0 | 1 | 0 | 1 | 0 | 1 | 1 | **#4** 250kbps |
| | 1 | 1 | 1 | 1 | 0 | 1 | 1 | 1 | **#5** 1000kbps |
| 113 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 1 | 0 | 0 | 0 | 0 | 0 | 1 | **#3** 1000kbps |
| | 0 | 0 | 1 | 0 | 1 | 0 | 1 | 1 | **#4** 250kbps |
| | 1 | 1 | 1 | 1 | 1 | 1 | 1 | 1 | **#5** 1000kbps |
| 114 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 1 | 0 | 0 | 0 | 1 | 1 | 1 | **#3** 1000kbps |
| | 0 | 0 | 1 | 0 | 1 | 0 | 0 | 1 | **#4** 250kbps |
| | 1 | 1 | 1 | 1 | 0 | 1 | 1 | 0 | **#5** 1000kbps |
| 115 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 0 | 1 | 1 | 1 | **#5** 1000kbps |
| 116 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 1 | 1 | 1 | 1 | **#5** 1000kbps |
| 117 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 0 | **#4** 250kbps |
| | 0 | 1 | 0 | 1 | 1 | 1 | 1 | 1 | **#5** 1000kbps |
| 118 | 1 | 1 | 1 | 0 | 0 | 1 | 0 | 1 | **#1** 250kbps |
| | 0 | 1 | 0 | 0 | 1 | 1 | 0 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 1 | 1 | 1 | 0 | **#5** 1000kbps |
| 119 | 1 | 1 | 1 | 0 | 0 | 1 | 0 | 1 | **#1** 250kbps |
| | 0 | 1 | 0 | 0 | 0 | 0 | 1 | 1 | **#2** 500kbps |
| | 1 | 1 | 0 | 0 | 1 | 0 | 0 | 1 | **#3** 1000kbps |
| | 0 | 0 | 1 | 0 | 0 | 1 | 1 | 1 | **#4** 250kbps |
| | 1 | 1 | 1 | 1 | 1 | 1 | 1 | 1 | **#5** 1000kbps |
| 120 | 1 | 1 | 1 | 0 | 0 | 1 | 0 | 1 | **#1** 250kbps |
| | 0 | 1 | 0 | 0 | 0 | 0 | 1 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 1 | 1 | 1 | 1 | **#5** 1000kbps |
| 121 | 1 | 1 | 1 | 0 | 0 | 1 | 0 | 1 | **#1** 250kbps |
| | 0 | 1 | 0 | 0 | 1 | 0 | 1 | 1 | **#2** 500kbps |
| | 1 | 1 | 0 | 0 | 0 | 1 | 0 | 0 | **#3** 1000kbps |
| | 0 | 0 | 1 | 0 | 1 | 1 | 1 | 1 | **#4** 250kbps |
| | 1 | 1 | 1 | 1 | 0 | 1 | 1 | 1 | **#5** 1000kbps |
| 122 | 1 | 1 | 1 | 0 | 0 | 1 | 0 | 1 | **#1** 250kbps |
| | 0 | 1 | 0 | 0 | 1 | 0 | 1 | 1 | **#2** 500kbps |
| | 1 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 1 | 1 | 1 | 1 | 0 | 1 | 1 | 1 | **#5** 1000kbps |
| 123 | 1 | 1 | 1 | 0 | 0 | 1 | 0 | 1 | **#1** 250kbps |
| | 0 | 1 | 0 | 0 | 1 | 0 | 1 | 1 | **#2** 500kbps |
| | 1 | 1 | 0 | 0 | 0 | 0 | 0 | 1 | **#3** 1000kbps |
| | 0 | 0 | 1 | 0 | 1 | 1 | 0 | 1 | **#4** 250kbps |
| | 1 | 1 | 1 | 1 | 1 | 1 | 1 | 1 | **#5** 1000kbps |
| 124 | 1 | 1 | 1 | 0 | 0 | 1 | 0 | 1 | **#1** 250kbps |
| | 0 | 1 | 0 | 0 | 1 | 0 | 1 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 0 | **#4** 250kbps |
| | 0 | 1 | 0 | 1 | 1 | 0 | 0 | 1 | **#5** 1000kbps |
| 125 | 1 | 1 | 1 | 0 | 0 | 1 | 0 | 1 | **#1** 250kbps |
| | 0 | 1 | 0 | 0 | 1 | 0 | 1 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 0 | 0 | 0 | 1 | **#5** 1000kbps |
| 126 | 1 | 1 | 1 | 0 | 0 | 1 | 0 | 1 | **#1** 250kbps |
| | 0 | 1 | 0 | 0 | 1 | 0 | 1 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 1 | 0 | 0 | 1 | **#5** 1000kbps |
| 127 | 1 | 1 | 1 | 0 | 0 | 1 | 0 | 1 | **#1** 250kbps |
| | 0 | 1 | 0 | 0 | 0 | 1 | 1 | 1 | **#2** 500kbps |
| | 1 | 1 | 0 | 0 | 1 | 0 | 0 | 1 | **#3** 1000kbps |
| | 0 | 0 | 1 | 0 | 0 | 0 | 1 | 1 | **#4** 250kbps |
| | 1 | 1 | 1 | 1 | 1 | 1 | 1 | 1 | **#5** 1000kbps |
| 128 | 1 | 1 | 1 | 0 | 0 | 1 | 0 | 1 | **#1** 250kbps |
| | 0 | 1 | 0 | 0 | 0 | 1 | 1 | 1 | **#2** 500kbps |
| | 1 | 1 | 0 | 0 | 1 | 1 | 0 | 1 | **#3** 1000kbps |
| | 0 | 0 | 1 | 0 | 0 | 0 | 0 | 1 | **#4** 250kbps |
| | 1 | 1 | 1 | 1 | 1 | 0 | 1 | 1 | **#5** 1000kbps |
| 129 | 1 | 1 | 1 | 0 | 0 | 1 | 0 | 1 | **#1** 250kbps |
| | 0 | 1 | 0 | 0 | 0 | 1 | 1 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 1 | 1 | 0 | 1 | **#5** 1000kbps |
| 130 | 1 | 1 | 1 | 0 | 0 | 1 | 0 | 1 | **#1** 250kbps |
| | 0 | 1 | 0 | 0 | 0 | 1 | 1 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 1 | **#4** 250kbps |
| | 0 | 1 | 0 | 1 | 1 | 0 | 0 | 1 | **#5** 1000kbps |
| 131 | 1 | 1 | 1 | 0 | 0 | 1 | 0 | 1 | **#1** 250kbps |
| | 0 | 1 | 0 | 0 | 1 | 1 | 1 | 1 | **#2** 500kbps |
| | 1 | 1 | 0 | 0 | 0 | 1 | 0 | 0 | **#3** 1000kbps |
| | 0 | 0 | 1 | 0 | 1 | 0 | 1 | 1 | **#4** 250kbps |
| | 1 | 1 | 1 | 1 | 0 | 1 | 1 | 1 | **#5** 1000kbps |
| 132 | 1 | 1 | 1 | 0 | 0 | 1 | 0 | 1 | **#1** 250kbps |
| | 0 | 1 | 0 | 0 | 1 | 1 | 1 | 1 | **#2** 500kbps |
| | 1 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 1 | 1 | 1 | 1 | 1 | 0 | 1 | 1 | **#5** 1000kbps |
| 133 | 1 | 1 | 1 | 0 | 0 | 1 | 0 | 1 | **#1** 250kbps |
| | 0 | 1 | 0 | 0 | 1 | 1 | 1 | 1 | **#2** 500kbps |
| | 1 | 1 | 0 | 0 | 0 | 0 | 1 | 1 | **#3** 1000kbps |
| | 0 | 0 | 1 | 0 | 1 | 0 | 0 | 1 | **#4** 250kbps |
| | 1 | 1 | 1 | 1 | 0 | 1 | 1 | 1 | **#5** 1000kbps |
| 134 | 1 | 1 | 1 | 0 | 0 | 1 | 0 | 1 | **#1** 250kbps |
| | 0 | 1 | 0 | 0 | 1 | 1 | 1 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 1 | 1 | 0 | 1 | **#5** 1000kbps |
| 135 | 1 | 1 | 1 | 0 | 0 | 1 | 0 | 1 | **#1** 250kbps |
| | 0 | 1 | 0 | 0 | 1 | 1 | 1 | 1 | **#2** 500kbps |
| | 1 | 0 | 1 | 0 | 0 | 0 | 0 | 1 | **#3** 1000kbps |
| | 0 | 1 | 1 | 0 | 1 | 0 | 1 | 1 | **#4** 250kbps |
| | 0 | 1 | 0 | 1 | 0 | 0 | 1 | 1 | **#5** 1000kbps |
| 136 | 1 | 1 | 1 | 0 | 0 | 1 | 0 | 1 | **#1** 250kbps |
| | 0 | 1 | 0 | 0 | 1 | 1 | 1 | 1 | **#2** 500kbps |
| | 1 | 0 | 1 | 0 | 0 | 0 | 1 | 1 | **#3** 1000kbps |
| | 0 | 1 | 1 | 0 | 1 | 1 | 1 | 0 | **#4** 250kbps |
| | 0 | 1 | 0 | 1 | 1 | 1 | 0 | 1 | **#5** 1000kbps |
| 137 | 1 | 1 | 1 | 0 | 0 | 1 | 0 | 1 | **#1** 250kbps |
| | 0 | 1 | 0 | 1 | 1 | 0 | 1 | 0 | **#2** 500kbps |
| | 1 | 1 | 0 | 1 | 0 | 1 | 0 | 0 | **#3** 1000kbps |
| | 0 | 0 | 1 | 1 | 1 | 1 | 1 | 0 | **#4** 250kbps |
| | 1 | 1 | 1 | 1 | 0 | 1 | 1 | 0 | **#5** 1000kbps |
| 138 | 1 | 1 | 1 | 0 | 0 | 1 | 0 | 1 | **#1** 250kbps |
| | 0 | 1 | 0 | 1 | 1 | 1 | 1 | 0 | **#2** 500kbps |
| | 1 | 1 | 0 | 1 | 0 | 1 | 0 | 0 | **#3** 1000kbps |
| | 0 | 0 | 1 | 1 | 1 | 0 | 1 | 0 | **#4** 250kbps |
| | 1 | 1 | 1 | 1 | 0 | 1 | 1 | 0 | **#5** 1000kbps |
| 139 | 1 | 1 | 1 | 0 | 0 | 1 | 0 | 1 | **#1** 250kbps |
| | 0 | 1 | 0 | 1 | 0 | 0 | 0 | 1 | **#2** 500kbps |
| | 1 | 1 | 0 | 1 | 1 | 1 | 0 | 1 | **#3** 1000kbps |
| | 0 | 0 | 1 | 1 | 0 | 1 | 1 | 1 | **#4** 250kbps |
| | 1 | 1 | 1 | 1 | 1 | 0 | 1 | 1 | **#5** 1000kbps |
| 140 | 1 | 1 | 1 | 0 | 0 | 1 | 0 | 1 | **#1** 250kbps |
| | 0 | 1 | 0 | 1 | 1 | 0 | 0 | 1 | **#2** 500kbps |
| | 1 | 1 | 0 | 1 | 0 | 1 | 1 | 0 | **#3** 1000kbps |
| | 0 | 0 | 1 | 1 | 1 | 1 | 0 | 1 | **#4** 250kbps |
| | 1 | 1 | 1 | 1 | 0 | 1 | 1 | 1 | **#5** 1000kbps |
| 141 | 1 | 1 | 1 | 0 | 0 | 1 | 0 | 1 | **#1** 250kbps |
| | 0 | 1 | 0 | 1 | 1 | 0 | 0 | 1 | **#2** 500kbps |
| | 1 | 1 | 0 | 1 | 0 | 0 | 1 | 1 | **#3** 1000kbps |
| | 0 | 0 | 1 | 1 | 1 | 1 | 1 | 1 | **#4** 250kbps |
| | 1 | 1 | 1 | 1 | 1 | 0 | 1 | 1 | **#5** 1000kbps |
| 142 | 1 | 1 | 1 | 0 | 0 | 1 | 0 | 1 | **#1** 250kbps |
| | 0 | 1 | 0 | 1 | 1 | 0 | 0 | 1 | **#2** 500kbps |
| | 1 | 1 | 0 | 1 | 0 | 0 | 1 | 1 | **#3** 1000kbps |
| | 0 | 0 | 1 | 1 | 1 | 1 | 1 | 1 | **#4** 250kbps |
| | 1 | 1 | 1 | 1 | 0 | 1 | 1 | 1 | **#5** 1000kbps |
| 143 | 1 | 1 | 1 | 0 | 0 | 1 | 0 | 1 | **#1** 250kbps |
| | 0 | 1 | 0 | 1 | 1 | 0 | 0 | 1 | **#2** 500kbps |
| | 1 | 1 | 0 | 1 | 0 | 1 | 1 | 1 | **#3** 1000kbps |
| | 0 | 0 | 1 | 1 | 1 | 1 | 0 | 1 | **#4** 250kbps |
| | 1 | 1 | 1 | 1 | 0 | 1 | 1 | 0 | **#5** 1000kbps |
| 144 | 1 | 1 | 1 | 0 | 0 | 1 | 0 | 1 | **#1** 250kbps |
| | 0 | 1 | 0 | 1 | 1 | 1 | 0 | 1 | **#2** 500kbps |
| | 1 | 1 | 0 | 1 | 0 | 1 | 1 | 0 | **#3** 1000kbps |
| | 0 | 0 | 1 | 1 | 1 | 0 | 0 | 1 | **#4** 250kbps |
| | 1 | 1 | 1 | 1 | 0 | 1 | 1 | 1 | **#5** 1000kbps |
| 145 | 1 | 1 | 1 | 0 | 0 | 1 | 0 | 1 | **#1** 250kbps |
| | 0 | 1 | 0 | 1 | 1 | 1 | 0 | 1 | **#2** 500kbps |
| | 1 | 1 | 0 | 1 | 0 | 0 | 0 | 1 | **#3** 1000kbps |
| | 0 | 0 | 1 | 1 | 1 | 0 | 1 | 1 | **#4** 250kbps |
| | 1 | 1 | 1 | 1 | 0 | 1 | 1 | 1 | **#5** 1000kbps |
| 146 | 1 | 1 | 1 | 0 | 0 | 1 | 0 | 1 | **#1** 250kbps |
| | 0 | 1 | 0 | 1 | 1 | 1 | 0 | 1 | **#2** 500kbps |
| | 1 | 1 | 0 | 1 | 0 | 0 | 0 | 1 | **#3** 1000kbps |
| | 0 | 0 | 1 | 1 | 1 | 0 | 1 | 1 | **#4** 250kbps |
| | 1 | 1 | 1 | 1 | 1 | 1 | 1 | 1 | **#5** 1000kbps |
| 147 | 1 | 1 | 1 | 0 | 0 | 1 | 0 | 1 | **#1** 250kbps |
| | 0 | 1 | 0 | 1 | 1 | 1 | 0 | 1 | **#2** 500kbps |
| | 1 | 1 | 0 | 1 | 0 | 1 | 1 | 1 | **#3** 1000kbps |
| | 0 | 0 | 1 | 1 | 1 | 0 | 0 | 1 | **#4** 250kbps |
| | 1 | 1 | 1 | 1 | 0 | 1 | 1 | 0 | **#5** 1000kbps |
| 148 | 1 | 1 | 1 | 0 | 0 | 1 | 0 | 1 | **#1** 250kbps |
| | 0 | 1 | 0 | 1 | 0 | 0 | 1 | 1 | **#2** 500kbps |
| | 1 | 1 | 0 | 1 | 1 | 0 | 0 | 1 | **#3** 1000kbps |
| | 0 | 0 | 1 | 1 | 0 | 1 | 1 | 1 | **#4** 250kbps |
| | 1 | 1 | 1 | 1 | 1 | 1 | 1 | 1 | **#5** 1000kbps |
| 149 | 1 | 1 | 1 | 0 | 0 | 1 | 0 | 1 | **#1** 250kbps |
| | 0 | 1 | 0 | 1 | 1 | 0 | 1 | 1 | **#2** 500kbps |
| | 1 | 1 | 0 | 1 | 0 | 1 | 0 | 0 | **#3** 1000kbps |
| | 0 | 0 | 1 | 1 | 1 | 1 | 1 | 1 | **#4** 250kbps |
| | 1 | 1 | 1 | 1 | 0 | 1 | 1 | 1 | **#5** 1000kbps |
| 150 | 1 | 1 | 1 | 0 | 0 | 1 | 0 | 1 | **#1** 250kbps |
| | 0 | 1 | 0 | 1 | 1 | 0 | 1 | 1 | **#2** 500kbps |
| | 1 | 1 | 0 | 1 | 0 | 0 | 0 | 1 | **#3** 1000kbps |
| | 0 | 0 | 1 | 1 | 1 | 1 | 0 | 1 | **#4** 250kbps |
| | 1 | 1 | 1 | 1 | 0 | 1 | 1 | 1 | **#5** 1000kbps |
| 151 | 1 | 1 | 1 | 0 | 0 | 1 | 0 | 1 | **#1** 250kbps |
| | 0 | 1 | 0 | 1 | 1 | 0 | 1 | 1 | **#2** 500kbps |
| | 1 | 1 | 0 | 1 | 0 | 0 | 0 | 1 | **#3** 1000kbps |
| | 0 | 0 | 1 | 1 | 1 | 1 | 0 | 1 | **#4** 250kbps |
| | 1 | 1 | 1 | 1 | 1 | 1 | 1 | 1 | **#5** 1000kbps |
| 152 | 1 | 1 | 1 | 0 | 0 | 1 | 0 | 1 | **#1** 250kbps |
| | 0 | 1 | 0 | 1 | 0 | 1 | 1 | 1 | **#2** 500kbps |
| | 1 | 1 | 0 | 1 | 1 | 0 | 0 | 1 | **#3** 1000kbps |
| | 0 | 0 | 1 | 1 | 0 | 0 | 1 | 1 | ***#4*** 250kbps |
| | 1 | 1 | 1 | 1 | 1 | 1 | 1 | 1 | ***#5*** 1000kbps |
| 153 | 1 | 1 | 1 | 0 | 0 | 1 | 0 | 1 | ***#1*** 250kbps |
| | 0 | 1 | 0 | 1 | 0 | 1 | 1 | 1 | ***#2*** 500kbps |
| | 1 | 1 | 0 | 1 | 1 | 1 | 0 | 1 | ***#3*** 1000kbps |
| | 0 | 0 | 1 | 1 | 0 | 0 | 0 | 1 | **#4** 250kbps |
| | 1 | 1 | 1 | 1 | 1 | 0 | 1 | 1 | **#5** 1000kbps |
| 154 | 1 | 1 | 1 | 0 | 0 | 1 | 0 | 1 | **#1** 250kbps |
| | 0 | 1 | 0 | 1 | 1 | 1 | 1 | 1 | **#2** 500kbps |
| | 1 | 1 | 0 | 1 | 0 | 1 | 0 | 0 | **#3** 1000kbps |
| | 0 | 0 | 1 | 1 | 1 | 0 | 1 | 1 | **#4** 250kbps |
| | 1 | 1 | 1 | 1 | 0 | 1 | 1 | 1 | **#5** 1000kbps |
| 155 | 1 | 1 | 1 | 0 | 0 | 1 | 0 | 1 | **#1** 250kbps |
| | 0 | 1 | 0 | 1 | 1 | 1 | 1 | 1 | **#2** 500kbps |
| | 1 | 1 | 0 | 1 | 0 | 0 | 1 | 1 | **#3** 1000kbps |
| | 0 | 0 | 1 | 1 | 1 | 0 | 0 | 1 | **#4** 250kbps |
| | 1 | 1 | 1 | 1 | 1 | 0 | 1 | 1 | **#5** 1000kbps |
| 156 | 1 | 1 | 1 | 0 | 0 | 1 | 0 | 1 | **#1** 250kbps |
| | 0 | 1 | 0 | 1 | 1 | 1 | 1 | 1 | **#2** 500kbps |
| | 1 | 1 | 0 | 1 | 0 | 0 | 1 | 1 | **#3** 1000kbps |
| | 0 | 0 | 1 | 1 | 1 | 0 | 0 | 1 | **#4** 250kbps |
| | 1 | 1 | 1 | 1 | 0 | 1 | 1 | 1 | **#5** 1000kbps |

For better description, different values of the SFD field in Table 13 indicate performance of different physical layer configurations. The following illustrates symbol error rate simulation results of SFD symbols and payload symbols.

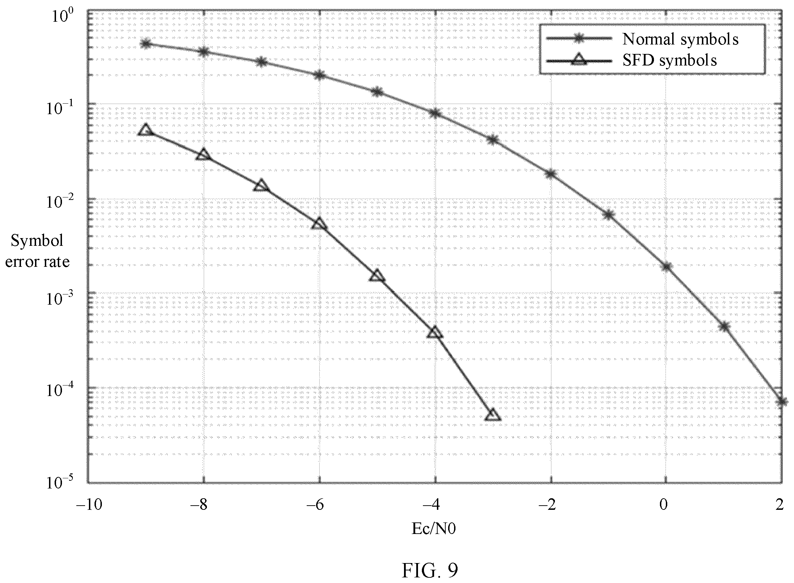

For example, FIG. 9 is another diagram of simulation of symbol error rates of SFD symbols and payload symbols according to an embodiment of this application. The SFD symbol used in a simulation process is a data symbol when the number of the SFD group is 1 in Table 13, the payload symbol used in the simulation process is a data symbol in Table 2, and a payload length of each data packet is 127 bytes (bytes). A simulation channel is an additive white Gaussian noise channel.

FIG. 9 shows symbol error rate performance of the SFD symbols (SFD symbols) and the payload symbols (payload symbols) on the additive white Gaussian noise channel. In FIG. 9, a horizontal coordinate represents a power ratio (unit: dB) of each chip to background noise, and a vertical coordinate represents a symbol error rate (symbol error rate) of a receiving end. It can be learned from FIG. 9 that, in a case of a same symbol error rate, for example, when the symbol error rate is 10⁻³, the SFD symbol has a lower bit to background noise power ratio, which indicates that demodulation performance of the SFD symbol is better than that of the payload symbol. In other words, in this embodiment of this application, the demodulation performance of the SFD symbol or the preamble symbol can be further improved. In addition, the physical layer configuration #1 in Table 13 is indicated by the value of the SFD field being 1 1 1 0 0 1 0 1, which is compatible with an existing protocol. In addition, the value in the first value set in Table 13 does not include the data symbol 0, so that the SFD field can maintain an original delimiter function.

### Embodiment 2

Embodiment 2 of this application mainly describes modifying a format of a PHR field and adding a bit to the PHR field to indicate different physical layer configurations.

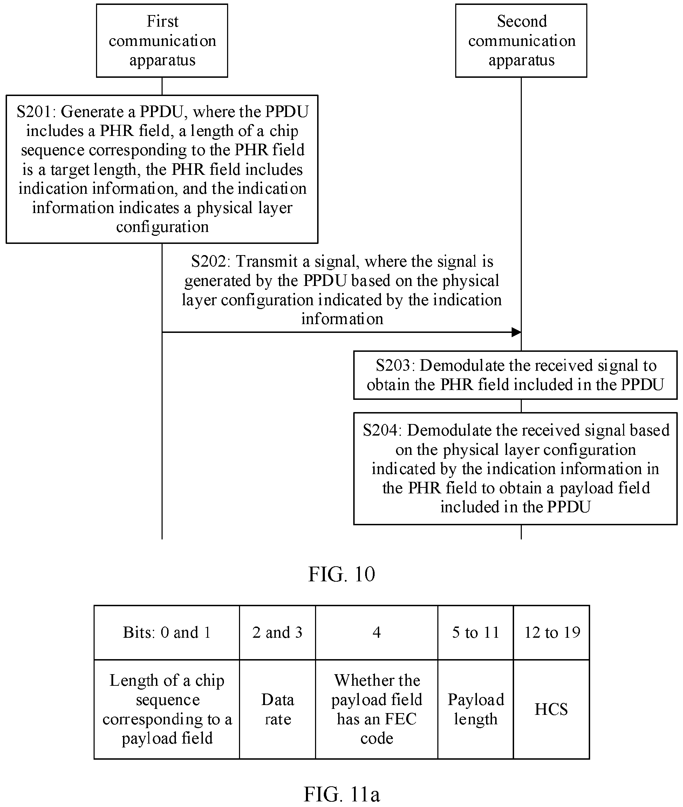

FIG. 10 is another schematic flowchart of the physical layer configuration indication method according to an embodiment of this application. A first communication apparatus and a second communication apparatus in the method may be any two devices that can perform data transmission in FIG. 1 or FIG. 2. As shown in FIG. 10, the physical layer configuration indication method includes but is not limited to the following steps:
S201: The first communication apparatus generates a PPDU, where the PPDU includes a PHR field, a length of a chip sequence corresponding to the PHR field is a target length, the PHR field includes indication information, and the indication information indicates a physical layer configuration.
S202: The first communication apparatus transmits a signal, where the signal is generated by the PPDU based on the physical layer configuration indicated by the indication information.

Correspondingly, the second communication apparatus receives the signal.

In some scenarios, a signal in embodiments of this application may be a narrowband signal, and may be used to assist UWB in ranging, sensing, data transmission, or the like. The signal may provide initial synchronization information for the UWB and transfer data. For example, control information, synchronization information, or data of the UWB may be carried in a payload of the signal. Application of the signal in step S202 in the UWB is not limited in embodiments of this application.

Optionally, a structure of the PPDU may be shown in FIG. 3. The PPDU includes but is not limited to a preamble field, an SFD field, the PHR field, and a payload field. Herein, all bits of the preamble field may be 0, and a bit value of the SFD field may be fixed to 1 1 1 0 0 1 0 1.

Optionally, the length of the chip sequence corresponding to the PHR field in the PPDU may be the target length. The target length may be predefined, or specified in a standard protocol, or determined by the first communication apparatus and the second communication apparatus through negotiation. A manner of determining the target length is not limited in embodiments of this application, provided that the first communication apparatus and the second communication apparatus can learn of the target length. For example, the target length may be one of 32 bits, 16 bits, 8 bits, or 4 bits.

It may be understood that, if the length of the chip sequence corresponding to the PHR field is determined, the chip sequence corresponding to the PHR field is determined. That is, when modulation and spreading are performed on the PHR field, every four bits of the PHR field are mapped to one data symbol, and each data symbol is mapped to one chip sequence of the target length. It may be further understood that a manner of mapping a data symbol to chip sequences of different lengths may be specified in a standard protocol. For example, it is assumed that the target length is 32 bits. A mapping table from the data symbol to a 32-bit chip sequence may be shown in Table 2, Table 5, Table 8, or Table 11. Details are not described herein again.

Optionally, the PHR field may include the indication information, and the indication information may indicate the physical layer configuration. In a possible implementation, the physical layer configuration may include one or more of the following parameters: a length of a chip sequence corresponding to the payload field, a data rate, or whether the payload field has an FEC code. In other words, the indication information may indicate the length of the chip sequence corresponding to the payload field, the data rate, or whether the payload field has an FEC code. The indication information may be implemented by using a plurality of fields.

For example, FIG. 11a is a diagram of still another format of the PHR field according to an embodiment of this application. FIG. 11a shows a possible format of the PHR field without a convolutional code. As shown in FIG. 11a, a length of the PHR field is 20 bits, where a bit 0 and a bit 1 (bits 0 and 1, two bits in total) indicate a length of a chip sequence corresponding to a payload field, a bit 2 and a bit 3 (bits 2 and 3, two bits in total) indicate a data rate, a bit 4 (bit 4, one bit in total) indicates whether the payload field has an FEC code, a bit 5 to a bit 11 (bits 5 to 11, seven bits in total) indicate a payload length (unit: byte), and a bit 12 to a bit 19 (bits 12 to 19, eight bits in total) serve as a header check sequence (header check sequence, HCS). Optionally, the PHR field shown in FIG. 11a may alternatively be 12 bits, and does not include the HCS.

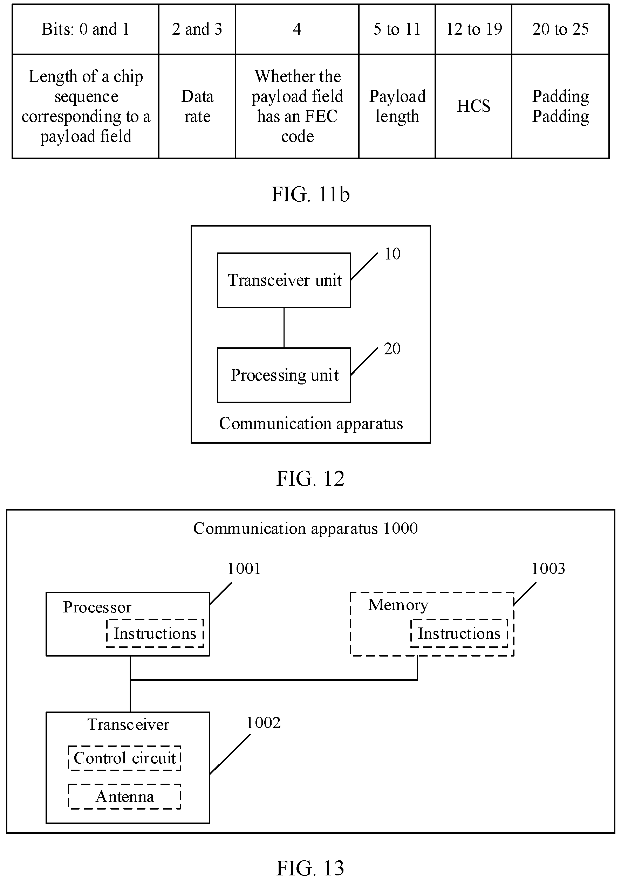

For example, FIG. 11b is a diagram of yet another format of the PHR field according to an embodiment of this application. FIG. 11b shows a possible format of the PHR field with a convolutional code. As shown in FIG. 11b, a length of the PHR field is 26 bits, where a bit 0 and a bit 1 (bits 0 and 1, two bits in total) indicate a length of a chip sequence corresponding to a payload field, a bit 2 and a bit 3 (bits 2 and 3, two bits in total) indicate a data rate, a bit 4 (bit 4, one bit in total) indicates whether the payload field has an FEC code, a bit 5 to a bit 11 (bits 5 to 11, seven bits in total) indicate a payload length (unit: byte), a bit 12 to a bit 19 (bits 12 to 19, eight bits in total) serve as an HCS, and a bit 20 to a bit 25 (bits 20 to 25, six bits in total) are all 0 and serve as padding. Optionally, the PHR field shown in FIG. 11b may alternatively be 18 bits, and does not include the HCS. In this case, bits 12 to 17 are all 0 and serve as the padding.

In this embodiment of this application, the HCS is added to the PHR field, to check a bit in the PHR field. In this way, if there is an error bit in the PHR field, an HCS check cannot be passed, and therefore, retransmitting or discarding narrowband data transmitted this time is fed back.

It may be understood that a correspondence between each bit in the PHR field shown in FIG. 11a and FIG. 11b and a meaning indicated by the bit is merely an example. For example, the bits 0 and 1 may indicate the data rate, the bit 2 indicates whether the payload field has an FEC code, the bits 3 and 4 indicate the length of the chip sequence corresponding to the payload field, and correspondences between other bits and meanings indicated by the other bits are the same as those in FIG. 11a and FIG. 11b.

It may be understood that, as shown in Table 1, there are four lengths of the chip sequence corresponding to the payload field: 32 bits, 16 bits, 8 bits, and 4 bits respectively; and there are three data rates: 250kbps, 500kbps, and 1000kbps respectively. Therefore, the length of the chip sequence corresponding to the payload field and the data rate each are indicated by two bits. Certainly, the length of the chip sequence corresponding to the payload field and the data rate may alternatively be indicated in another manner. For example, if a bitmap is used for indication, the length of the chip sequence corresponding to the payload field needs to be indicated by four bits, and the data rate needs to be indicated by three bits. A specific indication manner of each parameter in FIG. 11a and FIG. 11b is not limited in embodiments of this application. It should be understood that, as a possibility of the length of the chip sequence corresponding to the payload field and the data rate increases, corresponding indication bits also increase. A quantity of indication bits of each parameter shown in FIG. 11a and FIG. 11b is merely an example. In actual application, a quantity of indication bits of each parameter may be greater or smaller than the quantity of indication bits of each parameter shown in FIG. 11a and FIG. 11b.

In addition, when there is no convolutional code, the length (unit: bit) of the PHR field is an integer multiple of 4; or when there is a convolutional code, the length (unit: bit) of the PHR field is an integer multiple of 2.

It may be further understood that the symbol length of the preamble field, the symbol length of the SFD field, and the symbol length of the PHR field in the physical layer configuration shown in Table 1 are respectively determined by bit lengths of the preamble field, the SFD field, and the PHR field in the PPDU (every four bits are mapped to one data symbol), and the bit lengths of the preamble field, the SFD field, and the PHR field in the PPDU are fixed. Therefore, when the physical layer configuration is indicated, the symbol length of the preamble field, the symbol length of the SFD field, and the symbol length of the PHR field may not be indicated. In addition, the lengths of the chip sequences corresponding to the preamble field and the SFD field in the physical layer configuration shown in Table 1 are all 32. Therefore, when the physical layer configuration is indicated, the lengths of the chip sequences corresponding to the preamble field and the SFD field may not be indicated. Therefore, in this embodiment of this application, all information about the physical layer configuration shown in Table 1 may be learned by indicating the length of the chip sequence corresponding to the payload field, the data rate, and whether the payload field has an FEC code.

In this embodiment of this application, each physical layer parameter (for example, the length of the chip sequence corresponding to the payload field, the data rate, and whether the payload field has an FEC code) of the physical layer configuration is indicated in the PHR field, so that the physical layer configuration is more flexible, and is not limited to several fixed physical layer configurations (for example, the five physical layer configurations in Table 1).

In another possible implementation, the physical layer configuration may include one or more of the following parameters: a data rate, a length (which may be a symbol length or a bit length) of the preamble field, a length (which may be a symbol length or a bit length) of the SFD field, a length of a chip sequence corresponding to the preamble field and the SFD field, a length (which may be a symbol length or a bit length) of the PHR field, and a length of a chip sequence corresponding to the payload field, or a forward error correction code on the PHR field and the payload field. For example, the indication information may indicate an index of the physical layer configuration, and one index identifies one physical layer configuration. For example, the five physical layer configurations shown in Table 1 are used as examples, and the indication information is 3 bits. For example, when a value of the indication information is 1 (decimal), it indicates a physical layer configuration whose index value is 1; when a value of the indication information is 2 (decimal), it indicates a physical layer configuration whose index value is 2; when a value of the indication information is 3 (decimal), it indicates a physical layer configuration whose index value is 3; when a value of the indication information is 4 (decimal), it indicates a physical layer configuration whose index value is 4; when a value of the indication information is 5 (decimal), it indicates a physical layer configuration whose index value is 5; or when a value of the indication information is 6 or 7 (decimal), it indicates reserved. In this embodiment of this application, a quantity of physical layer configurations is not limited, and quantities of physical layer configurations in different modulation schemes may be different. A correspondence between a physical layer configuration and an index value is not limited in embodiments of this application.

In this embodiment of this application, the index of the physical layer configuration is indicated in the PHR field, so that overheads can be reduced.

It may be understood that because the length of the chip sequence corresponding to the PHR field is the target length, the physical layer configuration indicated by the indication information herein may not include the length of the chip sequence corresponding to the PHR field, or certainly may include the length of the chip sequence corresponding to the PHR field. This is not limited in embodiments of this application.

Optionally, after generating the PPDU, the first communication apparatus may generate the signal (a modulated signal is obtained herein) based on the physical layer configuration indicated by the indication information in the PHR field and the PPDU, and transmit the signal. In other words, the signal is generated by the PPDU based on the physical layer configuration. For example, the first communication apparatus may generate the signal according to the modulation and spreading process shown in FIG. 6. Details are not described herein. It may be understood that the modulation scheme in this embodiment of this application may be O-QPSK modulation, or certainly may be another modulation scheme, for example, QPSK modulation. A specific modulation scheme is not limited in embodiments of this application.

S203: The second communication apparatus demodulates the received signal to obtain the PHR field included in the PPDU.

S204: The second communication apparatus demodulates the received signal based on the physical layer configuration indicated by the indication information in the PHR field to obtain the payload field included in the PPDU.

Optionally, the second communication apparatus may determine a mapping table from a data symbol to a chip sequence based on the length (namely, the target length) of the chip sequence corresponding to the PHR field, and then perform processes such as demodulation (namely, an inverse operation of modulation), chip-to-symbol mapping, and symbol-to-bit mapping on the received signal based on the mapping table, to obtain the PHR field included in the PPDU. For example, the second communication apparatus may perform an inverse process of FIG. 6, to obtain the PHR field. It may be understood that although the O-QPSK modulation is used as an example in FIG. 6, in this embodiment of this application, the modulation scheme is not limited to the O-QPSK modulation, and may alternatively be another modulation scheme, for example, QPSK modulation. Then, the second communication apparatus may demodulate the received signal based on the physical layer configuration indicated by the indication information in the PHR field to obtain the payload field (namely, data information) included in the PPDU. For example, the second communication apparatus may demodulate the received signal based on the length of the chip sequence corresponding to the payload field, the data rate, and whether the payload field has an FEC code to obtain the payload field.

In this embodiment of this application, the length of the chip sequence corresponding to the PHR field is fixed, the format of the PHR field is modified, and the indication information is carried in the PHR field to indicate different physical layer configurations, so that a receive end can obtain the PPDU through correct demodulation to obtain the payload (namely, data) in the PPDU, thereby flexibly indicating the different physical layer configurations.

The foregoing content describes in detail the method provided in this application. To facilitate implementation of the foregoing solutions in embodiments of this application, embodiments of this application further provide a corresponding apparatus or device.

In this application, a communication apparatus is divided into functional modules based on the foregoing method embodiment. For example, the communication apparatus may be divided into functional modules corresponding to functions, or two or more functions may be integrated into one processing module. The integrated module may be implemented in a form of hardware, or may be implemented in a form of a software functional module. It should be noted that, in this application, module division is an example, and is merely logical function division. During actual implementation, another division manner may be used. The following describes in detail communication apparatuses in embodiments of this application with reference to FIG. 12 to FIG. 14.

FIG. 12 is a diagram of a structure of a communication apparatus according to an embodiment of this application. As shown in FIG. 12, the communication apparatus includes a transceiver unit 10 and a processing unit 20.

In some embodiments of this application, the communication apparatus may be the first communication apparatus shown above or a chip in the first communication apparatus. To be specific, the communication apparatus shown in FIG. 12 may be configured to perform steps, functions, or the like performed by the first communication apparatus in the foregoing method embodiments.

In a design, the processing unit 20 is configured to generate a PPDU, where the PPDU includes a preamble field and an SFD field, and different values of the SFD field correspond to different physical layer configurations, or different values of the preamble field correspond to different physical layer configurations; and the transceiver unit 10 is configured to transmit a signal, where the signal is generated by the PPDU based on a physical layer configuration corresponding to a value of the SFD field or a value of the preamble field.

For specific descriptions of the PPDU, the preamble field, the SFD field, the physical layer configuration, and the like, refer to the foregoing method Embodiment 1. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to perform step S102 shown in FIG. 7, and the processing unit 20 may be configured to perform step S101 shown in FIG. 7.

In another design, the processing unit 20 is configured to generate a PPDU, where the PPDU includes a PHR field, a length of a chip sequence corresponding to the PHR field is a target length, the PHR field includes indication information, and the indication information indicates a physical layer configuration; and the transceiver unit 10 is configured to transmit a signal, where the signal is generated by the PPDU based on the physical layer configuration indicated by the indication information.

For specific descriptions of the PPDU, the PHR field, the physical layer configuration, and the like, refer to the foregoing method Embodiment 2. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to perform step S202 shown in FIG. 9, and the processing unit 20 may be configured to perform step S201 shown in FIG. 10.

Still refer to FIG. 12. In some other embodiments of this application, the communication apparatus may be the second communication apparatus shown above or a chip in the second communication apparatus. To be specific, the communication apparatus shown in FIG. 12 may be configured to perform steps, functions, or the like performed by the second communication apparatus in the foregoing method embodiments.

In a design, the transceiver unit 10 is configured to receive a signal, where the signal is generated by a PPDU based on a physical layer configuration corresponding to a value of a preamble field or a value of an SFD field in the PPDU; the processing unit 20 is configured to demodulate the signal to obtain the preamble field and the SFD field that are included in the PPDU, where different values of the SFD field correspond to different physical layer configurations, or different values of the preamble field correspond to different physical layer configurations; and the processing unit 20 is further configured to: determine the physical layer configuration based on the value of the SFD field or the value of the preamble field, and demodulate the signal based on the determined physical layer configuration to obtain a payload field included in the PPDU.

For specific descriptions of the PPDU, the preamble field, the SFD field, the physical layer configuration, and the like, refer to the foregoing method Embodiment 1. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to receive the signal transmitted in step S102 shown in FIG. 7, and the processing unit 20 may be configured to perform step S103 and step S104 shown in FIG. 7.

In another design, the transceiver unit 10 is configured to receive a signal, where the signal is generated by a PPDU based on a physical layer configuration indicated by indication information in a PHR field; the processing unit 20 is configured to demodulate the received signal to obtain the PHR field included in the PPDU; and the processing unit 20 is further configured to demodulate the received signal based on the physical layer configuration indicated by the indication information in the PHR field to obtain a payload field included in the PPDU.

For specific descriptions of the PPDU, the PHR field, the physical layer configuration, and the like, refer to the foregoing method Embodiment 2. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again. For example, the transceiver unit 10 may be configured to receive the signal transmitted in step S202 shown in FIG. 10, and the processing unit 20 may be configured to perform step S203 and step S204 shown in FIG. 10.

The foregoing describes the communication apparatuses in embodiments of this application. The following describes a possible product form of the communication apparatus. It should be understood that a product in any form that has a function of the communication apparatus in FIG. 12 falls within the protection scope of embodiments of this application. It should be further understood that the following description is merely an example, and does not limit a product form of the communication apparatus in embodiments of this application.

In a possible implementation, in the communication apparatus shown in FIG. 12, the processing unit 20 may be one or more processors, and the transceiver unit 10 may be a transceiver, or the transceiver unit 10 may be a transmitting unit and a receiving unit. The transmitting unit may be a transmitter, and the receiving unit may be a receiver. The transmitting unit and the receiving unit are integrated into one component, for example, a transceiver. In this embodiment of this application, the processor and the transceiver may be coupled or the like, and a manner of connection between the processor and the transceiver is not limited in embodiments of this application. In a process of performing the foregoing method, a process of transmitting information (for example, transmitting a signal) in the foregoing method may be understood as a process of outputting the foregoing information by the processor. When outputting the foregoing information, the processor outputs the foregoing information to the transceiver, so that the transceiver transmits the information. After the foregoing information is outputted by the processor, other processing may further need to be performed on the information before processed information arrives at the transceiver. Similarly, a process of receiving information (for example, receiving a signal) in the foregoing method may be understood as a process of receiving the foregoing input information by the processor. When the processor receives the input information, the transceiver receives the foregoing information, and inputs the information into the processor. Further, after the transceiver receives the foregoing information, other processing may need to be performed on the information before processed information is input into the processor.

FIG. 13 is a diagram of a structure of a communication apparatus 1000 according to an embodiment of this application. The communication apparatus 1000 may be a first communication apparatus, a second communication apparatus, or a chip in the first communication apparatus or the second communication apparatus. FIG. 13 shows only main components of the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive/transmit a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be transmitted in a wireless manner, the processor 1001 performs baseband processing on the to-be-transmitted data, and outputs a baseband signal to a radio frequency circuit. The radio frequency circuit performs radio frequency processing on the baseband signal, and then transmits a radio frequency signal to the outside through the antenna in a form of an electromagnetic wave. When data is transmitted to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to execute a function of the first communication apparatus in Embodiment 1: The processor 1001 may be configured to perform step S101 in FIG. 7, and/or another process of the technology described in this specification; and the transceiver 1002 may be configured to perform step S102 in FIG. 7, and/or another process of the technology described in this specification.

In another design, the communication apparatus 1000 may be configured to execute a function of the second communication apparatus in Embodiment 1: The processor 1001 may be configured to perform step S103 and step S104 in FIG. 7, and/or another process of the technology described in this specification; and the transceiver 1002 may be configured to receive the signal transmitted in step S102 in FIG. 7, and/or another process of the technology described in this specification.

In a design, the communication apparatus 1000 may be configured to execute a function of the first communication apparatus in Embodiment 2: The processor 1001 may be configured to perform step S201 in FIG. 10, and/or another process of the technology described in this specification; and the transceiver 1002 may be configured to perform step S202 in FIG. 10, and/or another process of the technology described in this specification.

In another design, the communication apparatus 1000 may be configured to execute a function of the second communication apparatus in Embodiment 2: The processor 1001 may be configured to perform step S203 and step S204 in FIG. 10, and/or another process of the technology described in this specification; and the transceiver 1002 may be configured to receive the signal transmitted in step S202 in FIG. 10, and/or another process of the technology described in this specification.

In any one of the foregoing designs, the processor 1001 may include a transceiver configured to implement receiving and transmitting functions. For example, the transceiver may be a transceiver circuit, an interface, or an interface circuit. The transceiver circuit, the interface, or the interface circuit configured to implement the receiving and transmitting functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the methods described in the foregoing method embodiments. The computer program may be solidified in the processor 1001. In this case, the processor 1001 may be implemented by hardware.

In an implementation, the communication apparatus 1000 may include a circuit. The circuit may implement the transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited to that in FIG. 13. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, a smart terminal, a cellular phone, a wireless device, a handheld device, a mobile unit, a vehicle-mounted device, a network device, a cloud device, an artificial intelligence device, or the like; or
(6) others.

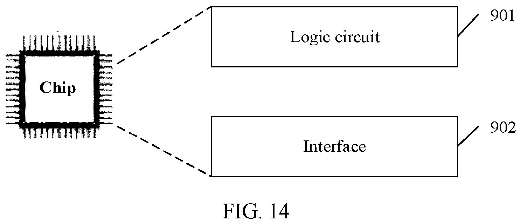

In another possible implementation, in the communication apparatus shown in FIG. 12, the processing unit 20 may be one or more logic circuits, and the transceiver unit 10 may be an input/output interface, or may be referred to as a communication interface, an interface circuit, an interface, or the like. Alternatively, the transceiver unit 10 may be a transmitting unit and a receiving unit. The transmitting unit may be an output interface, and the receiving unit may be an input interface. The transmitting unit and the receiving unit are integrated into one unit, for example, an input/output interface. FIG. 14 is a diagram of another structure of a communication apparatus according to an embodiment of this application. As shown in FIG. 14, the communication apparatus shown in FIG. 14 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 14 shows an example in which the communication apparatus is a chip, and the chip includes the logic circuit 901 and the interface 902. It may be understood that the chip shown in this embodiment of this application may include a narrowband chip, an ultra-wideband chip, and the like. This is not limited in embodiments of this application. Alternatively, the narrowband chip and the ultra-wideband chip may be integrated into one apparatus or chip, or may be independent of each other. Implementations of the narrowband chip and the ultra-wideband chip in a device are not limited in embodiments of this application. The foregoing steps of generating the PPDU and transmitting the signal may be performed by the narrowband chip.

In this embodiment of this application, the logic circuit and the interface may be coupled to each other. A specific manner of connection between the logic circuit and the interface is not limited in embodiments of this application.

For example, when the communication apparatus is configured to perform the method, the function, or the step performed by the first communication apparatus in Embodiment 1, the logic circuit 901 is configured to generate a PPDU, where the PPDU includes a preamble field and an SFD field, and different values of the SFD field correspond to different physical layer configurations, or different values of the preamble field correspond to different physical layer configurations; and the interface 902 is configured to output a signal, where the signal is generated by the PPDU based on a physical layer configuration corresponding to a value of the SFD field or a value of the preamble field.

For example, when the communication apparatus is configured to perform the method, the function, or the step performed by the second communication apparatus in Embodiment 1, the interface 902 is configured to input a signal, where the signal is generated by a PPDU based on a physical layer configuration corresponding to a value of a preamble field or a value of an SFD field in the PPDU; the logic circuit 901 is configured to demodulate the signal to obtain the preamble field and the SFD field that are included in the PPDU, where different values of the SFD field correspond to different physical layer configurations, or different values of the preamble field correspond to different physical layer configurations; and the logic circuit 901 is further configured to: determine the physical layer configuration based on the value of the SFD field or the value of the preamble field, and demodulate the signal based on the determined physical layer configuration to obtain a payload field included in the PPDU.

It may be understood that for specific descriptions of the PPDU, the preamble field, the SFD field, the physical layer configuration, and the like, refer to the foregoing method embodiments. Details are not described herein again.

For example, when the communication apparatus is configured to perform the method, the function, or the step performed by the first communication apparatus in Embodiment 2, the logic circuit 901 is configured to generate a PPDU, where the PPDU includes a PHR field, a length of a chip sequence corresponding to the PHR field is a target length, the PHR field includes indication information, and the indication information indicates a physical layer configuration; and the interface 902 is configured to output a signal, where the signal is generated by the PPDU based on the physical layer configuration indicated by the indication information.

For example, when the communication apparatus is configured to perform the method, the function, or the step performed by the second communication apparatus in Embodiment 2, the interface 902 is configured to input a signal, where the signal is generated by a PPDU based on a physical layer configuration indicated by indication information in a PHR field; the logic circuit 901 is configured to demodulate the received signal to obtain the PHR field included in the PPDU; and the logic circuit 901 is further configured to demodulate the received signal based on the physical layer configuration indicated by the indication information in the PHR field to obtain a payload field included in the PPDU.

It may be understood that for specific descriptions of the PPDU, the PHR field, the physical layer configuration, and the like, refer to the foregoing method embodiments. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 14, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in Embodiment 1 or Embodiment 2.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are performed.

This application further provides a computer program product. The computer program product includes computer code or a computer program. When the computer code or the computer program is run on a computer, operations and/or processing performed by the second communication apparatus in the method provided in this application are performed.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer configuration indication method, comprising:
generating, by a first communication apparatus, a physical layer protocol data unit PPDU, wherein the PPDU comprises a preamble preamble field and a start-of-frame delimiter SFD field, and different values of the SFD field correspond to different physical layer configurations, or different values of the preamble field correspond to different physical layer configurations; and
transmitting, by the first communication apparatus, a signal, wherein the signal is generated by the PPDU based on a physical layer configuration corresponding to a value of the SFD field or a value of the preamble field.

2. A physical layer configuration indication method, comprising:
receiving, by a second communication apparatus, a signal, wherein the signal is generated by a physical layer protocol data unit PPDU based on a physical layer configuration corresponding to a value of a preamble preamble field or a value of a start-of-frame delimiter SFD field in the PPDU;
demodulating, by the second communication apparatus, the signal to obtain the preamble field and the SFD field that are comprised in the PPDU, wherein different values of the SFD field correspond to different physical layer configurations, or different values of the preamble field correspond to different physical layer configurations; and
determining, by the second communication apparatus, the physical layer configuration based on the value of the SFD field or the value of the preamble field, and demodulating the signal based on the determined physical layer configuration to obtain a payload payload field comprised in the PPDU.

3. The method according to claim 1 or 2, wherein the PPDU further comprises a physical layer header PHR field and the payload payload field.

4. The method according to claim 3, wherein the physical layer configuration comprises one or more of the following: a data rate, a length of the preamble field, a length of the SFD field, a length of a chip sequence corresponding to the preamble field and the SFD field, a length of the PHR field, a length of a chip sequence corresponding to the PHR field and the payload field, or a forward error correction code on the PHR field and the payload field.

5. The method according to claim 3, wherein the physical layer configuration comprises a length of a chip sequence corresponding to the PHR field and the payload field; and
the PHR field comprises indication information, wherein the indication information indicates whether the payload field has a forward error correction code.

6. The method according to any one of claims 1 to 5, wherein a value of the SFD field belongs to a first value set, and a value of the preamble field is obtained by repeating a value in the first value set for one or more times; and
the first value set comprises M values, and the M values meet the following conditions:
a sum of Hamming distances between chip sequences corresponding to any two of the M values is greater than or equal to a sum of Hamming distances between chip sequences corresponding to any two of any M values other than the first value set in a second value set, wherein
the second value set comprises N values, N is greater than M, M is greater than 2, and both N and M are positive integers.

7. The method according to any one of claims 1 to 5, wherein a value of the SFD field belongs to a first value set, and a value of the preamble field is obtained by repeating a value in the first value set for one or more times; and
the first value set comprises M values, and the M values meet any one of the following conditions:
a sum of auto-correlation sidelobe amplitudes of chip sequences corresponding to all of the M values is less than or equal to a sum of auto-correlation sidelobe amplitudes of chip sequences corresponding to all of any M values other than the first value set in a second value set; or
a sum of cross-correlation sidelobe amplitudes between chip sequences corresponding to any two of the M values is less than or equal to a sum of cross-correlation sidelobe amplitudes between chip sequences corresponding to any two of any M values other than the first value set in a second value set, wherein
the second value set comprises N values, N is greater than M, M is greater than 2, and both N and M are positive integers.

8. The method according to any one of claims 1 to 7, wherein one of values of the SFD field is 1 1 1 0 0 1 0 1.

9. The method according to any one of claims 1 to 8, wherein the values of the SFD field do not comprise any one of the following values: a value whose first four bits are 0 0 0 0 and last four bits are any value, a value whose last four bits are 0 0 0 0 and first four bits are any value, and a value whose eight bits are 0 0 0 0 0 0 0 0.

10. A communication apparatus, comprising:
a processing unit, configured to generate a physical layer protocol data unit PPDU, wherein the PPDU comprises a preamble preamble field and a start-of-frame delimiter SFD field, and different values of the SFD field correspond to different physical layer configurations, or different values of the preamble field correspond to different physical layer configurations; and
a transceiver unit, configured to transmit a signal, wherein the signal is generated by the PPDU based on a physical layer configuration corresponding to a value of the SFD field or a value of the preamble field.

11. A communication apparatus, comprising:
a transceiver unit, configured to receive a signal, wherein the signal is generated by a physical layer protocol data unit PPDU based on a physical layer configuration corresponding to a value of a preamble preamble field or a value of a start-of-frame delimiter SFD field in the PPDU; and
a processing unit, configured to demodulate the signal to obtain the preamble field and the SFD field that are comprised in the PPDU, wherein different values of the SFD field correspond to different physical layer configurations, or different values of the preamble field correspond to different physical layer configurations, wherein
the processing unit is further configured to: determine the physical layer configuration based on the value of the SFD field or the value of the preamble field, and demodulate the signal based on the determined physical layer configuration to obtain a payload payload field comprised in the PPDU.

12. The apparatus according to claim 10 or 11, wherein the PPDU further comprises a physical layer header PHR field and the payload payload field.

13. The apparatus according to claim 12, wherein the physical layer configuration comprises one or more of the following: a data rate, a length of the preamble field, a length of the SFD field, a length of a chip sequence corresponding to the preamble field and the SFD field, a length of the PHR field, a length of a chip sequence corresponding to the PHR field and the payload field, or a forward error correction code on the PHR field and the payload field.

14. The apparatus according to claim 12, wherein the physical layer configuration comprises a length of a chip sequence corresponding to the PHR field and the payload field; and
the PHR field comprises indication information, wherein the indication information indicates whether the payload field has a forward error correction code.

15. The apparatus according to any one of claims 10 to 14, wherein a value of the SFD field belongs to a first value set, and a value of the preamble field is obtained by repeating a value in the first value set for one or more times; and
the first value set comprises M values, and the M values meet the following conditions:
a sum of Hamming distances between chip sequences corresponding to any two of the M values is greater than or equal to a sum of Hamming distances between chip sequences corresponding to any two of any M values other than the first value set in a second value set, wherein
the second value set comprises N values, N is greater than M, M is greater than 2, and both N and M are positive integers.

16. The apparatus according to any one of claims 10 to 14, wherein a value of the SFD field belongs to a first value set, and a value of the preamble field is obtained by repeating a value in the first value set for one or more times; and
the first value set comprises M values, and the M values meet any one of the following conditions:
a sum of auto-correlation sidelobe amplitudes of chip sequences corresponding to all of the M values is less than or equal to a sum of auto-correlation sidelobe amplitudes of chip sequences corresponding to all of any M values other than the first value set in a second value set; or
a sum of cross-correlation sidelobe amplitudes between chip sequences corresponding to any two of the M values is less than or equal to a sum of cross-correlation sidelobe amplitudes between chip sequences corresponding to any two of any M values other than the first value set in a second value set, wherein
the second value set comprises N values, N is greater than M, M is greater than or equal to 2, and both N and M are positive integers.

17. The apparatus according to any one of claims 10 to 16, wherein one of values of the SFD field is 1 1 1 0 0 1 0 1.

18. The apparatus according to any one of claims 10 to 17, wherein the values of the SFD field do not comprise any one of the following values: a value whose first four bits are 0 0 0 0 and last four bits are any value, a value whose last four bits are 0 0 0 0 and first four bits are any value, and a value whose eight bits are 0 0 0 0 0 0 0 0.

19. A communication apparatus, comprising a processor and a memory, wherein
the memory is configured to store instructions; and
the processor is configured to execute the instructions, to enable the method according to any one of claims 1 to 9 to be performed.

20. A computer-readable storage medium, wherein the computer-readable storage medium is configured to store a computer program, and when the computer program is executed, the method according to any one of claims 1 to 9 is performed.

21. A computer program product, wherein the computer program product comprises a computer program or computer code, and when the computer program or computer code is run on a computer, the method according to any one of claims 1 to 9 is performed.
